(19) Europäisches Patentamt
European Patent Office
Office européen des brevets

(11) Publication number: **0 306 000 B1**

# (12) EUROPEAN PATENT SPECIFICATION

(45) Date of publication of patent specification: **29.09.93**

(51) Int. Cl.[5]: **A21D 13/00**, A23P 1/08

(21) Application number: **88114206.1**

(22) Date of filing: **31.08.88**

## (54) Water-retaining, oil-impervious, coated food product.

(30) Priority: **03.09.87 US 93352**
**29.10.87 US 114697**
**28.12.87 US 138157**

(43) Date of publication of application:
**08.03.89 Bulletin 89/10**

(45) Publication of the grant of the patent:
**29.09.93 Bulletin 93/39**

(84) Designated Contracting States:
**CH DE FR GB LI NL**

(56) References cited:
**GB-A- 1 222 315**
**US-A- 3 686 002**
**US-A- 4 066 796**
**US-A- 4 588 600**
**US-A- 3 248 232**
**US-A- 4 000 324**
**US-A- 4 255 456**

(73) Proprietor: **INTERNATIONAL FLAVORS & FRAGRANCES INC.**
**521 West 57th Street**
**New York New York 10019(US)**

(72) Inventor: **Buckholz, Lawrence**
**34 Robin Court**
**Middletown New Jersey, 07748(US)**
Inventor: **Stypula, Richard J.**
**24 Saddle Ridge Drive**
**Colts Neck New Jersey 07722(US)**

(74) Representative: **Baillie, Iain Cameron et al**
**c/o Ladas & Parry, Altheimer Eck 2**
**D-80331 München (DE)**

EP 0 306 000 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

SUMMARY OF THE INVENTION

Our invention covers oil-impervious, flavor retaining, flavor-enhancing, flavor replenishing and water-retaining food articles, a process for preparing same and apparatus for carrying out the process.

More specifically, a first aspect of our invention covers food articles of manufacture which may be shaped food articles or pre-cut food articles including a breading and barrier layer or coating (at least one) whereby the food article is rendered essentially oil impervious on contact with a cooking oil and whereby retention of a substantial quantity of water and flavor originally contained in the food structure occurs.

More specifically, our invention covers an article of foodstuff comprising a porous inner structure comprising water and a proteinaceous and/or farinaceous food material and at least one barrier coating fixedly coated on the entire surface of said porous inner structure, said coating comprising:

an intimate admixture of a starch polysaccharide; a substituted cellulose selected from lower alkoxy celluloses, hydroxy lower alkoxy celluloses and acyloxy celluloses; and a gum;

said article having the properties of:

(x) Retention of a substantial quantity of the water originally contained in said porous inner food structure on storage and/or on cooking; and

(y) Substantial imperviousness to the absorption or adsorption of cooking oil into said porous inner food structure when said food article is contacted with cooking oil on storage and/or on cooking.

The aforedescribed food article includes but is not limited to food articles shown in Figures 1, 2, 3, 4, 4B, 4C, 4D, 4E, 6 and 7 described in detail, infra.

Thus, the food article of our invention as shown in Figure 1 can be a shaped flavored proteinaceous food article of manufacture having (i) an outer surface and (ii) a porous inner structure which comprises a protein containing material and, optionally, a flavor enhancer and/or flavor composition and/or flavor precursors capable of forming a flavor composition compatible with the original flavor of the protein containing material; and coated on the outer surface of the protein containing material a breading coating having a breading coating surface and comprising flour and, optionally, a flavor or flavor enhancer or flavor precursor capable of forming a flavor compatible with the flavor of the porous inner structure; and coated on the breading coating surface a second coating composition which is a barrier layer and which is substantially impermeable to water which would ordinarily diffuse outward from the food article and cooking oil which would diffuse inward when the food article is immersed in cooking oil at temperatures in the range of up to about 400°F (204°C); with the barrier layer comprising a starch polysaccharide in intimate admixture with a substituted cellulose selected from the group consisting of lower alkoxy celluloses, hydroxy lower alkoxy celluloses and acyloxy celluloses and a gum such as guar gum or xanthan gum.

The proteinaceous material can be of course substituted with a farinaceous material or the porous inner structure can be a mixture of proteinaceous and farinaceous materials such as a mixture of ground chickpeas and ground beef or a mixture of ground beef, ground onion and ground chickpeas. Indeed, the inner porous structure need not be macerated but instead can be a material such as chicken meat or beef as illustrated in Figures 6 and 7. Furthermore, the porous inner structure may be a potato slice or an onion slice or slices of onion and beef adherent to one another, for example.

Alternatively, the food article of our invention can have a first porous inner structure which comprises a protein containing material and/or a farinaceous material having an outer surface and, optionally, containing a flavor composition, and/or flavor enhancer and/or precursors for formation of a flavor composition when the article is cooked; and coated on the outer surface a barrier layer having a second outer surface comprising an intimate admixture of a starch polysaccharide, a substituted cellulose selected from the group consisting of lower alkoxy celluloses, hydroxy lower alkoxy celluloses and acyloxy celluloses and a gum such as xanthan gum or guar gum and, optionally, containing a flavor composition, and/or flavor enhancer and/or precursors for formation of a flavor composition when the article is cooked. Coated on the second outer layer of the barrier layer is a breading layer comprising flour and, optionally, containing a flavor composition, and/or flavor enhancer and/or precursors for formation of a flavor composition when the article is cooked and if desired, other breading ingredients, as set forth, infra.

In the alternative, the food article of manufacture of our invention (for example, that shown in Figure 4) can consist of a porous inner structure comprising a protein containing material and/or a farinaceous material intimately admixed with the "barrier" substance of our invention, to wit: A starch polysaccharide, a substituted cellulose selected from the group consisting of lower alkoxy celluloses, hydroxy lower alkoxy celluloses and acyloxy celluloses and a gum such as xanthan gum or guar gum and, optionally, containing a flavor composition, and/or flavor enhancer and/or precursors for formation of a flavor composition when

the article is cooked. Coated on the outer surface of the porous inner food structure in substantialentirety is the breading layer containing flour and other optional ingredients, e.g., egg yolk and, optionally, containing a flavor composition, and/or flavor enhancer and/or precursors for formation of a flavor composition when the article is cooked.

A variation of this food article is one as shown in Figure 4B wherein the breading layer also contains barrier composition comprising a starch polysaccharide, a substituted cellulose selected from the group consisting of lower alkoxy celluloses, hydroxy lower alkoxy celluloses and acyloxy celluloses and a gum such as guar gum or xanthan gum or combinations thereof and, optionally, containing a flavor composition, and/or flavor enhancer and/or precursors for formation of a flavor composition when the article is cooked.

In the alternative, the porous inner food structure as shown in Figure 4C may be coated with a barrier composition comprising an intimate admixture of a starch polysaccharide, a substituted cellulose selected from the group consisting of lower alkoxy celluloses, hydroxy lower alkoxy celluloses and acyloxy celluloses and a gum such as guar gum or xanthan gum and, optionally, containing a flavor composition, and/or flavor enhancer and/or precursors for formation of a flavor composition when the article is cooked; which, in turn, is coated with a breading layer and, optionally, containing a flavor composition, and/or flavor enhancer and/or precursors for formation of a flavor composition when the article is cooked (which may or may not include barrier composition) which, in turn, is coated on its entire surface with an additional barrier layer also comprising a starch polysaccharide, a substituted cellulose selected from the group consisting of lower alkoxy celluloses, hydroxy lower alkoxy celluloses and acyloxy celluloses and, optionally, containing a flavor composition, and/or flavor enhancer and/or precursors for formation of a flavor composition when the article is cooked. The inner porous structure which may be proteinaceous and/or farinaceous may, if desired, also contain a barrier composition comprising a starch polysaccharide, a substituted cellulose selected from the group consisting of lower alkoxy celluloses, hydroxy lower alkoxy celluloses and acyloxy celluloses and a gum such as guar gum or xanthan gum and, optionally, containing a flavor composition, and/or flavor enhancer and/or precursors for formation of a flavor composition when the article is cooked. The embodiment of our invention wherein the three coatings surround the proteinaceous and/or farinaceous foodstuff containing barrier composition is shown in Figure 4D.

Still another embodiment of our invention involves the coating of a porous inner food structure which may be farinaceous or proteinaceous or both with a mixture of (a) a proteinaceous foodstuff containing a fat and/or an edible polyolpolyester; (b) a starch polysaccharide; (c) a substituted cellulose selected from the group consisting of lower alkoxy celluloses, hydroxy lower alkoxy celluloses and acyloxy celluloses and (d) a gum such as xanthan gum or gum arabic (e) and, optionally, containing a flavor composition, and/or flavor enhancer and/or precursors for formation of a flavor composition when the article is cooked. On cooking, the outer proteinaceous/barrier layer having the above formulation also becomes a "breading" layer and has surprisingly been found to have the properties of:

(x) retention of a substantial quantity of the water originally contained in the porous inner proteinaceous food structure or porous inner farinaceous food structure on storage and/or on cooking;

(y) substantial imperviousness to the absorption or adsorption of cooking oil into the porous inner food structure when the food article is contacted with cooking oil on storage and/or in cooking; and

(z) retention of the original flavor properties of the porous inner food structure on storage and/or on cooking.

The gum used in the barrier coating in this first aspect of our invention may be xanthan gum, carrageenan gum, gum tragacanth, karaya gum, guar gum, locust bean gum or the like. The xanthan gum has the structure:

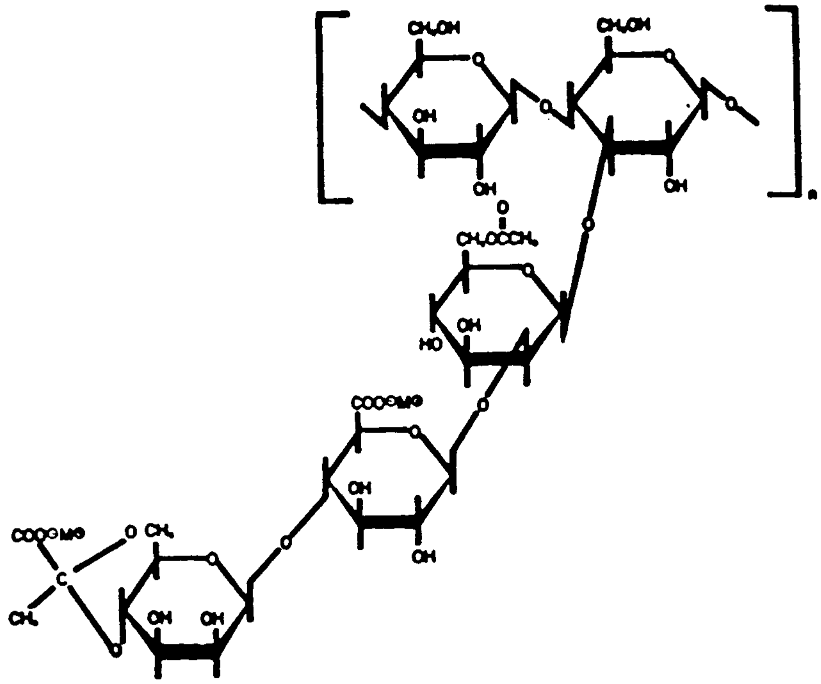

wherein n is indicative of repeating units and M represents sodium, potassium and/or 1/2 calcium (the calcium ion being attracted to two repeating monomeric units as indicated above). Examples of xanthan gum are the KELTROL® brand of xanthan gums, e.g., KELTROL® F produced by the Kelco Organization of Okmulgee, Oklahoma. The place of the aforementioned gum such as xanthan gum or in addition to the aforementioned gums such as xanthan gum, microcrystalline cellulose and Furcellaran may be utilized.

The cellulose derivative in the barrier layer or in the barrier composition may be an alkoxy cellulose such as methylcellulose having the structure:

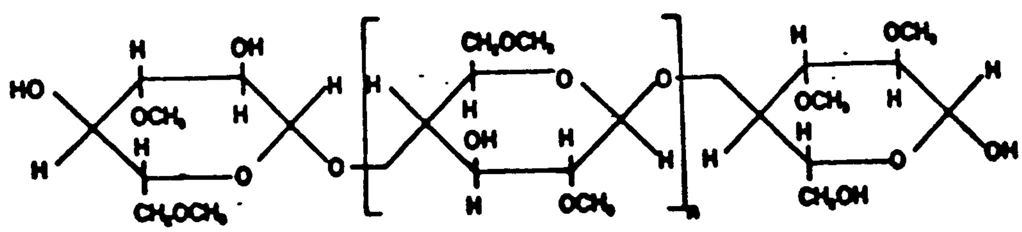

, ,

for example, METHOCEL® A produced by the Dow Chemical Company of Midland, Michigan) wherein n represents a repeating monomeric unit; hydroxypropylcellulose having the structure:

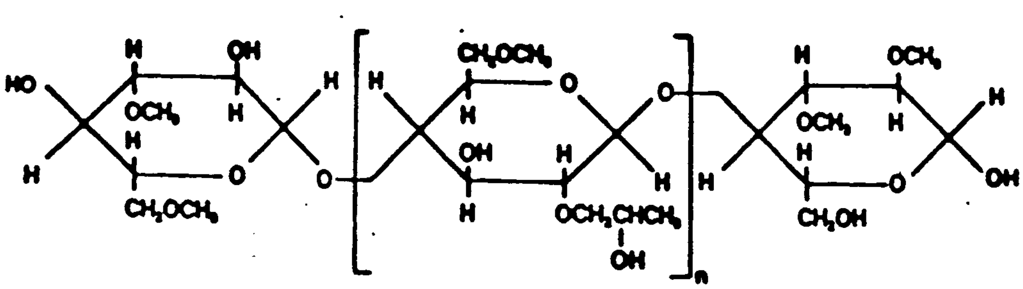

wherein n represents a repeating monomeric unit, for example, METHOCEL® E, METHOCEL® F, METHOCEL® J or METHOCEL® K produced by the Dow Chemical Company of Midland, Michigan or KLUCEL® produced by the Hercules Corporation of Wilmington, Delaware; or hydroxybutylmethylcellulose having the structure:

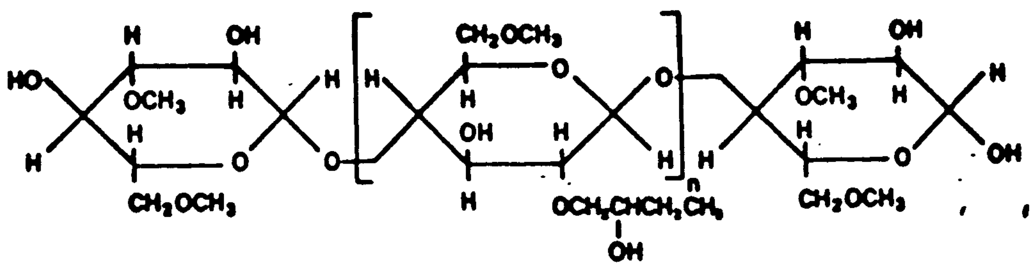

for example, METHOCEL® HB produced by the Dow Chemical Company of Midland, Michigan (wherein n represents a repeating monomeric unit). The number "n" in the foregoing cellulose derivatives' structures is a function of the particular viscosity (and thus, molecular weight) of the polymer used. The range of viscosity in centipoises may vary from about 10 up to about 100,000 and even higher. Other cellulose derivatives that may be used are acyloxy celluloses such as carboxymethylcellulose. The substances "hydroxypropylmethylcellulose" and "hydroxybutylmethylcellulose" are herein also termed "hydroxy lower alkyl celluloses".

The starch derivatives that can be used in the barrier layer may be modified or non-modified starches. More specifically, starch products can be used which contain a large amount, e.g., 50% more of so-called amylose having a linear configuration, such as high-amylose corn starch and fractionated amylose. A starch containing higher percentages of amylose is useable in the barrier layer of our invention, unlike the starches used in U.S. Patent 4,076,846, for example. However, the starch materials found to be useable in said patent 4,076,846 are also useable in our invention. These starch materials generally include various common type starches obtained from grain, potatos, edible roots, etc. such as corn starch, wheat starch, potato starch and tapioca starch which generally contain 50% by weight or less of amylose. Special type starches are also useable in the practice of our invention which contain 10% or less of amylose such as waxy corn strach and glutinous rice starch used further in combination with high amylose starches. Furthermore, so-called unmodified treated starches such as alpha-starch and dextrin may also be used. High amylose starches containing more than 50% by weight of amylose are generally special corn strach materials derived from an improved corn variety. The high amylose starch can be replaced by a so-called fractionated amylose containing 90% by weight or more of amylose which is obtained from common-type starches such as potato starch by fractionation or replaced by a mixture of fractionated amylose and other common-type starches. In addition, edible modified starch materials can be used in our invention including carboxymethyl starch, hydroxyethyl starch, hydroxypropyl starch, methyl starch, ethyl starch, methylhydroxyethyl starch, ethylhydroxypropyl starch and starch phosphate.

Other starch products include instant thickened starch produced from pre-gelled starch/maltodextrin products as disclosed in the July 1987 issue of "Food Processing" on page 68, for example, INSTA STARCH® manufactured by Zumbro Incorporated, Route 1, Box 83, Hayfield, Minnesota 55940.

As stated, supra, one of the embodiments of our invention may include a polyolpolyester. Such materials are polyol fatty acid polyesters such as sucrose polyesters as described in U.S. Letters Patent 3,600,186 issued on August 17, 1971; U.S. Letters Patent 3,954,976 issued on May 4, 1976; U.S. Letters Patent 4,241,054 issued on December 23, 1980; U.S. Letters Patent 4,264,583 issued on April 28, 1981; and European Application 132,941 published on February 13, 1985 the specifications for which are incorporated by reference herein. Thus, European Application 132,941 describes the synthesis of higher polyol fatty acid polyesters using carbonate catalysts and includes the disclosure of sucrose fatty acid polyesters.

The gum used in the barrier layer or barrier composition of our invention can also be prepared according to state of the art methods such as that described in European Patent Application 207,032 published on December 30, 1986 and abstracted at Chemical Abstracts, Volume 107, 1987, at No. 38351f. The disclosure of published European Application 207,032 is incorporated herein by reference. The teachings of this application giving rise to a guar gum flour can easily be incorporated into our invention and the guar gum flour thus produced according to the teachings of application 207,032 can be used as one of

the "gums" of our invention in the barrier layer of our invention. European Application 207,032 relates to a process for preparing a product comprising guar gum present in the form of particles and possessing a sustained swelling in an aqueous suspension whereby guar gum flour is produced with a solution consisting of water:solvent in the relationship of 60:40 up to 0:100 and comprising a compound of the group consisting of film forming fatty acids, film forming polymers and ethycellulose whereby the solvent is an organic solvent having the ability in dissolving the organic film forming compounds while creating particle or glomerates having a size of less than 3 mm but substantially above 0.5 mm. The guar gum flour is wetted with 28.5 kg water/isopropenyl azeotropic mixture (12:88) in which 0.18 kilograms ethylcelluloses dissolved. The guar flour is moisturized in a wet mixture, then fluidized bed-dried to less than 8% water and the fraction of desired particle size (0.5-3.0 mm) is sieved off.

The barrier layer or barrier composition of our invention can also contain alginates such as those alginates containing alpha-1,4 linked L - guluronic acid units having the structure:

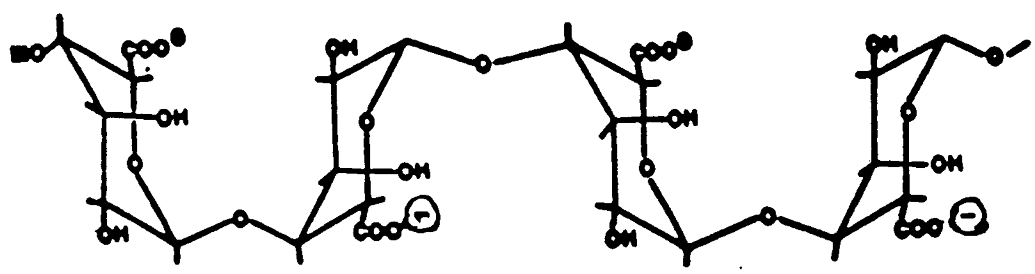

beta-1,4 linked D - mannuronic acid units having the structure:

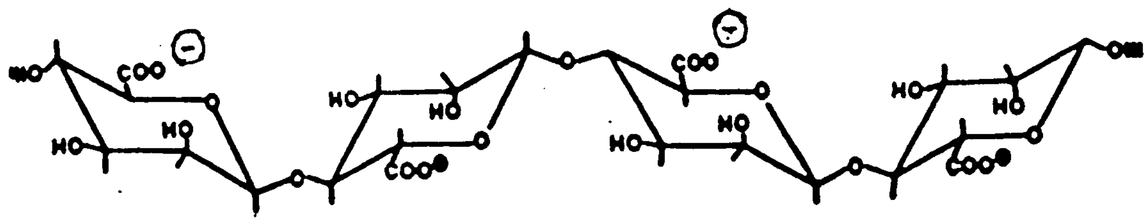

and alpha-1,4 linked D - galacturonic acid units having the structure:

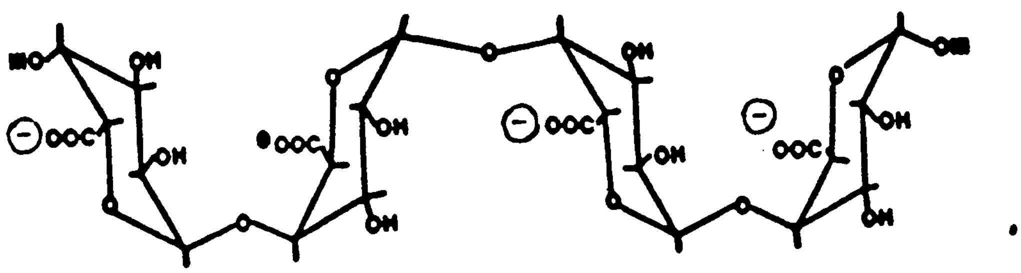

Such alginates may also be present in the form of calcium-algin complexes as described by Messina and Pate in "Food Engineering", April 1966, in the article entitled "Ingredient Cuts Heat Process Time/La Choy Foods' Algin Thickening System Keeps Product Consistency Low For Efficient Retorting, Permits Viscosity Increase After Processing". Sodium alginate, per se, or potassium alginate can also be used in the barrier coating and/or barrier composition of our invention.

The barrier layer and/or barrier compositions of our invention can also contain proteinaceous substances such as milk proteins including alpha, beta and gamma caseins, and sodium and potassium caseinate.

In addition to the foregoing ingredients, the barrier layer or barrier composition of our invention may also contain salts and other flavoring materials to improve the overall flavor of the food article of manufacture of our invention.

Thus, salts such as sodium chloride and salt compositions such as those set forth in U.S. Letters Patent 4,514,431 issued on April 30, 1985 comprising:

(a) from about 0.25 up to about 0.80 mole percent of lactic acid and/or a lactate salt;
(b) from 0 up to about 0.09 percent on a dry basis of glycolic acid or a glycolate salt;
(c) from 0 up to about 10.0 mole percent on a dry basis of a magnesium salt;
(d) from about 6 mole percent up to about 50 mole percent on a dry basis of a phosphate and/or a monoacid phosphate and/or a diacid phosphate and/or phosphoric acid taken alone or taken further together with at least one tripolyphosphate; pyrophosphate or polymetaphosphate;
(e) from 0 mole percent up to about 40 mole percent on a dry basis of a sodium salt;
(f) from about 8 mole percent up to about 50 mole percent on a dry basis of a potassium salt;
(g) from about 0.3 mole percent up to about 16 mole percent on a dry basis of a chloride;
(h) from 0 mole percent up to about 30 mole percent on a dry basis of a carbonate and/or a bicarbonate and/or carbonic acid;
(j) from 0 mole percent up to about 2.0 mole percent on a dry basis of a monobasic glutamate and/or a dibasic glutamate and/or glutamic acid; and
(k) from 0 up to about 0.6 mole percent on a dry basis of a calcium salt

may be utilized. The disclosure of U.S. Letters Patent 4,514,431 is incorporated herein by reference.

By the same token, salts as set forth in U.S. Letters Patent 4,258,072 issued on March 24, 1981; U.S. Letters Patent 4,216,244 issued on August 5, 1980; U.S. Letters Patent 4,216,244; U.S. Letters Patent 4,066,793 issued on January 3, 1978 all include salt compositions useful in the practice of our invention. Furthermore, Yamada, German Offenlegungsschrift No. 3 144 166; French Patent No. 2493681 and Japan Published Application J57/079860 disclose seasoning compositions which are useful in the practice of our invention and which may be either:

(i)
 15-21 weight percent magnesium chloride;
 3-10 weight percent magnesium sulfate;
 2-4 weight percent potassium chloride;
 0.2-0.5 weight percent magnesium bromide; and
 2-7 weight percent sodium chloride; or

(ii)
 15-21 weight percent magnesium chloride;
 6-9 weight percent magnesium sulfate;
 2-4 weight percent potassium chloride;
 0.2-0.4 weight percent magnesium bromide;
 2-6 weight percent sodium chloride; and
 0.1-21 weight percent calcium salt.

Furthermore, other salts as disclosed in Japan Patent J81/022311 which discloses a synergistic "seasoning" composition containing monosodium glutamate, a nucleic acid type tasting compound, sodium chloride, succinic acid salt and at least one other sodium salt. The "seasoning" is composed of:

(i) monosodium glutamate;
(ii) nucleic acid-type tasting substance such as disodium inosine-5′-monophosphate and/or disodium guanosine-5′-monophosphate;
(iii) sodium chloride;
(iv) succinic acid and/or sodium succinate; and
(v) at least one salt selected from the group consisting of monosodium furmarate, trisodium citrate, monosodium lactate, calcium lactate, disodium malate, disodium tartarate, sodium ascorbate and monosodium aspartate

may also be used in the practice of our invention.

Other salts which may be used are disclosed in Japan Published Application J82/022311; U.S. Letters Patent 3,821,368; Japan Patent J82/00777 issued on January 7, 1982 and U.S. Letters Patent 4,332,823 and U.S. Letters Patent 4,340,614 issued on July 20, 1982 the disclosures of which are all incorporated by reference herein.

Flavor materials which are useful in the practice of our invention which may be included in the barrier layer or barrier composition and/or any other parts of the article of our invention are those, for example, which are disclosed in U.S. Letters Patent 4,311,720 issued on January 19, 1982 (incorporated by reference

herein) as well as the poultry flavor compositions disclosed in U.S. Letters Patent 3,394,017 issued on July 23, 1968 (incorporated by reference herein) and the meat flavor compositions disclosed in U.S. Letters Patent 3,394,015 issued on July 23, 1968 the specification of which is incorporated by reference herein. Thus, particularly useful in the practice of our invention is a product produced according to a process comprising or reacting a mixture consisting essentially of protein hydrolysate and a sulfur containing compound selected from the group consisting of a sulfur containing amino acid, a lower alkyl mercaptan, a lower alkyl sulfide, a lower alkyl disulfide, hydrogen sulfide and an inorganic sulfur compound such as sodium sulfide or sodium sulfhydrate. Organic sulfur compounds useful in the production of such flavor are cysteine, cystine or methionine, for example.

Other flavor substances useful in the practice of our invention are set forth in the following patents which are incorporated by reference herein:

U.S. Letters Patent 4,076,852 issued on February 28, 1978.
U.S. Letters Patent 4,081,565 issued on March 28, 1978.
U.S. Letters Patent 4,594,254 issued on June 10, 1986.
U.S. Letters Patent 4,663,476 issued on May 5, 1987.
U.S. Letters Patent 4,631,194 issued on December 23, 1986.
U.S. Letters Patent 4,515,967 issued on May 7, 1985.
U.S. Letters Patent 3,684,809 issued on August 15, 1972.
U.S. Letters Patent 3,686,177 issued on August 22, 1972.

Flavor precursor compositions useful in the practice of our invention are compositions such as those exemplified (prior to producing the actual flavor) in U.S. Letters Patent 4,081,565 issued on March 28, 1978 and U.S. Letters Patent 4,076,852 issued on February 28, 1978 the specifications for which are incorporated by reference herein. Thus, the flavor precursors may be:

(i) a meat enzymatic digest;
(ii) a sulfur compound such as cysteine or torene;
(iii) thiamine and/or a thiazol alkanol;
(iv) other free amino acids and/or polypeptides; and
(v) a monosaccharide and/or a disaccharide such as sucrose and/or a polysaccharide.

In addition, other flavor precursor compositions can be used, for example, flavor precursor compositions set forth in U.S. Letters Patent 3,394,017 (thiamine and a mixture of amino acids); U.S. Letters Patent 3,519,437 (thiamine and 2-aminoethane sulfonic acid); U.S. Letters Patent 3,532,514 (cysteine sugar and a fatty acid material); U.S. Letters Patent 3,645,753 (enzymatic digest of meat extract, hydrolyzed vegetable protein and yeast autolysate; U.S. Letters Patent 3,394,015 (sulfur-containing compound such as cysteine and a hydrolyzed vegetable protein) (sugar free); U.S. Letters Patent 3,394,016 (thiamine and an aliphatic carboxylic acid); German Offenlegungsschrift 1932800 (hydrogen sulfide and a 4-hydroxy-2,3-dihydrofuran-3-one; U.S. Letters Patent 2,918,376 (a fish protein hydrolyzate and cysteine); U.S. Letters Patent 2,887,387 (a fish protein hydrolyzate and a saccharide). All of the aforementioned patents and Offenlegungsschrift are herewith incorporated by reference herein.

Flavor enhancers which may be used in conjunction with the aforementioned flavor materials and/or flavor precursor materials are, for example, tetraalkyl pyrazines, for example, 2,3,5,6-tetramethyl pyrazine.

In addition, other carbohydrates may be used in the composition for the barrier layer(s) and/or barrier compositions of our invention such as dextrose monohydrate (for example, CERELOSE® 2001.

With respect to the barrier layer and/or barrier composition of our invention the weight ratios of starch:gum:cellulose derivative may vary from 8 (starch:1(gum):10 (cellulose derivative) up to 200 (starch):1-(gum):20 (cellulose derivative).

The concentration of salt or salt composition in the barrier film and/or barrier composition of our invention may vary from 0.1% by weight up to 10% by weight of the composition.

The concentration of cellulose derivative in the barrier layer and/or barrier composition of our invention may vary from 5% by weight of the composition up to 70% of the composition.

The concentration of gum in the barrier layer and/or barrier composition of our invention may vary from 0.1% up to 4% by weight of the composition.

The concentration of starch in the barrier coating and/or barrier composition of our invention may vary from 20% up to 85% by weight of the composition. When desired, the concentration of carbohydrates such as dextrose monohydrate in the barrier coating and/or barrier composition of our invention may vary from 0 up to 1% by weight of the composition.

When it is desired to be used the alginate, e.g., sodium alginate concentration in the barrier layer and/or barrier composition of our invention may vary from 0 up to 15% by weight of the composition.

When desired, the casein derivative, e.g., sodium caseinate concentration in the barrier layer and/or barrier composition of our invention may vary from 0 up to 25% by weight of the composition.

The breading/batter layer used in the practice of our invention (as illustrated in the embodiments of Figures 1, 2, 3, 4, 4B, 4C, 4D, 6 and 7 all contain flour and may, if desired, contain other standard breading/batter ingredients, to wit:

salts;
carbohydrates; and
eggs.

The flour ingredients may be, for example, wheat flour, bleached or not bleached; corn flour and the like.

The salt ingredients may be sodium chloride, monosodium glutamate, or any salt such as those set forth in U.S. Letters Patent 4,514,431 issued on April 30, 1985 comprising:

(a) from about 0.25 up to about 0.80 mole percent of lactic acid and/or a lactate salt;
(b) from 0 up to about 0.09 percent on a dry basis of glycolic acid or a glycolate salt;
(c) from 0 up to about 10.0 mole percent on a dry basis of a magnesium salt;
(d) from about 6 mole percent up to about 50 mole percent on a dry basis of a phosphate and/or a mono-acid phosphate and/or a diacid phosphate and/or phosphoric acid taken alone or taken further together with at least one tripolyphosphate; pyrophosphate or polymetaphosphate;
(e) from 0 mole percent up to about 40 mole percent on a dry basis of a sodium salt;
(f) from about 8 mole percent up to about 50 mole percent on a dry basis of a potassium salt;
(g) from about 0.3 mole percent up to about 16 mole percent on a dry basis of a chloride;
(h) from 0 mole percent up to about 30 mole percent on a dry basis of a carbonate and/or a bicarbonate and/or carbonic acid;
(j) from 0 mole percent up to about 2.0 mole percent on a dry basis of a monobasic glutamate and/or a dibasic glutamate and/or glutamic acid; and
(k) from 0 up to about 0.6 mole percent on a dry basis of a calcium salt

or may be any of the salts as disclosed in the following U.S. Letters Patent:

4,258,072
4,216,244
4,066,793
3,821,368
4,332,823
4,340,614

all incorporated by reference herein.

Examples of batters useful in the practice of our invention are those of the product: "4 Turkey Patties" marketed by the Empire Kosher Poultry Inc. of Mifflintown, Pa. 17059 or "OUR BEST® "4 Breaded Veal & Beef Patties" marketed by GSN Enterprises of Andover, Massachusetts 01810.

The breading/batter formulation may also contain such materials as cornmeal, sodium acid pyrophosphate, sodium bicarbonate, sugar, dextrose, sodium alginate and other alginates, soy flour, spices, oleoresin paprika and nonfat dry milk; as well as other ingredients well known to those having ordinary skill in the art and disclosed in the book "Batter & Breading" cited, supra, the disclosure of which is incorporated by reference herein.

For the purposes of our invention, when using the above-exemplified breading/batters, the weight ratio of flour:whole eggs may vary from about 5:95 down to about 95:5 with a preferred weight ratio of flour:whole eggs being in the range of from about 40:60 down to about 60:40.

On a water-free basis it is preferred that the weight ratio of batter/breading:barrier layer and/or barrier composition be in the range of from about 20:80 down to about 80:20 with a preferred ratio of batter/breading:barrier layer/barrier composition being in the range of from about 1.80:1 down to about 1:1.

When an article such as that illustrated in Figure 4E is prepared, the ratio of proteinaceous substance:barrier composition (indicated by reference numeral 320 in Figure 4E) may vary from about 10:1 down to about 1:1 with a preferred ratio of proteinaceous substance (containing fat):barrier composition being between 10:1 and 8:1 (a weight ratio). It is also preferred that the ratio of fat or polyol polyester:barrier composition be in the range of from about 5:1 down to about 1:1.

With reference to the proteinaceous and/or farinaceous inner food structure of our invention, such inner food structure may be, for example:

(i) macerated turkey meat;
(ii) macerated chicken meat;
(iii) macerated beef;

(iv) macerated veal;
(v) macerated pork;
(vi) macerated lamb;
(vii) macerated ham;
(viii) macerated fish meat;
(ix) macerated soy protein;
(x) turkey meat or turkey parts;
(xi) chicken meat or chicken parts;
(xii) beef chunks;
(xiii) veal chunks;
(xiv) pork chunks;
(xv) lamb chunks;
(xvi) ham chunks;
(xvii) fish chunks;
(xviii) bean curd;
(xix) onion rings;
(xx) potato wedges;
(xxi) sliced potatos;
(xxii) shrimp;
(xxiii) clams (with split-half shell or without shell);
(xxiv) sliced squash; and
(xxv) mixtures of any of (i)-(ix) with ground vegetables such as ground garlic or ground onion and/or ground scallion.

Examples of other proteinaceous and/or farinaceous porous inner food structures are those set forth in U.S. Letters Patent 4,681,758 issued on July 21, 1987 assigned to Phillips Petroleum Company of Bartlesville, Oklahoma, the specification for which is incorporated herein by reference. U.S. Letters Patent 4,681,758 discloses a shaped flavored beefy aroma article of manufacture having a textured outer surface and aporous inner structure which comprises in the range of 5-50 weight percent of a protein containing material (e.g., beef) and in the range of 50-95% by weight of a polymeric material. The specification of 4,681,758 is incorporated herein by reference. Also as an example for use in conjunction with the article of our invention are the extruded foodstuffs of U.S. Letters Patent 4,670,270 issued on June 2, 1987 (Germino, et al) disclosing an extruded foodstuff having a moisture resistant composition consisting essentially of alkaline metal salts of stearic acid where the extruded food product has a total amount of stearate which is between 2 and 8% by weight. It is disclosed in U.S. Letters Patent 4,670,270 that on heating the stearate forms a substantial continuous film matrix within the food which retards the absorption of moisture and retains the original texture of the coated food in the presence of moisture. The specification of U.S. Letters Patent 4,670,270 is incorporated by reference herein.

A second aspect of our invention is directed to:

(a) a pizza dough lamina having a first pizza dough lamina surface and a second pizza dough lamina surface;
(b) a substantially continuous tomato sauce composition lamina having a substantially horizontal planar upper tomato sauce composition lamina surface and a substantially horizontal planar lower tomato sauce composition lamina surface; and
(c) a cheese composition lamina having a substantially planar cheese composition lamina upper surface and a substantially planar cheese composition lamina lower surface; and, optionally,;
(d) a condiment coating having a lower condiment surface and an upper condiment surface;

and coated on one or more of the surfaces of the pizza dough lamina, the tomato sauce composition lamina surfaces, the cheese composition lamina surfaces and/or the condiment composition surfaces, a coating which is either:

I.
(i) from 5 up to 20% whey protein concentrate;
(ii) from 30 up to 60% water;
(iii) from 0.4 up to 3% of a cellulose derivative selected from the group consisting of lower alkoxy celluloses, hydroxy lower alkoxy celluloses and acyloxy celluloses;
(iv) from 20 up to 50% unsaturated edible oil, e.g., coconut oil, corn oil, olive oil,
(v) from 0.2% up to 1% of an emulsifier, e.g., a TWEEN® or a SPAN®; and
(vi) optionally, from 1 up to 8% of a starch polysaccharide

or

II.

(i) from 40 up to 75% of a starch polysaccharide;

(ii) from 5 up to 20% of a cellulose derivative selected from the group consisting of lower alkoxy celluloses, hydroxy lower alkoxy celluloses and acyloxy celluloses;

(iii) from 0.05 up to 0.5% by weight of a gum;

(iv) from 8% up to 20% by weight of a salt composition; and

(v) from 9 up to 20% by weight of a sugar, e.g., sucrose.

More specifically this second aspect of our invention contemplates a method for producing an edible pizza food article comprising the steps of:

(a) applying a continuous layer of a first coating composition as defined, supra to a thermally conductive or non-conductive substantially horizontally planar solid surface (e.g., a metal surface or a refractory surface) thereby forming a first coating lamina having a substantially horizontally planar coating composition lamina surface;

(b) applying a continuous layer of pizza dough to said first coating lamina thereby forming a first pizza dough lamina having a substantially horizontally planar pizza dough lamina surface;

(c) applying at least one substantially continuous layer of a tomato sauce composition to substantially the entirety of the pizza dough lamina surface thereby forming a tomato sauce composition lamina having a substantially horizontally planar upper tomato sauce composition lamina surface;

(d) applying at least one cheese composition (e.g., mozzarella, parmesan and/or provolone taken alone or in combination) to substantially the entirety of said upper tomato sauce composition lamina surface thereby forming a cheese composition lamina having a substantially horizontally planar cheese composition lamina surface; and

(e) baking the product to completion either from under the article to be baked when the coating is on a metal surface or from above by means of microwave cooking and the like when the article is resting on a refractory surface.

In the alternative, in addition to the coating being on the outer surface of the pizza dough lamina, additional coatings can be applied to the inner surface of the pizza dough lamina; and/or to the upper surface of the tomato sauce composition lamina; and/or to the upper surface of the cheese composition lamina.

Furthermore, as is well known in the prior art, the pizza article can have applied to the upper surface of the cheese composition lamina, a condiment coating, e.g., olives, mushrooms, prosciutto, sausages, broccoli and the like. Optionally, applied to the condiment "layer" an additional coating composition described, supra, may be applied.

In the alternative, coatings can be applied to the surfaces as stated, supra, but without application to the bottom layer of the pizza dough lamina; and this is the case that is preferred when a "thin" rather than a "thick" dough layer is used as the base layer of the pizza article.

Preferably, the pizza dough is in the form of a "yeast-risen" dough; that is, flour, water and yeast are initially admixed and the resulting dough is permitted to rise and is then stretched prior to application to a pan or refractory material that is either coated or not coated with the above composition. As stated, supra, the dough can also be admixed with egg albumen as specified in Poultry Science, 1983, 62(4), at pages 621-30.

In the alternative, the pizza configuration can be of the type disclosed in U.S. Letters Patent 4,283,431 (the specification for which is incorporated by reference herein). In the configuration of U.S. Letters Patent 4,283,431 a double layered pizza type product is prepared by:

(i) applying at least one layer of ingredients including tomato sauce to a pre-baked pastry layer;

(ii) distributing a blend of mozzarella and provolone cheese over the layer;

(iii) stretching a second layer of rolled out unbaked pastry over the entire cheese layer;

(iv) partially baking the two pastry layers with the ingredient layer sandwiched therebetween;

(v) allowing the product to cool;

(vi) applying to the second pastry layer a further layer of ingredients; and

(vii) baking the product to completion.

In practicing our invention with respect to the disclosure of U.S. Letters Patent 4,283,431 one of the coatings as set forth, supra, a "first" coating is first applied to a solid surface. Then the pastry layer is applied to the coating on the solid surface; then at least one layer of ingredients including tomato sauce is applied to the first pastry layer; optionally, a coating can be applied to the tomato sauce or to the upper surface of the pre-baked pastry layer. A blend of cheese is then placed over the tomato layer; optionally, one of the coatings defined, supra, may be applied to the cheese layer. Then a second layer of rolled out, unbaked pastry is applied to the entire cheese layer; optionally, one of the of rolled out, unbaked pastry.

The two pastry layers are then partially baked with the ingredient layers and coatings (optionally) sandwiched there between. The product is allowed to cool and to the second pastry layer a further layer of ingredients is applied. Optionally, to the further layer of ingredients, e.g., anchovies, olives, mushrooms, sausage, provolone and the like additional coating as defined, supra, is applied. The product is then baked to completion. With respect to the coatings, the gum used in the coating may be xanthan gum, carrageenan gum, gum tragacanth, karaya gum, guar gum, locust bean gum or the like. Examples of xanthan gum are the KELTROL® brand of xanthan gums, e.g., KELTROL® F produced by the Kelco Organization of Okmulgee, Oklahoma. The place of the aforementioned gum such as xanthan gum or in addition to the aforementioned gums such as xanthan gum, microcrystalline cellulose and Furcellaran may be utilized.

The cellulose derivative in the coatings may be an alkoxy cellulose such as methylcellulose having the structure:

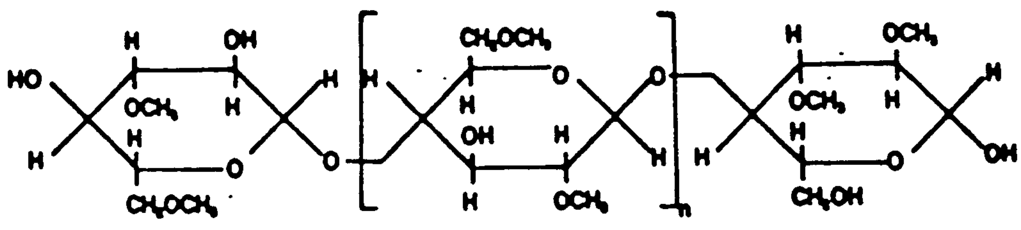

,

for example, METHOCEL® A produced by the Dow Chemical Company of Midland, Michigan) wherein n represents a repeating monomeric unit; hydroxypropylcellulose having the structure:

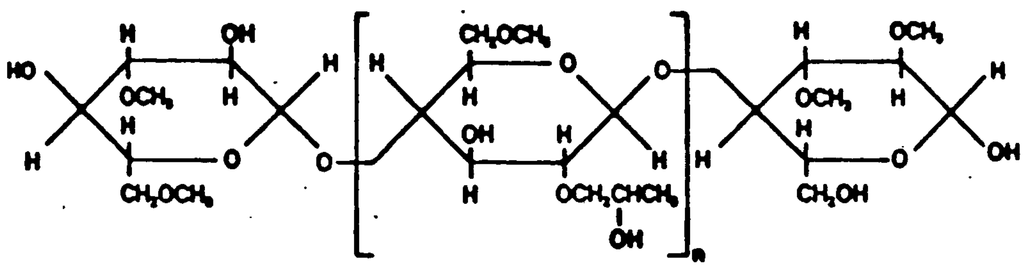

wherein n represents a repeating monomeric unit, for example, METHOCEL® E, METHOCEL® F, METHOCEL® J or METHOCEL® K produced by the Dow Chemical Company of Midland, Michigan or KLUCEL® produced by the Hercules Corporation of Wilmington, Delaware; or hydroxybutylmethylcellulose having the structure:

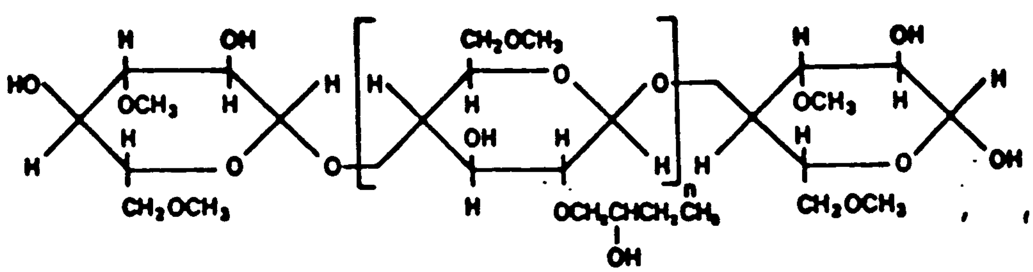

for example, METHOCEL® HB produced by the Dow Chemical Company of Midland, Michigan (wherein n represents a repeating monomeric unit). The number "n" in the foregoing cellulose derivatives' structures is a function of the particular viscosity (and thus, molecular weight) of the polymer used. The range of viscosity in centipoises may vary from about 10 up to about 100,000 and even higher. Other cellulose

derivatives that may be used are acyloxy celluloses such as carboxymethylcellulose. The substances "hydroxypropylmethylcellulose" and "hydroxybutylmethylcellulose" are herein also termed "hydroxy lower alkyl celluloses".

The starch derivative that can be used in the coatings of our invention may be modified or non-modified starches. More specifically, starch products can be used which contain a large amount, e.g., 50% or more of so-called amylose having a linear configuration, such as high-amylose corn starch and fractionated amylose. A starch containing higher percentage of amylose is useable in the barrier layer of my invention, unlike the starches used in U.S. Patent 4,076,846, for example. However, the starch materials found to be useable in said patent 4,076,846 are also useable in my invention. These starch materials generally include various common type starches obtained from grain, potatos, edible roots, etc. such as corn starch, wheat starch, potato starch, tapioca starch and the like which generally contain 50% by weight or less of amylose. Special type starches are also useable in the practice of our invention which contain 10% or less of amylose such as waxy corn strach and glutinous rice starch used further in combination with high amylose starches. Furthermore, so-called unmodified treated starches such as alpha-starch and dextrin may also be used. High amylose starches containing more than 50% by weight of amylose are generally special corn starch materials derived from an improved corn variety. The high amylose starch can be replaced by a so-called fractionated amylose containing 90% by weight or more of amylose which is obtained from common-type starches such as potato starch by fractionation or replaced by a mixture of fractionated amylose and other common-type starches. In addition, edible modified starch materials can be used in our invention including carboxymethyl starch, hydroxyethyl starch, hydroxypropyl starch, methyl starch, ethyl starch, methylhydroxyethyl starch, ethylhydroxypropyl starch and starch phosphate.

Other starch products include instant thickened starch produced from pre-gelled starch/maltodextrin products as disclosed in the July 1987 issue of "Food Processing" on page 68, for example, INSTA STARCH® manufactured by Zumbro Incorporated, Route 1, Box 83, Hayfield, Minnesota 55940.

In addition, the coating of my invention may also include a polyolpolyester. Such materials are polyol fatty acid polyesters such as sucrose polyesters as described in U.S. Letters Patent 3,600,186 issued on August 17, 1971; U.S. Letters Patent 3,954,976 issued on May 4, 1976; U.S. Letters Patent 4,241,054 issued on December 23, 1980; U.S. Letters Patent 4,264,583 issued on April 28, 1981; and European Application 132,941 published on February 13, 1985 thespecifications for which are incorporated by reference herein. Thus, European Application 132,941 describes the synthesis of higher polyol fatty acid polyesters using carbonate catalysts and includes the disclosure of sucrose fatty acid polyesters.

The gum used in the coating of our invention can also be prepared according to state of the art method such as that described in European Patent Application 207,032 published on December 30, 1986 and abstracted at Chemical Abstracts, Volume 107, 1987, at No. 38351f. The disclosure of published European Application 207,032 is incorporated herein by reference. The teachings of this application giving rise to a guar gum flour can easily be incorporated into my invention and the guar gum flour thus produced according to the teachings of application 207,032 can be used as one of the "gums" of my invention in the barrier layer of my invention. European Application 207,032 relates to a process for preparing a product comprising guar gum present in the form of particles and possessing a sustained swelling in an aqueous suspension whereby guar gum flour is produced with a solution consisting of water:solvent in the relationship of 60:40 up to 0:100 and comprising a compound of the group consisting of film forming fatty acids, film forming polymers and ethycellulose whereby the solvent is an organic solvent having the ability in dissolving the organic film forming compounds while creating particles or glomerates having a size of less than 3 mm but substantially above 0.5 mm. The guar gum flour is wetted with 28.5 kg water/isopropenyl azeotropic mixture (12:88) in which 0.18 kilograms ethylcelluloses dissolved. The guar flour is moisturized in a wet mixture, then fluidized bed-dried to less than 8% water and the fraction of desired particle size (0.5-3.0 mm) is sieved off.

The coating compositions of our invention can also contain alginates such as those alginates containing alpha-1,4 linked L-guluronic acid units having the structure:

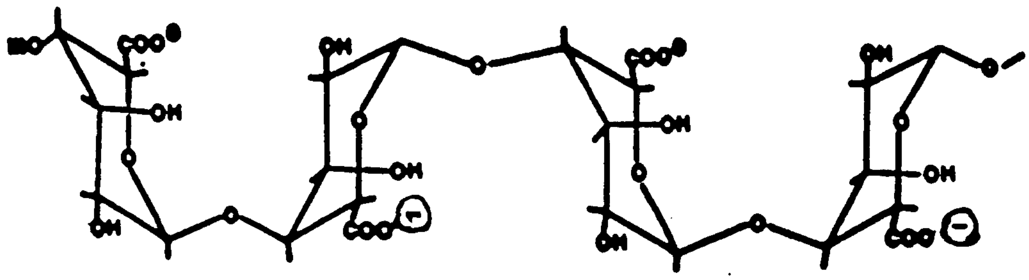

beta-1,4 linked D - mannuronic acid units having the structure:

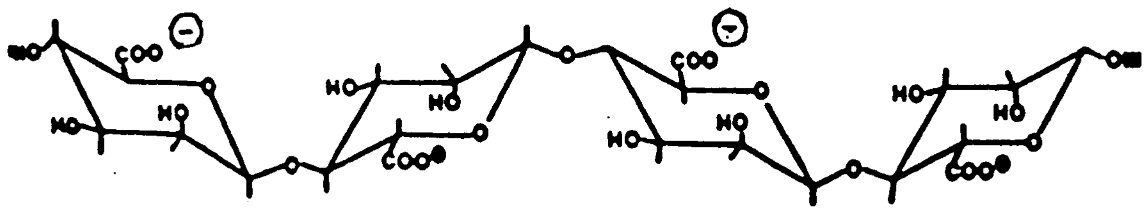

and alpha-1,4 linked D - galacturonic acid units having the structure:

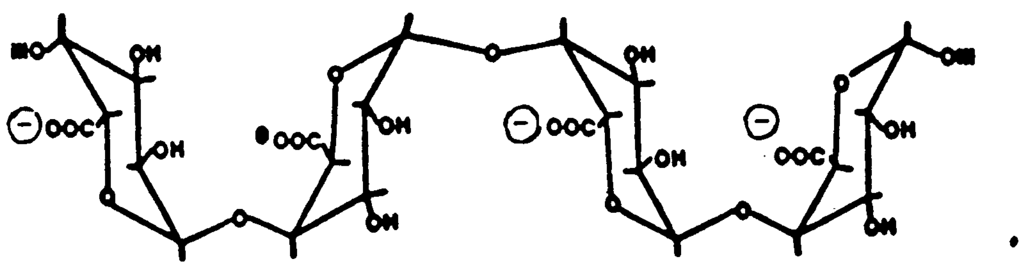

Such alginates may also be present in the form of calcium-algin complexes as described by Messina and Pate in "Food Engineering", April 1966, in the article entitled "Ingredient Cuts Heat Process Time/La Choy Foods' Algin Thickening System Keeps Product Consistency Low For Efficient Retorting, Permits Viscosity Increase After Processing". Sodium alginate, per se, or potassium alginate can also be used in the barrier coating and/or barrier composition of my invention.

The barrier layer and/or barrier composition of my invention can also contain proteinaceous substances such as milk proteins including alpha, beta and gamma caseins, and sodium and potassium caseinate.

The coatings of our invention can also contain whey protein concentrate or blends of whey protein concentrate and sodium caseinate, for example, the SAVORPRO® and SAVORLAC® products manufactured by Express Foods Company, Inc., 11001 Bluegrass Parkway, Suite 200, Louisville, Kentucky 40299, for example:

TABLE I

| PRODUCT | DESCRIPTION |
|---|---|
| SAVORLAC® 600 | A 34-36% PROTEIN BLEND OF WHEY, SODIUM CASEINATE |
| SAVORLAC® 643 | A 18-22% PROTEIN BLEND OF WHEY, SODIUM CASEINATE |
| SAVORLAC® 800 | A 34-36% PROTEIN BLEND OF WHEY, CALCIUM/SODIUM CASEINATE |
| SAVORLAC® 853 | A 34-36% PROTIEN BLEND OF INSTANTIZED WHEY, CALCIUM/SODIUM CASEINATE |
| SAVORLAC® 900 | A 34-36% PROTEIN BLEND OF WHEY, CALCIUM CASEINATE |
| SAVORLAC® 931 | A 34-36% PROTEIN BLEND OF WHEY/CALCIUM CASEINATE |
| RESTOR® 24A | A 36-40% PROTEIN BLEND OF SOY FLOUR, WHEY SOLIDS AND NONFAT DRY MILK |

TABLE II

| PRODUCT | DESCRIPTION |
|---|---|
| SAVORPRO® 50 | A 50% MINIMUM PROTEIN WHEY PROTEIN CONCENTRATE |
| SAVORPRO® 65 | A 62% MINIMUM PROTEIN WHEY PROTEIN CONCENTRATE |
| SAVORPRO® 75 | A 75% MINIMUM PROTEIN WHEY PROTEIN CONCENTRATE |
| SAVORPRO® 5015 | AN INSTANTIZED, 50% MINIMUM PROTEIN WHEY PROTEIN CONCENTRATE |
| SAVORPRO® 7515 | AN INSTANTIZED, 74% MINIMUM PROTEIN WHEY PROTEIN CONCENTRATE |
| SAVORPRO® 5004 | A LOW LACTOSE, 50% MINIMUM PROTEIN WHEY PROTEIN CONCENTRATE |
| SAVORPRO® 7504 | A LOW LACTOSE, 75% MINIMUM PROTEIN WHEY PROTEIN CONCENTRATE |
| SAVORPRO® 5001 | A HIGH CALCIUM, 50% MINIMUM PROTEIN WHEY PROTEIN CONCENTRATE |
| SAVORPRO® 7501 | A HIGH CALCIUM, 75% MINIMUM PROTEIN WHEY PROTEIN CONCENTRATE |
| SAVORPRO® 7502 | A HIGH GEL STRENGTH 75% MINIMUM PROTIEN WHEY PROTEIN CONCENTRATE. |

The use of whey protein concentrates directly blended in with dough itself is disclosed in the article by Anna Renz-Schauen and Edmund Renner, Food Technology, Volume 41, No. 10, October 1987 the disclosure of which is incorporated herein by reference. Indeed, the various whey protein concentrates disclosed in the Renz-Schauen and Renner article and references cited therein, to wit:
Abrahamsson, L. Forsum, E., and Hambraeus, L. 1974;

Forsum, E. 1979;
Forsum, E., Hambraeus, L, and Siddiqui, I. H. 1973;
Hambraeus, L. 1980;
Hernandez, M., Vega, A., and Sotelo, A. 1981;
Renner, E. 1983;
Renner, E. and Roemer, G. 1973;
Schoppet, E.F., Sinnamon, H.I., Talley, F.B., Panzer, C.C., and Aceto, N.C. 1979;
Seibles, T.S. 1975; and
Towler, C. 1982
can be utilized in the instant invention.

In addition to the foregoing ingredients the coating of our invention may also contain salts and other flavoring materials to improve the overall flavor of the pizza food article of manufacture of our invention.

Thus, salts such as sodium chloride and salt compositions such as those set forth in U.S. Letters Patent 4,514,431 issued on April 30, 1985 comprising:

(a) from about 0.25 up to about 0.80 mole percent of lactic acid and/or lactate salt;
(b) from 0 up to about 0.09 percent on a dry basis of glycolic acid or a glycolate salt;
(c) from 0 up to about 10.0 mole percent on a dry basis of a magnesium salt;
(d) from about 6 mole percent up to about 50 mole percent on a dry basis of a phosphate and/or a monoacid phosphate and/or a diacid phosphate and/or phosphoric acid taken alone or taken further together with at least one tripolyphosphate; pyrophosphate or polymetaphosphate;
(e) from 0 mole percent up to about 40 mole percent on a dry basis of a sodium salt;
(f) from about 8 mole percent up to about 50 mole percent on a dry basis of a potassium salt;
(g) from about 0.3 mole percent up to about 16 mole percent on a dry basis of a chloride;
(h) from 0 mole percent up to about 30 mole percent on a dry basis of a carbonate and/or a bicarbonate and/or carbonic acid;
(j) from 0 mole percent up to about 2.0 mole percent on a dry basis of a monobasic glutamate and/or a dibasic glutamate and/or glutamic acid; and
(k) from 0 up to about 0.6 mole percent on a dry basis of a calcium salt

may be utilized. The disclosure of U.S. Letters Patent 4,514,431 is incorporated herein by reference.

By the same token, salts as set forth in U.S. Letters Patent 4,258,072 issued on March 24, 1981; U.S. Letters Patent 4,216,244 issued on August 5, 1980; U.S. Letters Patent 4,216,244; U.S. Letters Patent 4,066,793 issued on January 3, 1978 all include salt compositions useful in the practice of my invention. Furthermore, Yamada, German Offenlegungsschrift No. 3 144 166; French Patent No. 2493681 and Japan Published Application J57/079860 disclose seasoning compositions which are useful in the practice of my invention and which may be either:

(i)
15-21 weight percent magnesium chloride;
3-10 weight percent magnesium sulfate;
2-4 weight percent potassium chloride;
0.2-0.5 weight percent magnesium bromide; and
2-7 weight percent sodium chloride; or (ii)
15-21 weight percent magnesium chloride;
6- weight percent magnesium sulfate;
2-4 weight percent potassium chloride;
0.2-0.4weight percent magnesium bromide;
2-6weight percent sodium chloride; and
0.1-21weight percent calcium salt.

Furthermore, other salts as disclosed in Japan Patent J81/022311 which discloses a synergistic "seasoning" composition containing monosodium glutamate, a nucleic acid type tasting compound, sodium chloride, succinic acid salt and at least one other sodium salt. The "seasoning" is composed of:

(i) monosodium glutamate;
(ii) nucleic acid-type tasting substance such as disodium inosine-5′-monophosphate and/or disodium guanosine-5′-monophosphate;
(iii) sodium chloride;
(iv) succinic acid and/or sodium succinate; and
(v) at least one salt selected from the group consisting of monosodium fumarate, trisodium citrate, monosodium lactate, calcium lactate, disodium malate, disodium tartarate, sodium ascorbate and monosodium aspartate may also be used in the practice of our invention.

Other salts which may be used are disclosed in Japan Published Application J82/022311; U.S. Letters Patent 3,821,368; Japan Patent J82/00777 issued on January 7, 1982 and U.S. Letters Patent 4,332,823 and U.S. Letters Patent 4,340,614 issued on July 20, 1982 the disclosures of which are all incorporated by reference herein.

In addition, other carbohydrates may be used in the coating compositions of our invention such as dextrose monohydrate (for example, CERELOSE® 2001).

With respect to the barrier layer and/or barrier composition of this second aspect of our invention the weight ratios of starch:gum:cellulose derivative may vary from about 8 (starch:1(gum):10 (cellulose derivative) up to about 200 (starch):1(gum):20 (cellulose derivative).

With respect to the tomato sauce that can be used, various tomato sauces are useful in the practice of my invention, for example, RAGU® Meatless Marinara Sauce manufactured by the Ragu Foods, Inc., Rochester, New York 14606 containing tomatoes, soybean oil, salt, olive oil, sugar, corn syrup, dried onions, garlic powder and other spices.

With respect to the unsaturated oil of my invention, various unsaturated oils can be used, for example, corn oil, coconut oil, lard, olive oil and palm oil.

With respect to the cheese coating, various cheeses can be used, for example, PROGRESSO® grated parmesan cheese distributed by Pet Incorporated of St. Louis, Missouri 63102.

With respect the preparation of the pizza food article insofar as heating subsequent to formation of the coatings, various heating techniques well known to those having ordinary skill in the art may be used, for example, the heating techniques set forth on the container for CELESTE® Cheese Pizza, to wit:

<u>DIRECTIONS</u>:

<u>FOR A CRISP CRUST</u>

1. Place cookie sheet on center oven rack.
2. Preheat oven to 425°F (218°C).
3. Remove pizza from carton; remove plastic wrap.
4. Place frozen pizza on PREHEATED cookie sheet.
5. Bake 11 to 13 minutes or until center cheese is melted and crust edge is golden brown.

<u>FOR AN EXTRA CRISP CRUST</u>

1. Preheat oven to 425°F (218°C).
2. Remove pizza from carton remove plastic wrap.
3. Place frozen pizza directly on center oven rack.
4. Bake 9 to 11 minutes or until center cheese is melted and crust edge is golden brown.

<u>MICROWAVE DIRECTIONS</u>

1. Preheat MICROWAVE BROWNER at HIGH 2-1/2 minutes.
2. Remove pizza from carton; remove plastic wrap.
3. Place frozen pizza on center of PREHEATED browner.
4. Cook at HIGH 4 to 5 minutes or until center cheese is melted rotating BROWNER 1/2 turn after each 2 minutes of cooking.

The various condiments that are useful are:

pepperoni;
sausage;
sausage and mushroom;
Canadian style bacon;
vegetable, e.g., broccoli and green pepper and red pepper.

The resulting coatings contain emulsifiers, preferably nonionic sorbitan derivative emulsifiers having one of the structures:

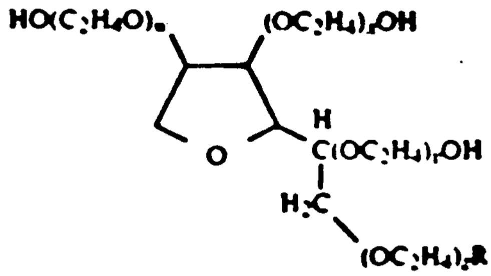

and/or a material or mixture of materials having the structure(s):

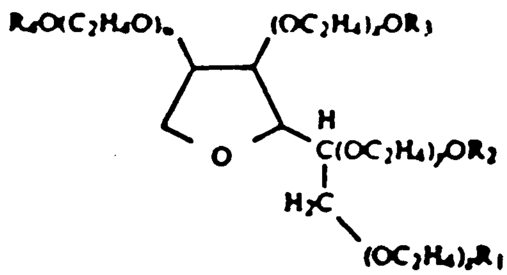

and/or a mixture of materials having the structures:

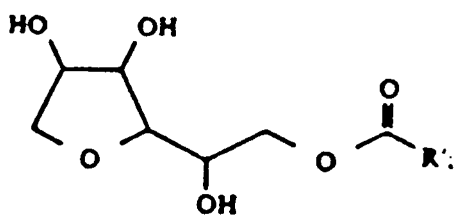

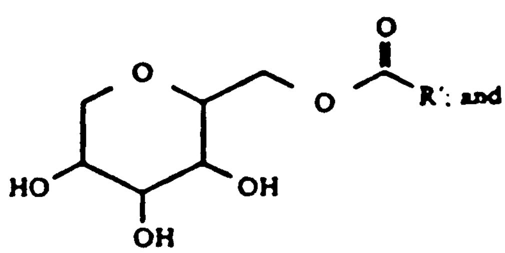

and

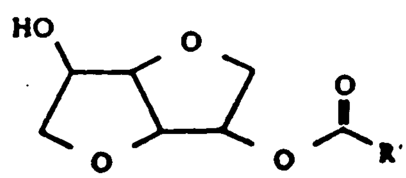

and/or a mixture of materials having the structures:

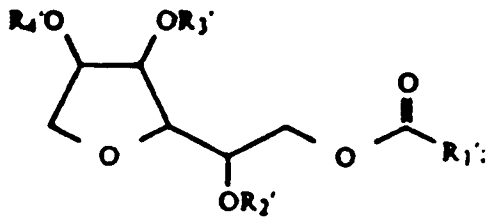

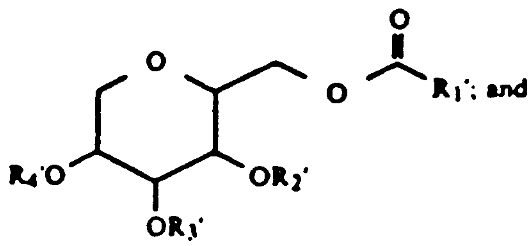

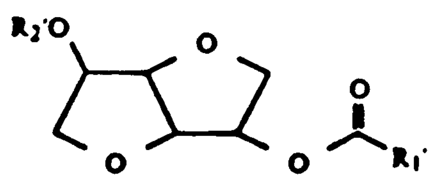

wherein R and R′ represent a fatty acid moiety selected from the group consisting of laurate, palmitate, stearate, oleate or tallate; wherein one, two, three or four of $R_1$, $R_2$, $R_3$ and $R_4$ represents the same or different laurate, palmitate, stearate, oleate or tallate and the other of $R_1$, $R_2$, $R_3$ and $R_4$ represents hydrogen; wherein one, two, three or four of $R_1'$, $R_2'$, $R_3'$ and $R_4'$ represents laurate, palmitate, stearate, oleate or tallate and the other of $R_1'$, $R_2'$, $R_3'$ and $R_4'$ represents hydrogen and wherein W + X + Y + Z is in the range of from 4 up to 80 exemplified by the commercial substances identified as TWEEN® 20, TWEEN® B40, TWEEN® 60, TWEEN® 80, SPAN® 20, SPAN® 40, SPAN® 60, SPAN® 80, T-MAZ® 65K and T-MAZ® 60K (T-MAZ® being a registered trademark of Mazer Chemicals Inc., 3938 Porett Drive, Gunrnee, Illinois 60031) which are defined as follows:

(i) TWEEN® 20 has the structure:

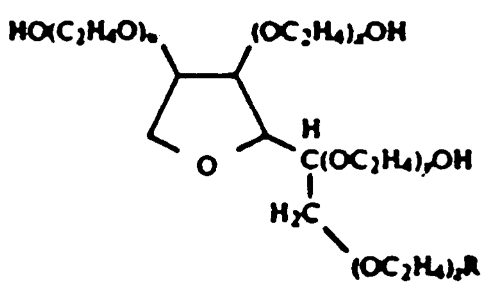

wherein W + X + Y + Z = 20 and wherein R represents 55% monolaurate and the balance of the R moiety is myristate, palmitate and stearate;

(ii) TWEEN® 80 has the

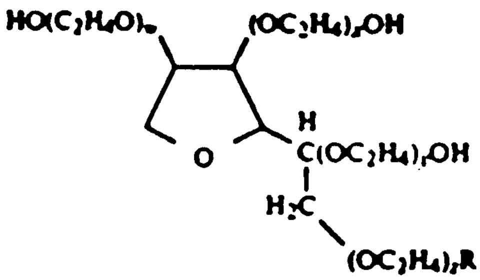

wherein W + X + Y + Z = 20 and wherein the R moiety is 75% monooleate and the balance is linoleate, palmitate and stearate;

(iii) TWEEN® 40 has the structure:

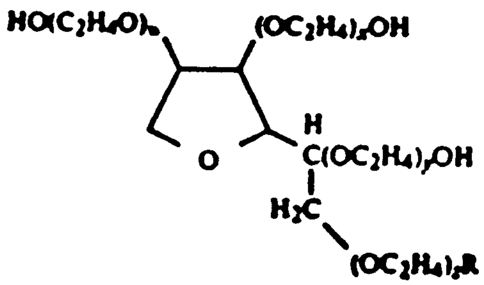

with W + X + Y + Z = 20 and wherein R represents 90% monopalmitate and 10% stearate;

(iv) TWEEN® 60 has the structure:

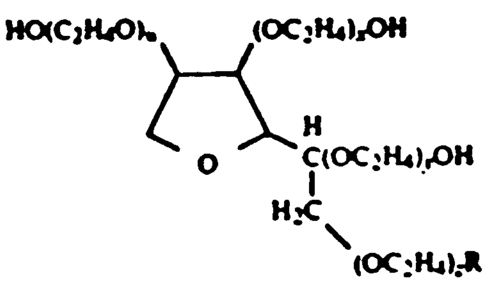

wherein W + X + Y + Z is 20 and the R moiety is 55% monostearate and 45% palmitate;

(v) SPAN® 20 is a mixture of the compounds having the structures:

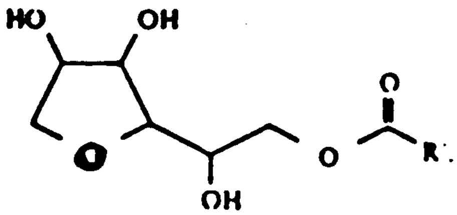

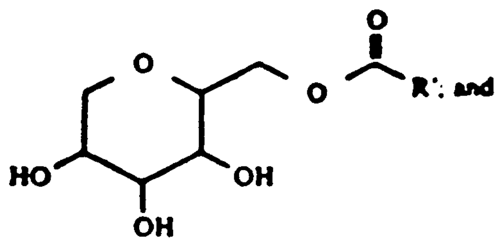

and

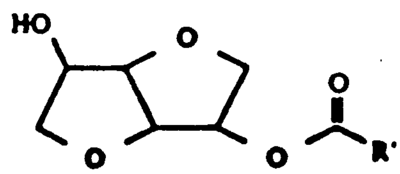

wherein the R′ moiety represents laurate;

(vi) SPAN® 80 is a mixture of the compounds having the structures:

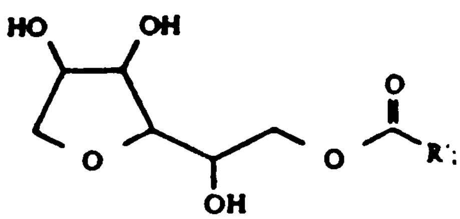

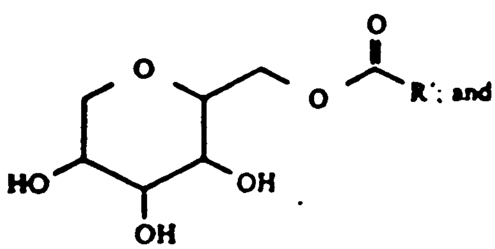

and

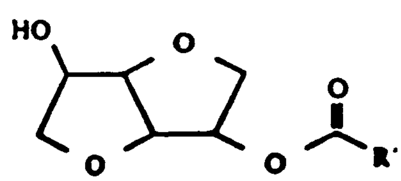

wherein the R′ moiety is the monooleate residue;

(vii) SPAN® 40 is a mixture of the compounds having the structures:

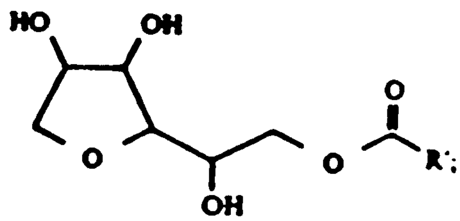

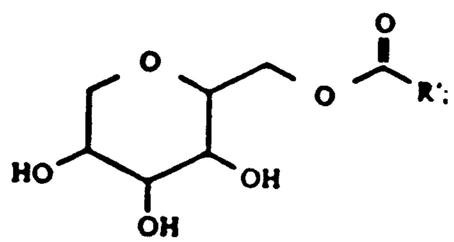

and

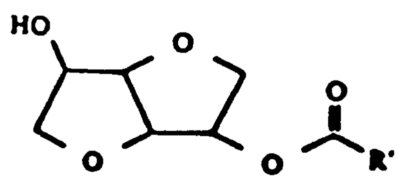

wherein the R′ moiety is the monopalmitate residue;

(viii) SPAN® 60 is a mixuture of the compounds having the structures:

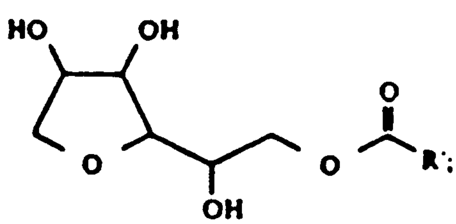

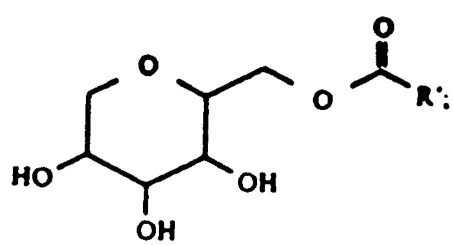

and

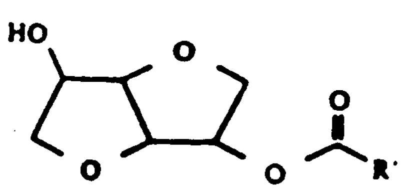

wherein the R′ moiety represents the monostearate residue: T-MAZ® 65K (registered trademark of Mazer Chemicals, Inc. of Gurnee, Illinois) is a mixture of compounds defined according to the structure:

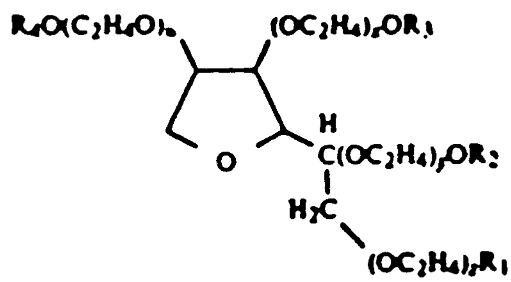

wherein X + W + Y + Z is 20 and three of $R_1$, $R_2$, $R_3$ and $R_4$ represents stearate and the other of $R_1$, $R_2$, $R_3$ and $R_4$ is hydrogen; and T-MAZ® 60K (a registered trademark of Mazer Chemicals, Inc. of Gurnee, Illinois) is a mixture of compounds defined according to the structure:

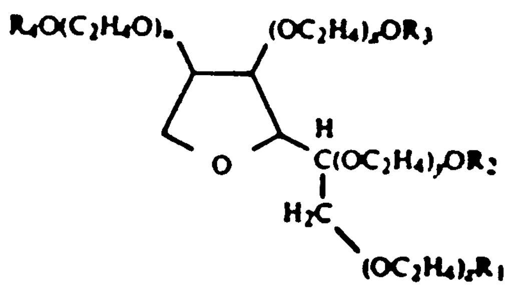

wherein X + W + Y + Z is 20 and one of $R_1$, $R_2$, $R_3$ and $R_4$ is stearate and the other of $R_1$, $R_2$, $R_3$ and $R_4$ is hydrogen.

## DETAILED DESCRIPTION OF THE DRAWINGS AND THE INVENTION

With reference to the shaped food articles of our invention, the first aspect of our invention, referring to Figures 1 and 2, each of Figures 1 and 2 discloses a shaped proteinaceous or farinaceous food article of manufacture (optionally flavored) having (i) a porous inner structure comprising a protein containing material such as ground beef which may and preferably is admixed with ground onion and garlic as well as egg yolk; and having (ii) an outer surface; the porous inner structure being indicated by reference numeral 12; and (iii) a first outer surface and coated on the first outer surface (iv) a breading coating indicated by reference numeral 14 having a breading coating surface, such breading coating comprising, for example, a flavoring composition and/or a flavor precursor and/or a flavor enhancer and flour and whole eggs as indicated, supra; and (v) the breading coating having a second outer surface. Coated on the breading coating surface is a second coating composition (the barrier layer) indicated by reference numeral 16, the barrier layer being substantially impermeable to water and cooking oil at temperatures in the range of up to about 500°F (260°C) and comprising a starch polysaccharide (such as high amylose starch) in intimate admixture with a cellulose derivative which is, in the alternative or in combination, lower alkoxy celluloses, hydroxy lower alkoxy celluloses and acyloxy celluloses indicated by reference numeral 16 and having an outer surface 18.

Figure 3 representing a schematic cross section diagram of another embodiment of an article of our invention shows a shaped proteinaceous food article such as a hamburger (optionally containing flavorants and/or flavor enhancers and/or flavor precursors) having (i) a porous inner structure which comprises a protein containing material indicated by reference numeral 31, for example, ground beef mixed with garlic and egg yolk; coated by (ii) a barrier layer indicated by reference numeral 32 comprising a mixture of a starch polysaccharide in intimate admixture with a substituted cellulose and a gum, and, optionally, a flavorant composition and/or a flavor precursor and/or a flavor enhancer, and coated thereon a breading layer indicated by reference numeral 33. The barrier layer causes the overall article to be substantially impermeable to water and cooking oil at temperatures in the range of up to about 500°F (260°C) as described, supra.

When utilized, the flavoring or flavoring precursor or flavor enhancer is of such a nature and is present in such a concentration and quantity as to "lock in" the "original flavor" of the proteinaceous substance present immediately after initial preparation (e.g., admixing ground onion or garlic with ground beef).

Figure 4 sets forth a cut-away schematic cross section of another article of our invention, a shaped proteinaceous food article of manufacture (optionally flavored) having (i) a porous inner structure which comprises a protein containing material such as ground beef intimately admixed with onion and, further, intimately admixed with a barrier composition comprising an intimate admixture of a starch polysaccharide, a substituted cellulose and a gum as described, supra, and indicated by reference numeral 42. Coated on the proteinaceous substance/barrier composition is a breading coating as described, supra, indicated by reference numeral 41 optionally containing one or more flavor enhancers and/or flavoring compositions and/or flavor enhancers. The article is substantially impermeable to water and cooking oil at temperatures in the range of up to about 500 °F (260 °C) and has excellent original flavor retention properties (referring to the original flavor of the protein-containing material). Thus, the food article has the properties of:

(x) retention of a substantial quantity of the water originally contained in the porous inner food structure 42 on storage and/or on cooking;

(y) substantial imperviousness to the absorption or adsorption of cooking oil into the porous inner food structure 42 when the food article indicated in Figure 4A is contacted with cooking oil on storage and/on cooking even at temperatures up to 500 °F (260 °C); and

(z) retention of the original flavor properties of the porous inner food structure on storage and/or on cooking.

Figure 4B is a cut-away elevation schematic diagram of another embodiment of a food article of our invention wherein the proteinaceous foodstuff and/or the farinaceous foodstuff indicated by reference numeral 314 is admixed with a barrier composition comprising an admixture of starch polysaccharide, substituted cellulose and gum and, optionally, a flavor enhancer, flavor precursors and/or flavoring compositions. Coated on the porous inner food structure is a breading/barrier layer containing the ingredients of the breading, e.g., flour and egg yolk and also containing the ingredients of the barrier composition critical to the operation of our invention; namely, (i) a starch polysacchride; (ii) a substituted cellulose and (iii) a gum as described, supra; and, optionally, a flavor composition and/or flavor enhancer composition and/or flavor precursor, with the breading/barrier layer being indicated by reference numeral 313.

Figure 4C is a cut-away side elevation schematic diagram of another embodiment of the food article of our invention wherein a porous inner food structure which may be a proteinaceous and/or a farinaceous foodstuff such as a mixture of ground beef and onion (indicated by reference numeral 318) is coated with a barrier layer indicated by reference numeral 317. The barrier layer 317 is further coated with the breading layer (e.g., mixture of flour and egg yolk) indicated by reference numeral 316. The breading layer is further coated with a barrier layer indicated by reference numeral 315 which is an admixture of a starch polysaccharide, a substituted cellulose and a gum as described, supra. One, two or all of the aforementioned layers optionally may contain one or more flavor compositions and/or one or more flavor precursors and/or one or more flavor enhancers helping to cause the original flavor nuances of the article as it is originally prepared to be retained.

Figure 4D is a cut-away side elevation schematic diagram of another embodiment of the food article of our invention wherein the porous inner food structure which may be a proteinaceous and/or a farinaceous foodstuff such as a mixture of ground beef and onion is further admixed with a barrier composition, a starch polysaccharide admixed with a substituted cellulose and a gum and is indicated by reference numeral 310. The meat/barrier porous inner food structure is further coated with barrier layer 311 comprising a starch polysaccharide, a substituted cellulose and gum and, optionally, one or more flavor compositions, one or more flavor enhancers and/or one or more flavor precursors. Barrier coating 311 is further coated with breading layer 309 (e.g., flour and egg yolk and, optionally, one or more flavor compositions, one or more flavor enhancers and/or one or more flavor precursors) which is further coated with barrier layer 312 which comprises a starch polysaccharide, a substituted cellulose and gum and, optionally, one or more flavor compositions, one or more flavor enhancers and/or one or more flavor precursors. Indeed, the processes for preparing such articles as shown in Figure 4D vary and are described, infra, in the section entitled "Detailed Description of Process and Apparatus".

Figure 4E sets forth a cut-away side elevation schematic diagram of another embodiment of the food article of manufacture of our invention wherein a porous inner food structure comprising a proteinaceous and/or farinaceous foodstuff such as ground beef admixed with chopped onion indicated by reference numeral 321 (optionally, containing at least one flavor composition, at least one flavor enhancer and/or flavor precursors) is coated with a fatty proteinaceous substance/barrier composition (optionally, containing at least one flavor composition, at least one flavor enhancer and/or flavor precursors), for example, a mixture of fatty

beef or a mixture of beef and sucrose polyester with the barrier composition of our invention, namely, a starch polysaccharide, substituted cellulose and gum admixture and flavor precursor mixture, e.g., the mixture of cysteine thiamine and HVP (in proportions indicated in the prior art, e.g., U.S. Letters Patent 3,394,015) indicated by reference numeral 320. On frying or cooking, the meat/barrier layer optionally containing flavor precursors, and/or flavor enhancers and/or flavors, 320 forms into a "batter/breading/barrier" coating acting as both a breading and barrier and flavor retaining layer which has the properties of:

(x) acting as a breading;

(y) retention of a substantial quantity of water originally contained in the porous inner food structure on storage and/or on cooking;

(z) substantial imperviousness to the absorption or adsorption of cooking oil into the porous inner food structure when the food article is contacted with cooking oil on storage and/or on cooking; and

(w) substantial retention of the original flavor of the proteinaceous composition and, in some case, enhancement of the flavor of the proteinaceous composition prior to processing.

Figure 6 is a theoretical model of the physical adhesion of the breading indicated by reference numeral 66 and barrier coating indicated by reference numeral 69 to poultry skin without the cuticle, indicated by reference numeral 64. The model features are dermis indicated by reference numeral 64; stratum germinativum indicated by reference numeral 65; breading coating matrix indicated by reference numeral 66, coating ground substance, e.g., breading and bread crumbs indicated by reference numeral 61; coating particles indicated by reference numeral 62; primary binding forces indicated by reference numeral 63A, 63B and 63C (using arrows) and secondary binding forces.

Figure 7 is a schematic diagram of a theoretical model of physical adhesion of the barrier and breading to poultry skin with cuticle. The poultry skin is indicated by reference numerals 76 and 77. The barrier coating is indicated by reference numeral 72 and the breading coating is indicated by reference numeral 79. The model features are dermis indicated by reference numeral 76; stratum germinativum indicated by reference numeral 77; stratum corneum indicated by reference numeral 78; coating matrix including bread crumbs indicated by reference numeral 79; coating ground substance indicated by reference numeral 71; coating particles indicated by reference numeral 72; primary binding forces indicated by reference numerals 73A and 73B; and secondary binding forces indicated by reference numerals 74A, 74B and 75 using arrows.

With reference to the pizza article of our invention, the second aspect of our invention, three types of coatings can be applied in conjunction with one another to various surfaces of the pizza article, to wit:

I.

(i) from 5 to 20% whey protein concentrate;
(ii) from 30 to 60% water;
(iii) from 0.4-3% cellulose derivative;
(iv) from 20 to 50% unsaturated edible oil; and
(v) from 0.2 up to 1% emulsifier.

II.

(i) from 5 to 20% whey protein concentrate;
(ii) from 30 to 60% water;
(iii) from 0.4 to 15% cellulose derivative;
(iv) from 20 to 50% unsaturated edible oil;
(v) from 1 to 8% starch polysaccharide;
(vi) from 0.2 to 1% emulsifer.

III.

(i) from 40 to 75% starch polysaccharide;
(ii) from 5 to 20% substituted cellulose derivative;
(iii) from 0.05-0.5% gum;
(iv) from 8-20% salt composition;
(v) from 9-20% sugar.

Each of coatings I, II and III set forth, supra can be applied in the alternative or in combination wherever the term "coating" is used herein.

With reference to Figure 15, the pizza article is indicated by reference numeral 410A. The coating 416 is applied to the pizza dough 412 which can be pre-cooked or uncooked. The topping which can contain cheese, tomato sauce and condiments or only cheese and tomato sauce is indicated by reference numeral 414.

With reference to Figure 16, the coating 416 having an outer surface 418 (which is placed in contact with a hot surface ultimately) is applied at surface 420 to pizza dough 412 which has on its surface 422 a topping, including tomato sauce and cheese 414 having an outer surface 424.

With reference to Figure 17, Figure 17 sets forth the same article as Figure 16 only with an additional coating 426 on surface 424. The article of Figure 3 is indicated by reference numeral 410B.

With reference to Figure 18, the pizza dough 412 has coating 416 and coated on pizza dough lamina 412 on its surface 422 is coating 432. Applied to coating 432 is topping 414 (onto the surface of the coating 428). The surface of the topping containing cheese and tomato sauce and, optionally, other toppings is 430. The article is indicated by reference numeral 410C.

Figure 19 is an article similar to that shown in Figure 18 with the exception that on surface 430 of the toppings exists an additional coating 434 having an additional surface 436. The article of Figure 19 is indicated by reference numeral 410D.

With reference to Figure 20, pizza dough crust 460 has applied to it on its underside surface 469 coating 461 having a surface which will be in contact with a heated solid or refractory at 468. The pizza crust has applied to it a sauce coating on its surface 471, the sauce coating being indicated by reference numeral 463. Applied to the sauce coating on its surface 473 is cheese coating 465 having an upper surface 475 to which is applied a condiment topping, e.g., anchovies 467 having its upper surface indicated by reference numeral 477. The article of Figure 20 is indicated by reference numeral 410E.

Figure 21 illustrates an article similar to that of Figure 20 with the exception that coated on the pizza crust 460 at surface 471 is coating 479 having a surface 481 onto which is applied the tomato sauce lamina coating 463. The article of Figure 21 is indicated by reference numeral 410F.

Figure 22 illustrates an article similar to that of Figure 20 with the exception that a coating 480 is applied to the condiment topping 467 at the surface of the condiment topping 477A, the coating surface being indicated by reference numeral 482. The coating 480 blends in at the surface of the condiment topping 477A with the condiments which are usually of high porosity 467.

Figure 23 illustrates an article similar to that of Figure 22 with the exception that on the surface of pizza crust 460 at 471 is coating 484 having a surface 486 in contact with tomato sauce lamina 463.

Figure 26 is a variation of the pizza article of Figure 20 except that an additional coating 4271 is placed on the surface of the tomato sauce lamina 473 and under the cheese lamina 465, the additional coating being indicated by reference numeral 4271 and the upper surface of the coating onto which the cheese is applied being indicated by reference numeral 4273. The entire article is indicated by reference numeral 410E.

Figure 27 is another variation of the article of Figure 26 with the exception that on surface 471 of pizza crust 460 is applied coating 479 having as its upper surface 481 on which is applied tomato sauce lamina 463.

Figure 28 illustrates another variation of the pizza article of Figure 26 with an additional coating 480 on the surface of the condiment topping 467 at surface 477A with the surface of the coating on the condiment topping being indicated by reference numeral 482. The coating 480 blends in with the condiment topping 467 which is usually highly porous. The article of Figure 28 is shown by reference numeral 410G.

Figure 29 is a variation of the pizza article of Figure 28 with an additional coating 484 on the surface of pizza crust 460 at 471, the surface of the coating being indicated by reference numeral 486 on which is applied tomato sauce lamina 463.

Figure 30 is a variation of the pizza article of Figure 20 without the bottom coating 461 and the entire article is indicated by reference numeral 410K.

Figure 31 is a variation of the pizza article of Figure 21 without bottom coating 461 and is indicated as an entire article by reference numeral 410L.

Figure 32 illustrates a variation of the pizza article of Figure 22 without the bottom coating 461 and is shown by reference numeral 410M.

Figure 33 illustrates a variation of the pizza article of Figure 23 without the bottom coating 461 and is shown overall by reference numeral 410N.

Figure 34 illustrates a variation of the pizza article of Figure 26 without the bottom coating 461 and is shown as an article using reference numeral 410P.

Figure 35 illustrates a variation of the pizza article of Figure 27 without the bottom coating 461 and is shown using reference numeral 410R.

Figure 36 illustrates a variation of the pizza article of Figure 28 without the bottom coating 461 and is shown by reference numeral 410S.

Figure 37 illustrates a variation of the pizza article of Figure 29 without the bottom coating 461 and is shown using reference numeral 410T.

DETAILED DESCRIPTION OF THE PROCESS AND APPARATUS

Figures 5A, 5B, 8, 9, 10, 11, 12, 13, 14, 24 and 25 set forth process flow diagrams and apparatus diagrams used in creation of the food articles of our invention.

In carrying out a first process of our invention, a porous inner food structure comprising water and a proteinaceous and/or a farinaceous foodstuff is first provided (e.g., the formation of a ground turkey or ground fish or ground beef pattie or the provision of an onion ring previously seasoned, for example. Optionally, flavor precursors, flavor compositions and/or flavor enhancers may be added.

The resulting product may be gently heated or may be kept in its raw state.

The resulting product may then be coated with a breading and batter, e.g., flour and egg yolk with bread crumbs or it may be coated first with a barrier composition comprising the admixture of a starch polysaccharide, a substituted cellulose and a gum, optionally, containing one or more flavor compositions, and/or one or more flavor precursors and/or one or more flavor enhancers. The resulting coated product may then be heated to cooking temperature, e.g., 250-400°F (120-204°C) and retained at that cooking temperature for a period of time from about 1 minute up to about 10 minutes or it may not be cooked and may be simply further coated with an additional breading and/or barrier composition optionally containing one or more flavor compositions and/or one or more flavor precursors and/or one or more flavor enhancers. The final product may be cooked at temperatures in the range of 250°F (120°C) up to about 500°F (260°C); or the resulting product may be further coated with a barrier composition and/or Dreading composition and finally cooked at temperatures in the range of 250-500°F (120-260°C) for a period of time of from about 5 minutes up to about 15 minutes or it may be cooked in a microwave oven for lesser periods of time using higher quantities of microwave energy.

In the alternative, the porous inner proteinaceous and/or farinaceous food structure, e.g., 321 in Figure 4E is coated with a pre-mix of proteinaceous, fatty barrier substance, optionally, containing one or more flavor compositions, and/or one or more flavor precursors and/or one or more flavor enhancers and then cooked in either a microwave oven or otherwise (using prior art cooking operations) whereby a breading/batter/barrier layer is created to produce the article of Figure 4E.

Referring then to Figure 5A, a proteinaceous or farinaceous foodstuff is provided at 50 and macerated at location 51 and then blended with seasonings from location 53 at location 52 and then compacted into patties at location 54 and then coated at location 56 with breading and/or barrier composition from location 55. The resulting coated compacted proteinaceous or farinaceous foodstuff is then fried or microwaved at location 57 and the fried or microwaved pattie is then coated again with a breading and/or barrier film from location 59 with the coating carried out at location 58. The resulting doubly coated pattie is then reheated via microwave or frying at location 590 and marketed or stored at location 591.

Figure 5B indicates the same process as Figure 5A except that it is without the frying process steps and omits the frying or microwaving at locations 57 and 590.

Referring to Figure 11, Figure 11 shows four basic types of batter/breading/barrier layer coating processes for the coating of porous inner food structures comprising proteinaceous and/or farinaceous foodstuffs, to wit: The single line process indicated by reference numeral 110; the tandem line process indicated by reference numeral 120; the tempura or batter-fry process indicated by reference numeral 130 and the tempura-Japanese process indicated by reference numeral 140.

In reference to the single line process 110 the porous inner food structure is provided at reference numeral 111 with a dry season coating at reference numeral 112 and a pre-dust (optional) at location 113 followed by the batter/bread coating at reference numeral 114 followed by the optional frying step at reference numeral 115 followed by the barrier coating step at reference numeral 116 followed by the frying step at reference numeral 117 followed by the freezing/packing step indicated by reference numeral 150.

The tandem line process 120 shows the provision of the porous inner food structure at reference numeral 121 followed by the dry season coating at reference numeral 122 followed by the pre-dust (optional) operation at reference numeral 123 followed by the batter/breading coating at reference numeral 124 followed by a second batter/breading coating at reference numeral 125 followed by an optional frying step at reference numeral 126 followed by the barrier coating step at reference numeral 127 followed by the frying step at reference numeral 128 followed by the freezing and packing step at reference numeral 150.

The tempura or batter fry line process 130 shows the provision of the porous inner food structure at reference numeral 131 followed by the wet seasoning coating step at reference numeral 132 followed by the pre-dust step at reference numeral 133 followed by the batter or tempura application step at reference numeral 134 followed by the special tempura style frying step at reference numeral 135 followed by the barrier coating step at reference numeral 136 followed by the frying step at reference numeral 137 followed by the freezing and packing step at reference numeral 150.

The tempura-Japanese process 140 is indicated by reference numerals 140-150 inclusive and begins with the provision of the porous inner food structure at reference numeral 141 followed by the dry seasoning coating at reference numeral 142 followed by the pre-dust step at reference numeral 143 followed by tempura applicators step at reference numeral 144 followed by the special Japanese breading applicator step at reference numeral 145 followed by the frying step at reference numeral 146 followed by the barrier coating step at reference numeral 147 followed by the frying step at reference numeral 148 followed by the freezing and packing step at reference numeral 150.

Figure 12 sets forth a process flow diagram for the creation of fried onion rings, another embodiment of our invention. Top and butt onions are provided at reference numeral 160 (with waste at 161) and outer skins are peeled at reference numeral 162 (with waste at reference numeral 163). The onions are sliced at reference numeral 164 (with waste at 165). The ring separation is indicated at reference numeral 166 (with waste at reference numeral 167). The coating application for the breading and batter is indicated at reference numeral 168. The raw breaded rings are then coated from location 170 with barrier layer and pre-fried rings 170 are pre-fried at location 175; blast-frozen at reference numeral 176 and coated with barrier layer at reference numeral 177. The pre-fried rings are packaged at location 178, cased at location 179 and placed in a holding freezer at location 180. The raw breaded rings 169 are packaged at location 171; blast-frozen at location 172; cased at location 173 and placed in holding freezer at location 174.

Figures 8, 9, 10, 13 and 14 set forth schematic diagrams of apparatus used for the production of the articles of our invention.

Figure 8 sets forth a schematic diagram of a breading/barrier coating machine showing the basic principal of breading flow/recirculation.

Free-flowing chute 80 is operated with vertical screw flighting 81 in connection with provision of breading or breading and barrier composition mixture (optionally containing, in addition, one or more flavor compositions and/or one or more flavor precursors and/or one or more flavor enhancers) indicated by reference numeral 89. Breading top layer 84 or breading/barrier top layer 84 is coated on the inner porous food structure being breaded and coated 85 located on breader and coating belt 87 operated using cross feed screw 83 which carries the breading and barrier coating composition across the breader/coater to the vertical screw. The operation of the apparatus is carried out using belt vibrators 86. Reference numeral 82 refers to the breading/barrier layer bottom layer.

Figure 9 illustrates a recirculation system used in running non-free-flowing breading/barrier coating compositions (containing, in addition, one or more flavor compositions and/or one or more flavor precursors and/or one or more flavorenhancers). Areas of the machine restrict the movement of the material.

Thus, the breading/barrier coating indicated by reference numeral 100 is provided through sifter/conveyor 93 and non-free-flow hopper 94 using hopper feed screw 95 and spreader screw 96. The breading/barrier layer composition moves on to hopper top flow belt 91 using cross feed screw 97. Reference numeral 99 indicates the feed hopper of the apparatus and reference numeral 98 indicates the level glide discharge conveyor.

Figure 10 sets forth an arrangement of Star Rollers on a tempura/barrier layer applicator.

Reference numeral 101 indicates the tempura batter/barrier layer belt. Reference numeral 102 represents the four Star Roll Transfer used to feed the fryer. Reference numeral 103 indicates the fryer top submerger belt. Reference numeral 104 represents the fryer oil level. Reference numeral 105 represents the fryer infeed conveyor belt. Reference numeral 106 represents the fryer main conveyor belt.

Figure 13 is an isometric (Figure 13B) and line layout (Figure 13A) showing a flip preduster and a batter-bread-ing/barrier layer machine useful in producing the articles of our invention. The line layout is indicated in general by reference numeral 200. The isometric layout is indicated by reference numeral 205 - (in general). With respect to Figure 13A the breader and coater is indicated by reference numeral 201 and with respect to Figure 13B the breader and coater is indicated by reference numeral 206. With reference to Figure 13A, the batter is indicated as being applied at reference numeral 202 and the predust operation is indicated at location 203. The flip preduster in Figure 13B is indicated by reference numeral 207 and the infeed conveyor is indicated by reference numeral 204 in Figure 13A and is indicated by reference numeral 208 in Figure 13B.

Figure 14 sets forth an isometric (Figure 14B) and line layout (Figure 14A) illustrating a batter/barrier layer fry process. The application of the hot oil filter is indicated by reference numeral 303 in Figure 14B. The tempura style frier is indicated by reference numeral 300 in Figure 14A and is indicated by reference numeral 304 in Figure 14B. The tempura applicator is indicated by reference numeral 301 in Figure 14A and is indicated by reference numeral 305 in Figure 14B. The batter and breader and barrier layer coater setup is indicated by reference numeral 302 in Figure 14A and is indicated by reference numeral 306 in Figure 14B.

Referring to the process for preparing the pizza articles of our invention, the second aspect of our invention, Figure 24 is a perspective view in schematic diagram form of a technique for applying the coating to a frozen pizza indicated by article 410K. The frozen pizza having pizza dough 412 and topping 414 is placed onto coating 416A which was previously placed into pan 411 prior to heating.

Preferably, the pan is dusted with flour or other appropriate material to break the surface tension prior to placing the coating 416A into pan 411.

Figure 25 is a schematic view of a preferred process for applying the coating to the pizza involving first putting the coating 416A into the pan and then (via arrow "a") placing pizza crust 412 (indicated by article 410L) into the pan and then placing tomato sauce from source 4110 onto the crust and then placing the cheese lamina indicated by reference numeral 4111 onto the tomato sauce coating.

The following examples are given to illustrate embodiments of our invention as it is preferably preferred to practice it.

EXAMPLES I-VII

The following table sets forth mixtures of salts (with each salt given as a weight percentage) to produce mixed seasonings useful in the practice of my invention. Each mixture is given as a separate example. Each of the mixtures of each of the examples will be used in examples following Example XVI.

TABLE III

| | EXAMPLE | | | | | | |
|---|---|---|---|---|---|---|---|
| Ingredient | I | II | III | IV | V | VI | VII |
| $KH_2PO_4$ | - | 72.38 | 73.12 | 72.42 | 75.62 | - | - |
| Lactic Acid 22% | 3.09 | 2.09 | 2.11 | 2.09 | 2.18 | 3.0 | 2.29 |
| Glycolic Acid 85% | 0.08 | 0.05 | - | - | - | - | - |
| $Mg_3(PO_4)_2.4H_2O$ | 10.90 | - | - | - | - | - | - |
| $CaHPO_4.2H_2O$ | 0.90 | 0.61 | - | 0.61 | 0.50 | 0.70 | - |
| NaCl | 5.24 | 3.54 | 3.58 | 3.54 | 3.70 | 5.10 | 15.22 |
| KCl | 0.52 | 0.35 | - | 0.35 | 0.38 | 0.50 | 0.38 |
| Monosodium Glutamate.$H_2O$ | 2.90 | 1.96 | 1.98 | 1.96 | 2.06 | 2.82 | 2.15 |
| $NaHCO_3$ | 22.02 | | 15.04 | 14.90 | 15.56 | 21.38 | - |
| $KHCO_3$ | - | 14.89 | - | - | - | - | - |
| $K_2CO_3$ | 54.35 | - | - | - | - | - | - |
| $MgCO_3$ | - | 4.13 | 4.17 | 4.13 | - | - | - |
| $K_2HPO_4$ | - | - | - | - | - | 66.50 | 79.24 |
| Calcium Chloride | - | - | - | - | - | - | 0.72 |

EXAMPLES VIII-XVI

The following Table IV sets forth mixtures of non-sodium-containing salts to produce mixed seasonings useful in the practice of my invention. Each mixture is given as a separate example. Each of the mixtures of each of the examples will be used in examples following the instant Examples VIII-XVI:

TABLE IV

EXAMPLE

| Ingredient | VIII | IX | X | XI | XII | XIII | XIV | XV | XVI |
|---|---|---|---|---|---|---|---|---|---|
| $KH_2PO_4$ | 90.98 | 85.94 | 89.16 | 94.06 | 86.61 | 92.18 | 95.90 | 79.24 | 93.84 |
| Lactic Acid 22% | 2.62 | 2.48 | 2.57 | 4.24 | 3.91 | 4.16 | 2.77 | 2.29 | 2.71 |
| $CaHPO_4 \cdot 2H_2O$ | 0.77 | 0.72 | 0.75 | 0.99 | 0.91 | 0.97 | - | - | - |
| $CaCl_2$ | - | - | 0.43 | - | - | - | 0.87 | 0.72 | 0.85 |
| KCl | 0.44 | 3.96 | - | 0.71 | 5.75 | 0.69 | 0.46 | 15.60 | 0.45 |
| $MgCO_3$ | 5.19 | 4.90 | 5.08 | - | - | - | - | - | - |
| Monopotassium Glutamate.$H_2O$ | - | 2.00 | 2.00 | - | 2.82 | 2.00 | - | 2.15 | 2.15 |

The foregoing examples, shown in mole percents of anions, cations and substantially nonionic acids (e.g., lactic acid) are set forth in terms of such ions and free acids in Table III below.

TABLE V

EXAMPLE

| Ingredient | VIII | IX | X | XI | XII | XIII | XIV | XV | XVI |
|---|---|---|---|---|---|---|---|---|---|
| $K^+$ | 45.3% | 45.6% | 45.5% | 49.30% | 49.3% | 49.3% | 49.0% | 49.2% | 49.0% |
| $H_2PO_4^-$ | 45.0% | 41.6% | 44.4% | 48.60% | 43.2% | 47.9% | 48.6% | 35.7% | 47.8% |
| $HPO_4^=$ | 0.3% | 0.276% | 0.297% | 0.402% | 0.359% | 0.399% | - | - | - |
| $Ca^{++}$ | 0.3% | 0.277% | 0.297% | 0.722% | 0.359% | 0.399% | 0.545% | 0.401% | 0.515% |
| $Cl^-$ | 0.398% | 3.5% | 0.392% | 0.662% | 5.25% | 0.658% | 1.51% | 13.61% | 1.49% |
| $Mg^{++}$ | 4.15% | 3.84% | 4.11% | - | - | - | - | - | - |
| $CO_3^=$ | 4.15% | 3.84% | 4.11% | - | - | - | - | - | - |
| Lactic acid | 0.434% | 0.396% | 0.425% | - | 0.646% | 0.694% | 0.465% | 0.342% | 0.458% |
| Glutamate ion | - | 0.65% | 0.668% | - | 0.942% | 0.696% | - | 0.650% | 0.735% |

Table IV below sets forth the mole ratio of metal cation (e.g., potassium ion, calcium ion and magnesium ion) to total moles of anion, cation and free acid, e.g., lactic acid.

TABLE VI

| Ingredient | EXAMPLE VIII | IX | X | XI | XII | XIII | XIV | XV | XVI |
|---|---|---|---|---|---|---|---|---|---|
| Mole ratio of metal cation: anion + cation + free acids | 0.498 | 0.499 | 0.498 | 0.497 | 0.497 | 0.496 | 0.495 | 0.496 | 0.496 |

EXAMPLE XVII

The following ingredients are refluxed for four hours:

EXAMPLE XVII

The following ingredients are refluxed for four hours:

| Ingredient | Parts by Weight |
|---|---|
| L-Cysteine hydrochloride............ | 0.9 |
| Carbohydrate-free vegetable protein hydrolysate......... | 30.9 |
| Thiamine hydrochloride.............. | 0.9 |
| Water............................. | 67.30 |

The resulting mixture is then aged for three days and an aliquot portion is withdrawn and dried. Based on the weight of the dry solid obtained, sufficient gum arabic is added to the batch to provide a composition containing one part by weight of gum arabic. The composition is then spray-dried.

Ethyl (2-methyl-3-furyl) disulfide is added to the spray-dried material at therate of 4 ppm.

The resulting material has a beef liver flavor. To this material is added, in separate portions, each of the mixed seasonings of any one of Examples I-XVI at levels of 4%, 8%, 12%, 15% and 25%.

Each of the resulting materials has an excellent "rare" beef liver flavor which will be added to the ground beef patties in examples set forth, infra. Each of the beef patties has an excellent "cooked liver/rare flavor nuance".

EXAMPLE XVIII

The following ground beef mixture is prepared:

| Ingredient | Parts by Weight |
|---|---|
| Ground beef | 200.0 |
| Beef suet | 120.0 |
| Ice/NaCl (50:50 mixture) | 200.0 |
| Potato flour | 100.0 |
| Anhydrous bread crumbs | 140.0 |
| Dry milk powder | 20.0 |
| Standard spice flavor | 10.0 |
| containing: | |
| Oil of cuminn | 1.6 |
| Oil of mustard | 3.3 |
| Oil of celery | 3.3 |
| Oil of ginger | 5.2 |
| Oil of cloves | 14.3 |
| Oil of coriander | 17.6 |
| Oil of pimenta berries | 22.0 |
| Oil of black pepper | 43.0 |
| Oleoresin capsicum | 373.0 |
| Oil of nutmeg | 500.0 |

To portions of the above mixture, 0.02% by weight of each of the flavor/salt formulations of Example XVII is added (at the level of 5 parts by weight).

The resultant beef patties are then used as the inner porous protein structures for the following Examples XIX, XX and XXI.

EXAMPLE XIX

Into a 2 liter reaction vessel equipped with heater is placed 500 grams of water. The water is heated to 190°F (88°C) and 40 grams of METHOCEL® A15-LY and 1.0 grams of keltrol xanthan gum is added with stirring.

METHOCEL® A15-LV is a methylcellulose composition manufactured by Dow Chemical Company of Midland, Michigan 48674 containing 97% methylcellulose; 2% water and 1% sodium chloride. Keltrol is a xanthan gum manufactured by the Keltrol Corporation of Okmulgee, Oklahoma. 30 Grams of "CRISP FILM®, amylose corn starch manufactured by National Starch & Chemical Corporation, Food Products Division of Finderne Avenue, P. O. Box 6500, Bridgewater, New Jersey 08807 is then added to the resulting mixture. The resulting product is stirred and 234 grams of cold water together with 30 grams of benesol 15, a modified starch manufactured by National Starch & Chemical Corporation, Food Products Division. It is a coarsely ground, pre-cooked tapioca starch and is used to aid in the dispersion of the product. While stirring at 190°F (88°C), 234 grams of water is added. The resulting mixture is then cooled to room temperature and 80 grams of flour and 85 grams of whole eggs are added to the mixture. The entire mixture is then used to coat each of the porous inner food structures of Example XVIII. The product is cooked until it is brown on both sides (at a temperature of approximately 350°F (177°C) frying temperature). The resulting products are all substantially impervious on additional heating to cooking oil and retain substantially all of their moisture internally.

EXAMPLE XX

Into a 2 liter vessel equipped with stirrer, thermometer and heating mantle is placed 136.8 grams of METHOCEL® A15-LV (methylcellulose composition produced by Dow Chemical Company of Midland, Michigan 48674 containing 97% methylcellulose, 2% water and 1% sodium chloride); 3.20 grams of Keltrol (xanthan gum) manufactured by Kelco Company of Okmulgee, Oklahoma, 586.20 grams of CRISP FILM®, Amylose Starch manufactured by the National Starch & Chemical Corporation, Food Products Division;

65.40 grams of "National 78-0104" a coarsely ground pre-cooked tapioca starch; 65.40 grams of "PURE FLO®" a modified food starch derived from waxy maize manufactured by the National Starch & Chemical Corporation, Food Products Division; 13.0 grams of the salt mixture of Example I, supra; 65.0 grams of sodium chloride and 65.0 grams of cerelose 2001. Sufficient water is added to cause the resulting product to be coatable onto each of the porous inner food structures of Example XVIII. The resulting product is then coated onto the porous food structures of Example XVIII at a level of 1:10 weight:weight of barrier coating composition:porous inner food structure.

The resulting product is fried for a period of 20 minutes in an oven operating at 375°F (190°C). At the end of the 20 minute period, the resulting coated product is cooled and a batter is prepared containing 15 parts by weight of corn flour; 30 parts by weight of bleached wheat flour; 14 parts by weight of potato flour; 15 parts by weight of dextrose; 40 parts by weight of whole eggs; and 40 parts by weight of bread crumbs. The resulting breading is coated to cover the surface of the barrier layer coated porous inner food structure in its entirety. The weight ratio of breading:barrier-coated porous inner food structure is 2:10. The batter/breading coating also contains 60 parts by weight of water. The resulting batter-coated product is then baked at a temperature of 450°F (232°C) in a toaster oven for a period of 18 minutes.

Each of the resulting products has the properties of:

(a) retention of a substantial quantity of the water originally contained in each of the porous inner food structures notwithstanding the two cooking cycles; and

(b) substantial imperviousness to absorption or adsorption of cooking oil into the porous inner food structure when the resulting articles are each cooked further with cooking oil beyond the cooking steps set forth in the instant example, supra.

## EXAMPLE XXI

### PART I:

Into a 15 kelo steam is placed 8,000 grams of water at room temperature. The water is heated to 195°F (90°C) and then 1,200 grams of METHOCEL® A15-LV is dispersed in the water using an agitator. The METHOCEL® A15-LV is dispersed thoroughly. The resulting mixture is held for further processing in Part III, infra;

### PART II:

Into a 1 gallon blender is placed 3,000 grams of water at room temperature. 300 Grams of salt flour and 24 grams of keltrol (xanthan gum) is dispersed thoroughly into the water with agitation. To the resulting mixture cerelose 2001 (300 grams) is added with stirring. (Cerelose 2001 is dextrose monohydrate). To the mixture 150.0 grams of the salt of Example II, supra is added and dispersed by means of strong agitation.

The mixture of the instant Part II is also held to be used in Part III, infra.

### PART III:

Into a 30 liter tank is placed 11,176 grams of water at room temperature. The agitator is turned on and operated at 90% of its maximum rpm.

A blend of 600 grams of "National 78-0104" (a coarsely ground pre-cooked tapioca starch) and 300 grams of Pure Flo F (a modified food starch derived from waxy maize) is blended into the water. The resulting product is dispersed thoroughly and blended in order to remove all lumps.

Over a period of 15 minutes, 4,950 grams of "CRISP FILM® (a modified high amylose corn starch manufactured by National Starch & Chemical Corporation) is added and dispersed thoroughly in the resulting mixture.

The entire product produced according to Part II, supra is then added to the resulting mixture. The resulting mixture is stirred for a period of 2 minutes.

The entire product produced according to Part I, supra, is then added to the resulting mixture with stirring for a period of 2 minutes.

Portions of the resulting mixture are then coated on to each of the porous inner food structures produced according to Example XVIII in a weight ratio of 0.07:10 of barrier coating:porous inner food structure.

To the barrier-coated porous inner food structure a batter containing 60 parts by weight of water; 40 parts by weight of whole eggs; 40 parts by weight of corn flour; 40 parts by weight of whole wheat flour;

and 40 parts by weight of corn flour is placed on the untreated barrier coated surface of the porous inner food structures of Example XVIII. The weight ratio of batter:coated porous inner food structure in each case is 0.6:10. The resulting batter coated-barrier layer coated porous inner food structures of Example XVIII are then heated in a toaster oven at 450 ° F (232 ° C) for a period of 20 minutes.

Each of the batter coated barrier layer coated porous inner food structures thus produced has the properties of:

(x) retention of a substantial quantity of the water originally contained in the porous inner food structure on further cooking;

(y) substantial imperviousness to the absorption or adsorption of cooking oil into the porous inner food structure when the each of the food articles of Example XVIII is contacted with cooking oil on further cooking beyond the cooking set forth in the instant example.

EXAMPLE XXII

Into a 10 liter reaction vessel equipped with heater is placed 2.5 kilograms of water. The water is heated to 190 ° F (88 ° C) and 672 grams of METHOCEL® A15-LY and 7.20 grams of KELTROL® xanthan gum is added with stirring.

METHOCEL® A15-LV is a methylcellulose composition manufactured by Dow Chemical Company of Midland, Michigan 48674 containing 97% methylcellulose, 2% water and 1% sodium chloride. KELTROL® xanthan gum is manufactured by Kelco Corporation of Okmulgee, Oklahoma. 3408 Grams of "CRISP FILM®, amylose corn starch manufactured by National Starch & Chemical Corporation, Food Products Division of Finderne Avenue, P. O. Box 6500, Bridgewater, New Jersey 08807 is then added to the resulting mixture. The resulting product is stirred and 1 liter of cold water together with 276 grams of National 78-0104 a coarsely ground, pre-cooked tapioca starch, manufactured by National Starch & Chemical Corporation, Food Products Division is added (used to aid in the dispersion of the product).

800 Grams of the salt mixture of Example I, supra, is then added to the mixture and sufficient water is added to cause the resulting product to be coatable onto each of the pizza articles as indicated in Figures, 15, 16, 17, 18, 19, 20, 21, 22, 23, 26, 27, 28, 29, 31, 32, 33, 34, 35, 36 and 37.

Each of the pizza articles is baked 11 minutes until the center cheese lamina is melted and the crust edge is golden brown. The resulting product has unexpectedly and unobviously long shelf stability and can be reheated a number of times while retaining its mouth-feel and original flavor nuances.

EXAMPLE XXIII

Into a 5 liter reaction vessel equipped with heater is placed 1440 grams of water. The water is heated to 190 ° F (88 ° C) and 300 grams SAVORPRO® 7502 a high gel strength 75% minimum protein whey protein concentrate manufactured by Express Foods Company, Inc., 11001 Bluegrass Parkway, Suite 200, Louisville, Kentucky 40299 is added to the water. 30 Grams of METHOCEL® A15-LV is then added with stirring together with 12.0 grams of TWEEN® 80 having the structure:

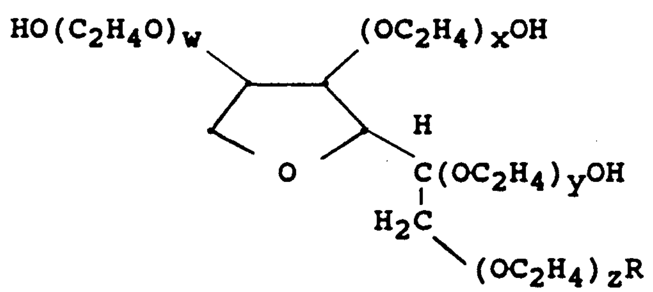

wherein W + X + Y + Z = 20 and wherein the R moiety is 75% monooleate and the balance is linoleate, palmitate and stearate. METHOCEL® A15-LV is a methylcellulose composition manufactured by Dow Chemical Company of Midland, Michigan 48674 containing 97% methylcellulose; 2% water and 1% sodium chloride. With stirring, 9.0 grams of butylated hydroxy anisole is added with 1209 grams of corn oil. The resulting mixture is heated at 190 ° F (88 ° C) for a period of two hours. At the end of the two hour period, the resulting material is then coated onto pizza articles as shown in Figures 15, 16, 17, 18, 19, 20, 21, 22, 23, 26, 27, 28, 29, 31, 32, 33, 34, 35, 36 and 37.

The resulting pizza articles are cooked in a microwave oven 4.5 minutes until the center cheese is melted.

The resulting pizza articles each have exceptional, unexpected, unobvious shelf stability even after reheating several times. The original flavor nuances and mouth-feel is retained even after reheating four times.

EXAMPLE XXIV

Into a 5 liter reaction vessel equipped with heater is placed 1440 grams of water. The water is heated to 190 ° F (88 ° C) and 300 grams SAVORPRO® 7502 a high gel strength 75% minimum protein whey protein concentrate manufactured by Express Foods Company, Inc., 11001 Bluegrass Parkway, Suite 200, Louisville, Kentucky 40299 is added to the water. 30 Grams of METHOCEL® A15-LV is then added with stirring together with 12.0 grams of TWEEN® 80 having the structure:

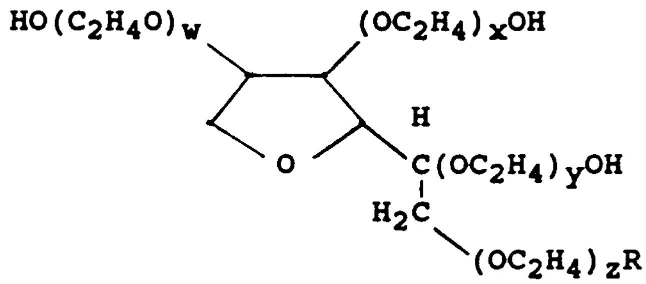

wherein W + X + Y + Z = 20 and wherein the R moiety is 75% monooleate and the balance is linoleate, palmitate and stearate. METHOCEL® A15-LV is a methylcellulose composition manufactured by Dow Chemical Company of Midland, Michigan 48674 containing 97% methylcellulose; 2% water and 1% sodium chloride. With stirring, 9.0 grams of butylated hydroxy anisole is added with 1209 grams of corn oil. The resulting mixture is heated at 190 ° F (88 ° C) for a period of two hours. To the resulting mixture, 120 grams of CRISP FILM® amylose corn starch manufactured by National Starch And Chemical Corporation, Food Products Division, Finderne Avenue, P. O. Box 6500, Bridgewater, New Jersey 08807 is then added to the resulting mixture.

The resulting mixture is then re-heated for a period of four hours at 170 ° F (77 ° C).

The resulting coating composition is then coated onto pizza articles as shown in Figures 15, 16, 17, 18, 19, 20, 21, 22, 23, 26, 27, 28, 29, 30, 32, 33, 34, 35, 36 and 37.

The resulting pizza articles are cooked in a microwave oven 4.5 minutes until the center cheese is melted.

The resulting pizza articles each have exceptional, unexpected, unobvious shelf stability even after reheating several times. The original flavor nuances and mouth-feel is retained even after reheating four times.

EXAMPLE XXV

Into a 5 liter reaction vessel equipped with heater is placed 1440 grams of water. The water is heated to 190 ° F (88 ° C) and 300 grams SAVORPRO® 7502 a high gel strength 75% minimum protein whey protein concentrate manufactured by Express Foods Company, Inc., 11001 Bluegrass Parkway, Suite 200, Louisville, Kentucky 40299 is added to the water. 30 Grams of METHOCEL® A15-LV is then added with stirring together with 12.0 grams of TWEEN® 80 having the structure:

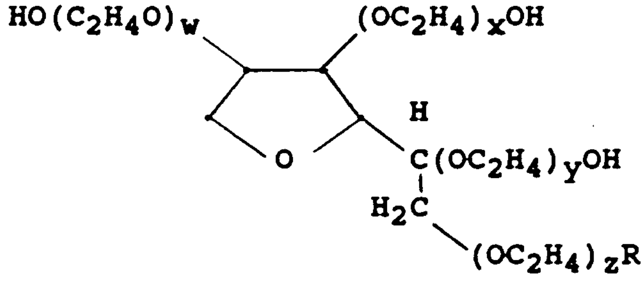

wherein W + X + Y + Z = 20 and wherein the R moiety is 75% monooleate and the balance is linoleate, palmitate and stearate. METHOCEL® A15-LV is a methylcellulose composition manufactured by Dow Chemical Company of Midland, Michigan 48674 containing 97% methylcellulose; 2% water and 1% sodium chloride. With stirring, 5.40 grams of butylated hydroxy anisole is added with 1206 grams of corn oil. The resulting mixture is heated at 190 ° F (88 ° C) for a period of two hours. To the resulting mixture, 9.00 grams of sodium benzoate is added with stirring. The resulting mixture is stirred for one hour at 112 ° F (44 ° C).

The resulting material is then coated on pizza articles as shown in Figures 15, 16, 17, 18, 19, 20, 21, 22, 23, 26, 27, 28, 29, 30, 32, 33, 34, 35, 36 and 37.

The resulting pizza articles are cooked in a microwave oven 4.5 minutes until the center cheese is melted.

The resulting pizza articles each have exceptional, unexpected, unobvious shelf stability even after reheating

**Claims**

1. An article of foodstuff comprising a porous inner structure comprising water and a proteinaceous and/or farinaceous food material and at least one barrier coating fixedly coated on the entire surface of said porous inner structure, said coating comprising:

   an intimate admixture of a starch polysaccharide, a substituted cellulose selected from lower alkoxy celluloses, hydroxy lower alkoxy celluloses and acyloxy celluloses; and a gum;

   said article having the properties of:

   (x) Retention of a substantial quantity of the water originally contained in said porous inner food structure on storage and/or on cooking; and

   (y) Substantial imperviousness to the absorption or adsorption of cooking oil into said porous inner food structure when said food article is contacted with cooking oil on storage and/or on cooking.

2. The article of claim 1, wherein the cellulose derivative in the barrier composition is selected from the group consisting of:

   (a) hydroxypropylmethylcellulose defined according to the structure:

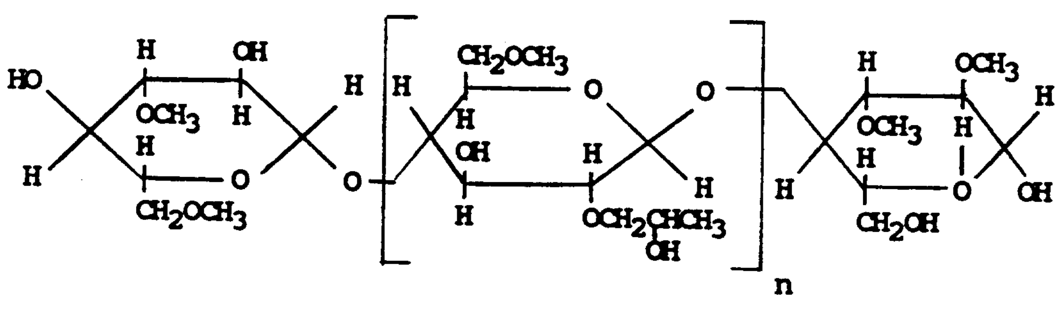

   wherein n represents repeating monomeric units;

   (b) methylcellulose having the structure:

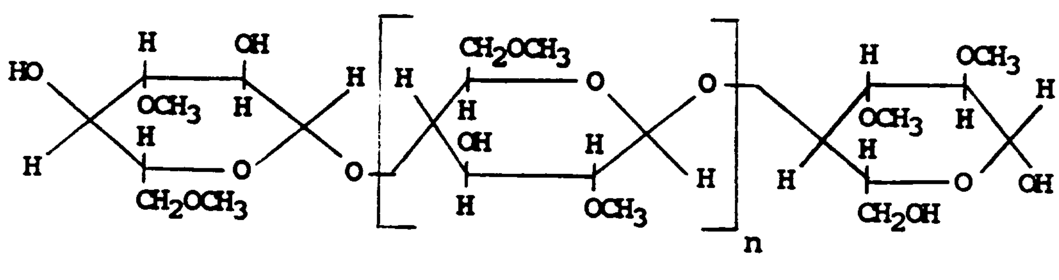

   wherein n represents repeating monomeric units; and

(c) hydroxybutylmethylcellulose having the structure:

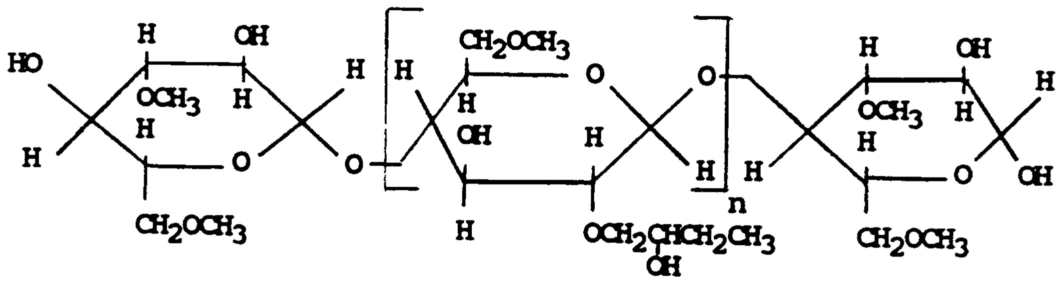

wherein n represents repeating monomeric units.

**3.** A food article of manufacture according to either of the preceding claims wherein at least one of said porous inner food structure or said composition of matter fixedly coated on the entirety of said first outer surface includes at least one flavor composition and/or at least one flavor enhancer composition and/or at least one flavor precursor composition.

**4.** A food article according to any one of the preceding claims, wherein a breading coating comprising flour is disposed either intermediate said porous inner food structure and said barrier coating or on the outer surface of said barrier coating.

**5.** A food article according to any one of claims 1-3, wherein said barrier coating also comprises flour.

**6.** A food article according to any one of the preceding claims, wherein said barrier coating also comprises a proteinaceous food material containing fat and/or an edible polyol polyester.

**7.** A food article according to any one of the preceding claims, wherein individual particles of porous inner food structure are coated with said barrier layer.

**8.** A coating composition for application to the surface of at least one component of a pizza food article comprising:
(i) from 40 up to 75% by weight of a starch polysaccharide;
(ii) from 5 up to 20% by weight of a substituted cellulose selected from the group consisting of lower alkoxy celluloses, hydroxy lower alkoxy celluloses and acyloxy celluloses;
(iii) from 0.05 up to 0.5% by weight of a gum;
(iv) from 8 up to 20% by weight of a salt composition; and
(v) from 9 up to 20% by weight of a sugar.

**9.** A method for producing an edible pizza food article comprising the steps of:
(a) applying a continuous layer of a first coating composition defined according to claim 8 to a thermally conductive or non-conductive substantially horizontally planar surface thereby forming a first coating lamina having a substantially horizontally planar coating composition lamina surface;
(b) applying a continuous layer of pizza dough to said first coating lamina thereby forming a first pizza dough lamina having a substantially horizontal planar pizza dough lamina surface;
(c) applying at least one substantially continuous layer of a tomato sauce composition to substantially the entirety of said pizza dough lamina surface thereby forming a tomato sauce composition lamina having a substantially horizontally planar upper tomato sauce composition lamina surface;
(d) applying at least one cheese composition to substantially the entirety of said upper tomato sauce composition lamina surface thereby forming a cheese composition lamina having a substantially horizontally planar cheese composition lamina surface; and
(e) baking the product to completion.

**10.** A method for producing an edible pizza food article comprising the steps of:
(a) applying a continuous layer of a first coating composition defined according to claim 8 to a thermally conductive or non-conductive substantially horizontally planar solid surface thereby forming a first coating lamina having a substantially horizontally planar coating composition lamina surface;
(b) applying a continuous layer of pizza dough to said first coating lamina thereby forming a first pizza dough lamina having a substantially horizontally planar pizza dough lamina surface;
(c) applying a continuous layer of a second coating composition defined according to claim 8 to the pizza dough lamina surface thereby forming a second coating lamina having a substantially horizontally planar coating composition lamina surface;
(d) applying at least one substantially continuous layer of a tomato sauce composition to substantially the entirety of said second coating lamina surface thereby forming a tomato sauce composition lamina having a substantially horizontally planar tomato sauce composition lamina surface;
(e) applying at least one cheese composition to substantially the entirety of said upper tomato sauce composition lamina surface thereby forming a cheese composition lamina having a substantially horizontally planar cheese composition lamina surface; and
(f) baking the product to completion.

**11.** A pizza food article produced by:
(i) applying at least one layer of ingredients including tomato sauce to a pre-baked pastry layer precoated with at least one composition defined according to claim 8;
(ii) distributing a blend of cheese over the tomato sauce layer;
(iii) stretching a second layer of rolled out unbaked pastry over the entire cheese layer;
(iv) coating the second layer of rolled out unbaked pastry with at least one coating composition defined according to claim 8;
(v) partially baking the two pastry layers with the ingredient layers sandwiched in between;
(vi) allowing the product to cool;
(vii) applying to the second pastry layer a further layer of ingredients; and
(viii) baking the product to completion.

**Patentansprüche**

**1.** Lebensmittelerzeugnis mit einer porösen Innenstruktur, umfassend Wasser und ein proteinhaltiges und/oder mehlhaltiges Nahrungsmittelmaterial und mindestens eine auf der gesamten Oberfläche der porösen Innenstruktur bleibend aufgetragene Sperrschicht, welche Schicht aufweist:
eine innige Zumischung eines Stärkepolysaccharids, eine substituierte Cellulose, ausgewählt aus niederen Alkoxycellulosen, niederen Hydroxyalkoxycellulosen und Acyloxycellulosen; und einen Gummistoff;
wobei das Erzeugnis die Eigenschaften hat:
(x) Zurückhaltung einer wesentlichen Menge des ursprünglich in der porösen Innenstruktur des Lebensmittels enthaltenen Wassermenge bei Lagerung und/oder Garen; und
(y) weitgehende Undurchlässigkeit in bezug auf die Absorption oder Adsorption von Speiseöl in die poröse Innenstruktur des Lebensmittels, wenn das Lebensmittelerzeugnis beim Lagern und/oder Garen mit Speiseöl in Berührung kommt.

**2.** Erzeugnis nach Anspruch 1, bei welchem das Cellulosederivat in der Sperrschichtzusammensetzung ausgewählt wird aus der Gruppe, bestehend aus:
(a) Hydroxypropylmethylcellulose, festgelegt entsprechend der Struktur:

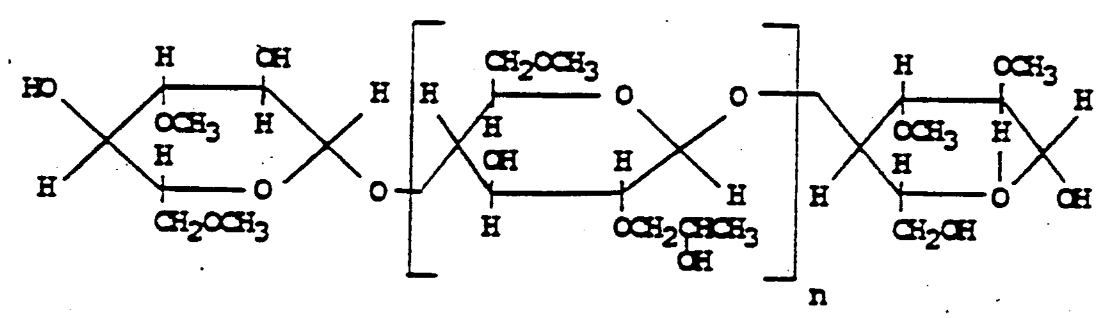

worin n die Grundeinheiten repräsentiert;

(b) Methylcellulose mit der Struktur:

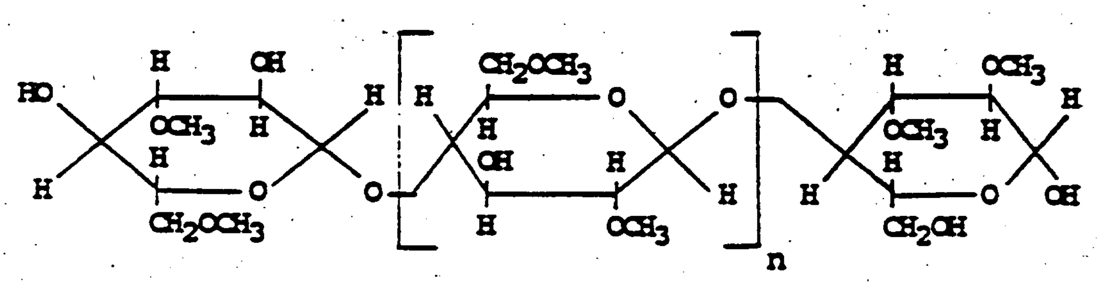

worin n die Grundeinheiten repräsentiert; und

(c) Hydroxybutylmethylcellulose mit der Struktur:

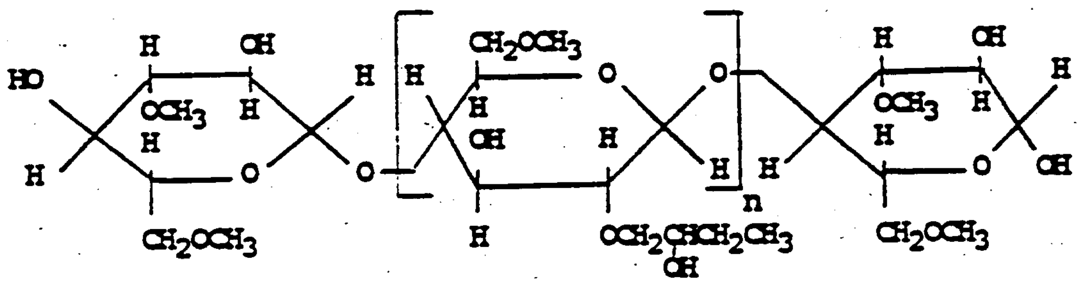

worin n die Grundeinheiten repräsentiert.

3. Lebensmittelerzeugnis der Herstellung entsprechend einem der vorgenannten Ansprüche, bei welchem mindestens eine der porösen Innenstrukturen des Lebensmittels oder die Zusammensetzung der auf die Gesamtheit der ersten äußeren Oberfläche aufgetragenen bleibenden Substanz mindestens eine Geschmackstoffzusammensetzung und/oder mindestens eine Zusammensetzung eines Geschmackstoffverstärkers und/oder mindestens eine Vorstufe einer Geschmackstoffzusammensetzung umfaßt.

4. Lebensmittelerzeugnis nach einem der vorstehenden Ansprüche, bei welchem ein mehlaufweisender Panierüberzug entweder zwischen der porösen Innenstruktur des Lebensmittels und der Sperrschicht oder auf der Außenfläche der Sperrschicht aufgetragen wird.

5. Lebensmittelerzeugnis nach einem der vorstehenden Ansprüche 1 bis 3, bei welchem die Sperrschicht auch Mehl umfaßt.

6. Lebensmittelerzeugnis nach einem der vorstehenden Ansprüche, bei welchem die Sperrschicht auch ein proteinhaltiges Nahrungsmittelmaterial umfaßt, das Fett und/oder einen genußtauglichen Polyolpolyester enthält.

7. Lebensmittelerzeugnis nach einem der vorstehenden Ansprüche, bei welchem einzelne Partikel der porösen Innenstruktur des Lebensmittels mit der Sperrschicht überzogen sind.

8. Überzugszusammensetzung zur Aufbringung auf die Oberfläche von mindestens einem Bestandteil eines Pizza-Lebensmittelerzeugnisses, umfassend:
(i) von 40 bis 75 Gew.% eines Stärkepolysaccharids;
(ii) von 5 bis 20 Gew.% einer substituierten Cellulose, ausgewählt aus der Gruppe, bestehend aus niederen Alkoxycellulosen, niederen Hydroxyalkoxycellulosen und Acyloxycellulosen;
(iii) von 0,05 bis 0,5 Gew.% eines Gummistoffes;
(iv) von 8 bis 20 Gew.% einer Salzzusammensetzung; und
(v) von 9 bis 20 Gew.% eines Zuckers.

**9.** Verfahren zur Herstellung eines genußtauglichen Pizza-Lebensmittelerzeugnisses, umfassend die Schritte:

(a) Aufbringen einer zusammenhängenden Schicht einer ersten entsprechend Anspruch 8 festgelegten Überzugszusammensetzung auf eine wärmeleitfähige oder nichtleitfähige, im wesentlichen horizontale ebenflächige Oberfläche, wodurch eine erste dünne Schicht mit einer im wesentlichen horizontalen ebenflächigen dünnen Oberflächenschicht der Überzugszusammensetzung bildet;

(b) Auftragen einer zusammenhängenden Schicht von Pizzateig auf die erste dünne Überzugsschicht, wodurch eine erste dünne Pizzateigschicht gebildet wird, die eine im wesentlichen horizontale ebenflächige dünne Oberflächenschicht aus Pizzateig aufweist;

(c) Auftragen von mindestens einer im wesentlichen zusammenhängenden Schicht einer Zusammensetzung einer Tomatensoße auf im wesentlichen die Gesamtheit der dünnen Oberflächenschicht des Pizzateigs, wodurch eine dünne Schicht einer Tomatensoßen-Zusammensetzung gebildet wird, die eine im wesentlichen horizontale ebenflächige dünne Oberflächenschicht einer Tomatensoßen-Zusammensetzung aufweist;

(d) Auftragen von mindestens einer Käse-Zusammensetzung im wesentlichen auf die Gesamtheit der oberen dünnen Schicht der Tomatensoßen-Zusammensetzung, wodurch eine dünne Schicht einer Käse-Zusammensetzung gebildet wird, die eine im wesentlichen horizontale ebenflächige dünne Oberflächenschicht der Käse-Zusammensetzung aufweist; und

(e) Fertigbacken des Erzeugnisses.

**10.** Verfahren zur Herstellung eines genußtauglichen Pizza-Lebensmittelerzeugnisses, umfassend die Schritte:

(a) Aufbringen einer zusammenhängenden ersten, entsprechend Anspruch a festgelegten Überzugszusammensetzung auf eine wärmeleitende oder nichtleitende im wesentlichen horizontale ebenflächige feste Oberfläche, wodurch eine dünne Überzugsschicht gebildet wird, die eine im wesentlichen horizontale ebenflächige dünne Oberfläche der Überzugszusammensetzung aufweist;

(b) Aufbringen einer zusammenhängenden Schicht von Pizzateig auf die erste dünne Überzugsschicht, wodurch eine erste dünne Schicht Pizzateig gebildet wird, die eine im wesentlichen horizontale ebenflächige dünne Oberflächenschicht aus Pizzateig aufweist;

(c) Aufbringen einer zusammenhängenden Schicht einer zweiten, entsprechend Anspruch 8 festgelegten Überzugszusammensetzung auf die dünne Oberflächenschicht des Pizzateigs, wodurch eine zweite dünne Überzugsschicht gebildet wird, die im wesentlichen eine horizontale ebenflächige dünne Oberflächenschicht der Überzugszusammensetzung aufweist;

(d) Aufbringen mindestens einer im wesentlichen zusammenhängenden Schicht einer Tomatensoßen-Zusammensetzung im wesentlichen auf die Gesamtheit der zweiten Oberflächenschicht der Überzugszusammensetzung, wodurch eine dünne Überzugsschicht der Tomatensoßen-Zusammensetzung gebildet wird, die eine im wesentlichen horizontale ebenflächige dünne Oberflächenschicht der Tomatensoßen-Zusammensetzung aufweist;

(e) Aufbringen mindestens einer Käse-Zusammensetzung im wesentlichen auf die Gesamtheit der oberen dünnen Oberflächenschicht der Tomatensoßen-Zusammensetzung, wodurch eine Überzugsschicht einer Käse-Zusammensetzung gebildet wird, die eine im wesentlichen horizontale ebenflächige dünne Oberflächenschicht der Käse-Zusammensetzung aufweist; und

(f) Fertigbacken des Erzeugnisses.

**11.** Pizza-Lebensmittelerzeugnis, hergestellt durch:

(i) Auftragen mindestens einer Lage von Bestandteilen, einschließlich Tomatensoße, auf eine vorgebackene Teiglage, die mindestens mit einer entsprechend Anspruch 8 festgelegten Zusammensetzung beschichtet ist;

(ii) Verteilen einer Mischung von Käse über die Lage Tomatensoße;

(iii) Ausstreichen einer zweiten Lage von ausgerolltem, ungebackenem Teig über die gesamte Käselage;

(iv) Überziehen der zweiten Lage des ausgerollten, ungebackenen Teigs mit mindestens einer entsprechend Anspruch 8 festgelegten Überzugszusammensetzung;

(v) teilweises Abbacken der zwei Teiglagen mit den dazwischen eingeschlossenen Lagen der Zutaten;

(vi) das Erzeugnis abkühlen lassen;

(vii) Auftragen einer weiteren Lage von Zutaten auf die zweite Teiglage und

(viii) Fertigbacken des Erzeugnisses.

## Revendications

1. Denrée alimentaire comprenant une structure interne poreuse comprenant de l'eau et une matière alimentaire protéinée et/ou farinacée et au moins un revêtement limite appliqué de façon fixe sur la surface totale de ladite structure poreuse interne, ledit revêtement comprenant :
   un mélange intime d'un polysaccharide d'amidon, d'une cellulose substituée choisie parmi des alcoxycelluloses inférieurs, des alcoxycelluloses inférieures hydroxylées et des acyloxycelluloses ; et d'une gomme ;
   ladite denrée ayant les propriétés suivantes :
   (x) rétention d'une quantité sensible de l'eau initialement contenue dans ladite structure alimentaire interne poreuse au cours du stockage et/ou de la cuisson ; et
   (y) résistance sensible à l'absorption ou l'adsorption d'huile de cuisson dans ladite structure alimentaire interne poreuse quand ledit article alimentaire est mis en contact avec de l'huile de cuisson au cours du stockage et/ou de la cuisson.

2. Denrée selon la revendication 1, dans laquelle le dérivé de la cellulose contenu dans la composition limite est choisi dans le groupe constitué de :
   (a) hydroxypropylméthylcellulose ayant la structure :

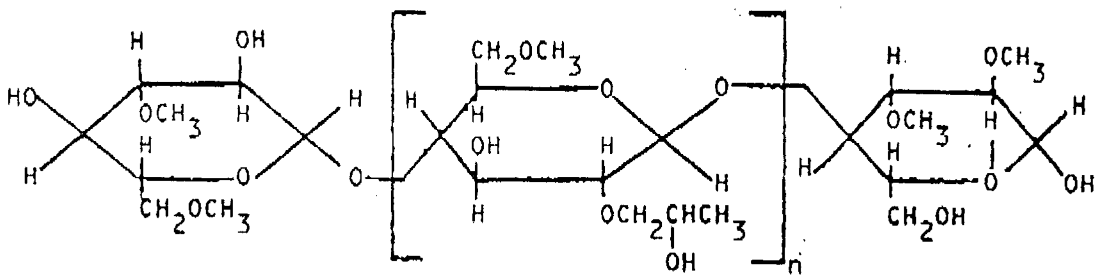

   dans laquelle n représente la répétition des motifs monomériques ;
   (b) méthylcellulose de structure :

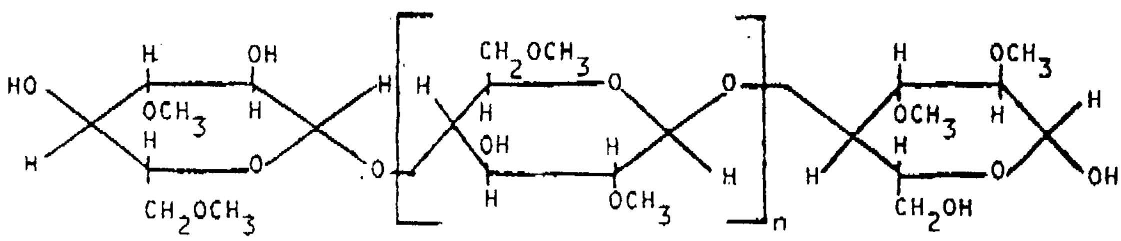

   dans laquelle n représente la répétition des motifs monomériques ; et
   (c) hydroxybutylméthylcellulose de structure :

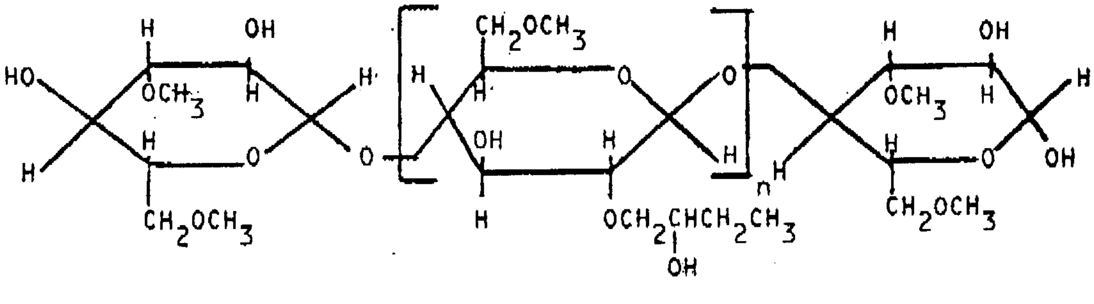

dans laquelle n représente la répétition des motifs monomériques.

**3.** Article alimentaire fabriqué selon l'une des revendications précédentes, dans lequel au moins ladite structure alimentaire interne poreuse ou ladite composition de matière appliquée de façon fixe sur la totalité de ladite première surface extérieure comprend au moins une composition aromatique et/ou au moins une composition augmentant l'arôme et/ou au moins une composition précurseur d'arôme.

**4.** Article alimentaire selon l'une quelconque des revendications précédentes, dans lequel un revêtement de panure comprenant de la farine est situé soit entre ladite structure alimentaire interne poreuse et ledit revêtement limite, soit sur la surface externe dudit revêtement limite.

**5.** Article alimentaire selon l'une quelconque des revendications 1 à 3, dans lequel ledit revêtement limite comprend aussi de la farine.

**6.** Article alimentaire selon l'une quelconque des revendications précédentes, dans lequel ledit revêtement limite contient aussi une matière alimentaire protéinée contenant de la graisse et/ou un polyesterpolyol comestible.

**7.** Article alimentaire selon l'une quelconque des revendications précédentes, dans lequel les particules individuelles de la structure alimentaire interne poreuse sont revêtues de ladite couche limite.

**8.** Composition de revêtement destinée à être appliquée à la surface d'au moins un composant d'un article alimentaire pour pizza comprenant :

(i) de 40 à 75% en poids d'un polysaccharide d'amidon ;
(ii) de 5 à 20 % en poids d'une cellulose substituée choisie dans le groupe constitué par : alcoxycelluloses inférieures, alcoxycelluloses inférieures hydroxylées et acyloxycelluloses ;
(iii) de 0,05 à 0,5 % en poids d'une gomme ;
(iv) de 8 à 20 % en poids d'une composition de sel ; et
(v) de 9 à 20 % en poids d'un sucre.

**9.** Procédé de production d'un article alimentaire comestible de type pizza comprenant les étapes consistant à :

(a) appliquer une couche continue d'une première composition de revêtement définie selon la revendication 8 sur une surface pratiquement horizontalement plane, thermiquement conductrice ou non conductrice, formant ainsi une première strate de revêtement ayant une surface de strate de composition de revêtement pratiquement horizontalement plane ;
(b) appliquer une couche continue de pâte à pizza sur ladite première strate de revêtement formant ainsi une première strate de pâte à pizza ayant une surface de strate de pâte à pizza pratiquement horizontalement plane ;
(c) appliquer au moins une couche pratiquement continue d'une composition de sauce tomate pratiquement sur la totalité de ladite surface de strate de pâte à pizza formant ainsi une strate de composition de sauce tomate ayant une surface supérieure de strate de composition de sauce tomate pratiquement horizontalement plane ;
(d) appliquer au moins une composition de fromage pratiquement sur la totalité de ladite surface supérieure de strate de composition de sauce tomate, formant ainsi une strate de composition de fromage ayant une surface de strate de composition de fromage pratiquement horizontalement plane; et
(e) cuire le produit totalement.

**10.** Procédé de production d'un article alimentaire comestible de type pizza, comprenant les étapes consistant à :

(a) appliquer une couche continue d'une première composition de revêtement définie selon la revendication 8 sur une surface pratiquement horizontalement plane thermiquement conductrice ou non conductrice formant ainsi une première strate de revêtement ayant une surface de strate de composition de revêtement pratiquement horizontalement plane ;
(b) appliquer une couche continue de pâte à pizza sur ladite première strate de revêtement formant ainsi une première strate de pâte à pizza ayant une surface de strate de pâte à pizza pratiquement horizontalement plane ;

(c) appliquer une couche continue d'une seconde composition de revêtement définie selon la revendication 8 sur la surface de strate de pâte à pizza formant ainsi une seconde strate de revêtement ayant une surface de strate de composition de revêtement pratiquement horizontalement plane ;
(d) appliquer au moins une couche pratiquement continue d'une composition de sauce tomate pratiquement sur la totalité de ladite seconde surface de strate de revêtement formant ainsi une strate de composition de saute tomate ayant une surface de strate de composition de sauce tomate pratiquement horizontalement plane ;
(e) appliquer au moins une composition de fromage pratiquement sur la totalité de ladite surface supérieure de strate de composition de sauce tomate formant ainsi une strate de composition de fromage ayant une surface de strate de composition de fromage pratiquement horizontalement plane ; et
(f) cuire le produit totalement.

**11.** Produit alimentaire de type pizza produit par les étapes consistant à :
(i) appliquer au moins une couche d'ingrédients comprenant de la sauce tomate sur une couche de pâte précuite sur laquelle a été préappliquée au moins une composition définie selon la revendication 8 ;
(ii) distribuer un mélange de fromages sur la couche de sauce tomate ;
(iii) étendre une seconde couche de pâte non cuite étalée sur la totalité de la couche de fromage ;
(iv) appliquer sur la seconde couche de pâte non cuite étalée au moins une composition de revêtement définie selon la revendication 8 ;
(v) cuire partiellement ces deux couches de pâte et les couches d'ingrédients qui sont situées entre celles-ci ;
(vi) laisser le produit refroidir ;
(vii) appliquer une autre couche d'ingrédients sur la seconde couche de pâte ; et
(viii) cuire le produit totalement.

FIG.1

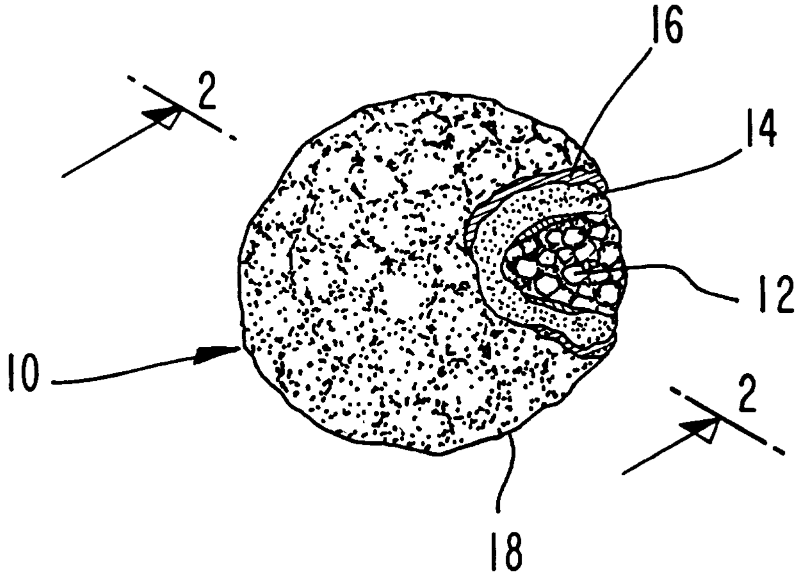


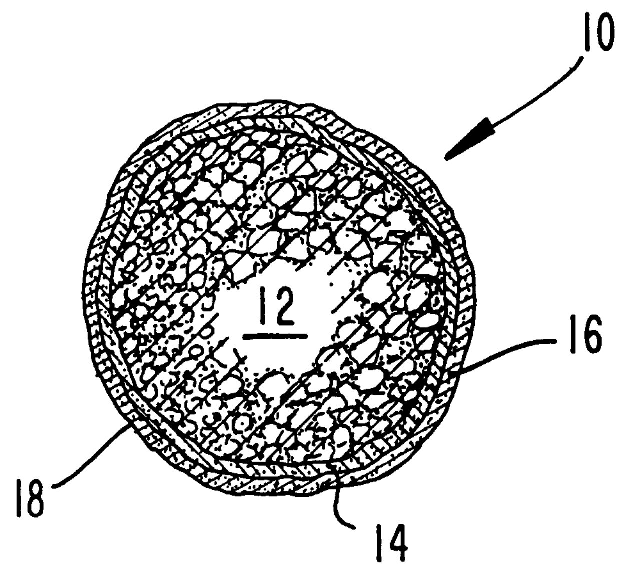


FIG.2

FIG.3

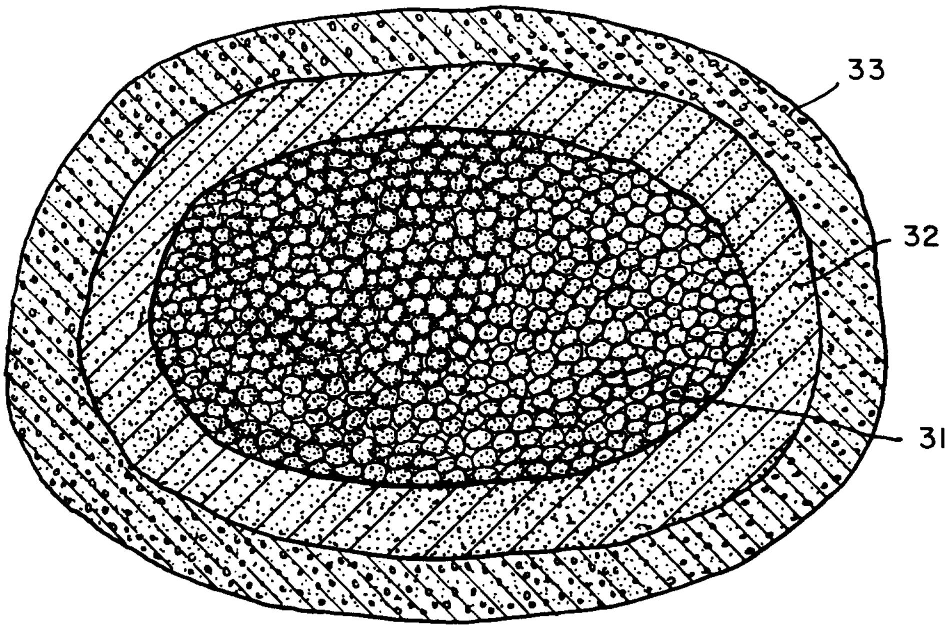


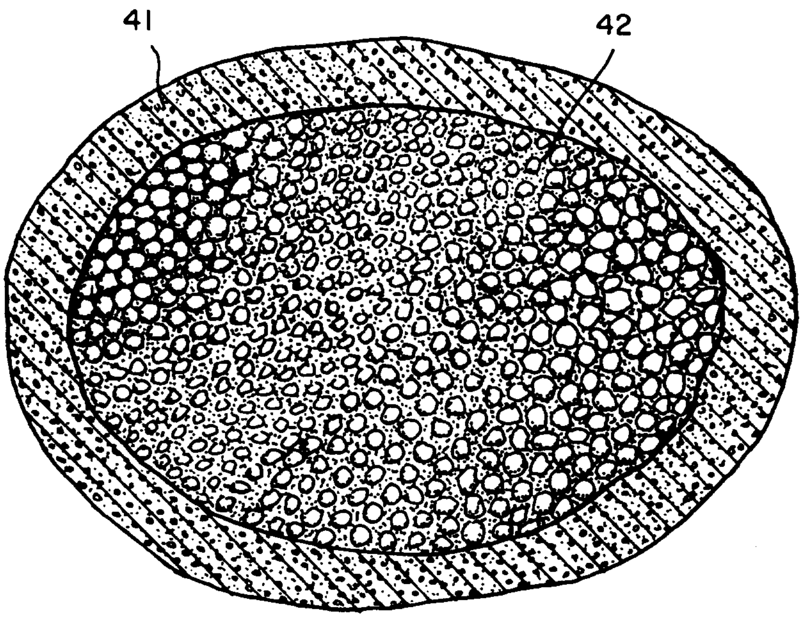


FIG.4

FIG.4B

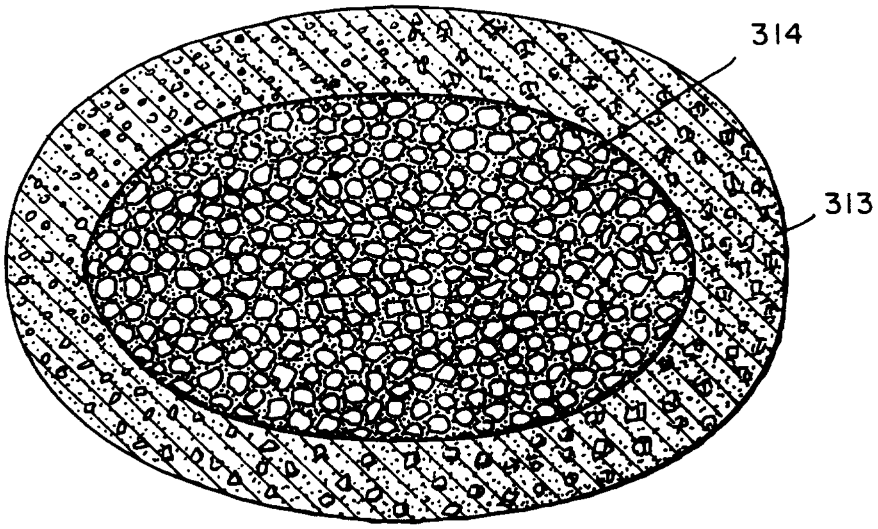


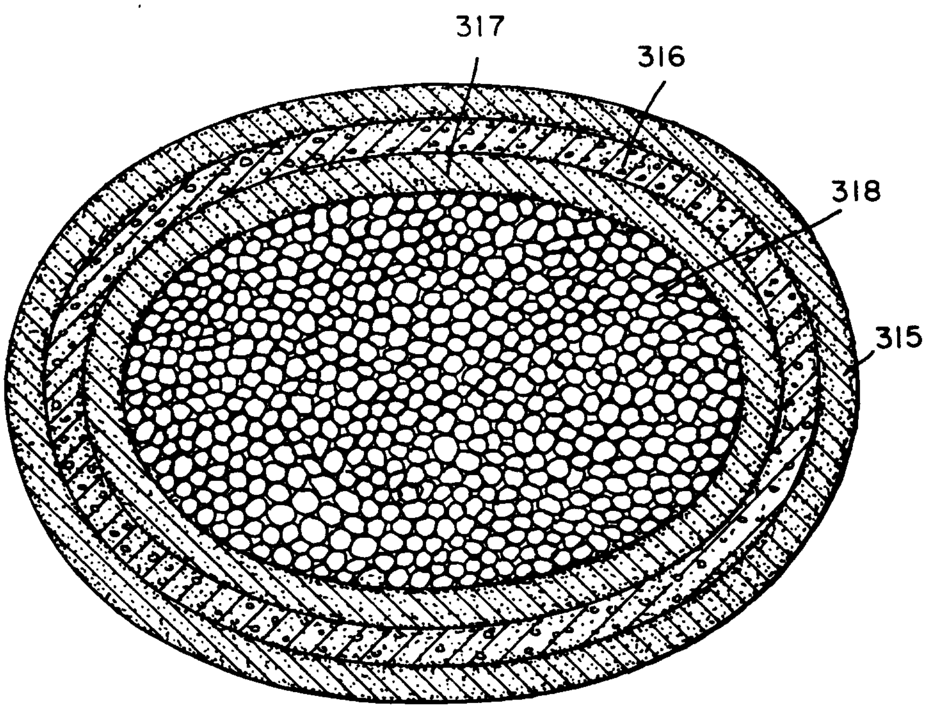


FIG.4C

FIG.4D

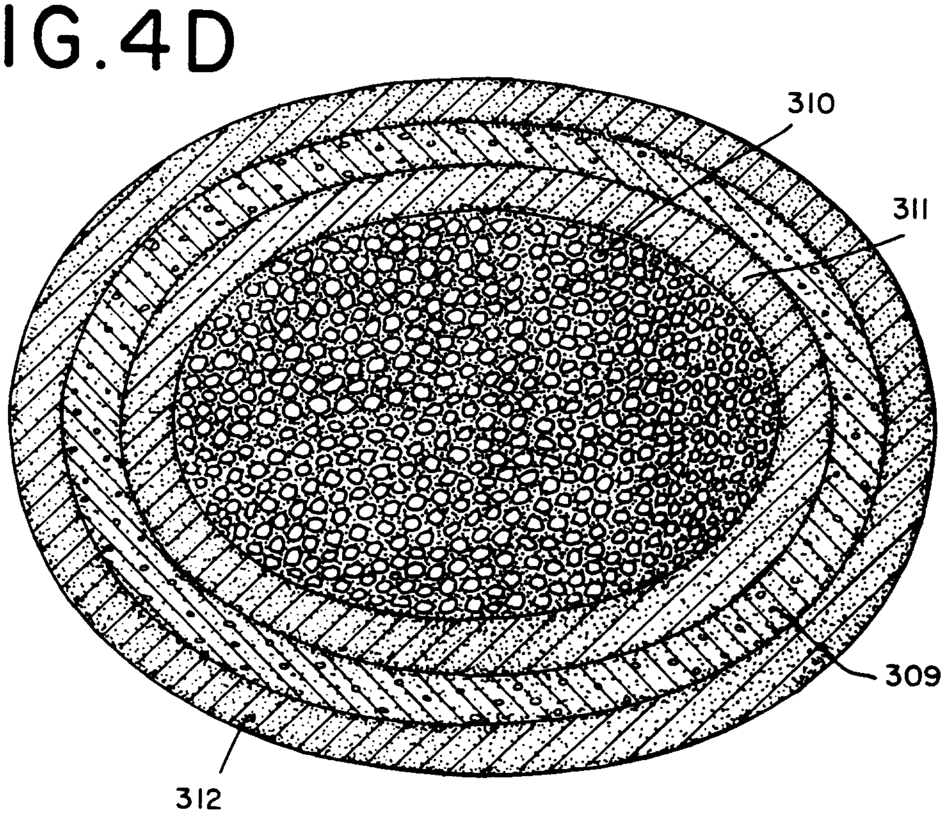


FIG.4E

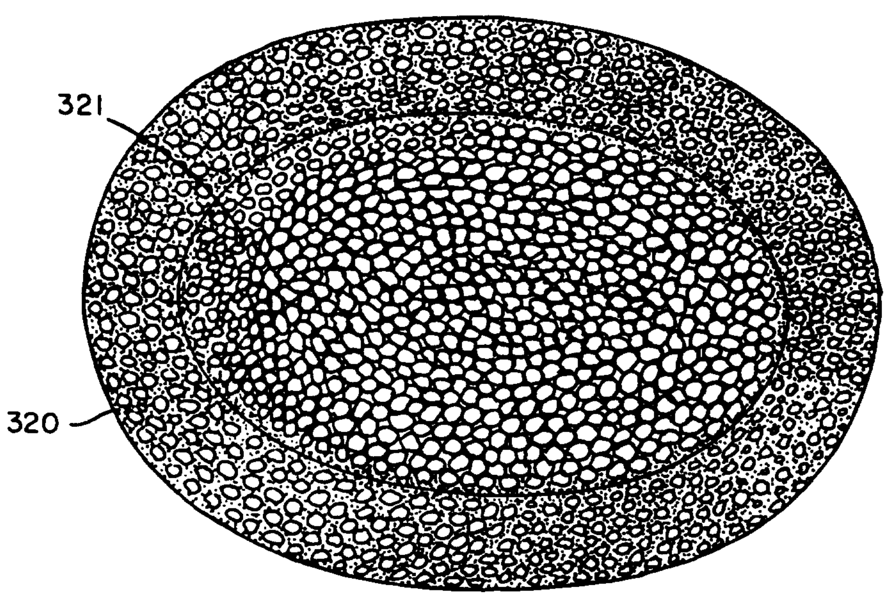

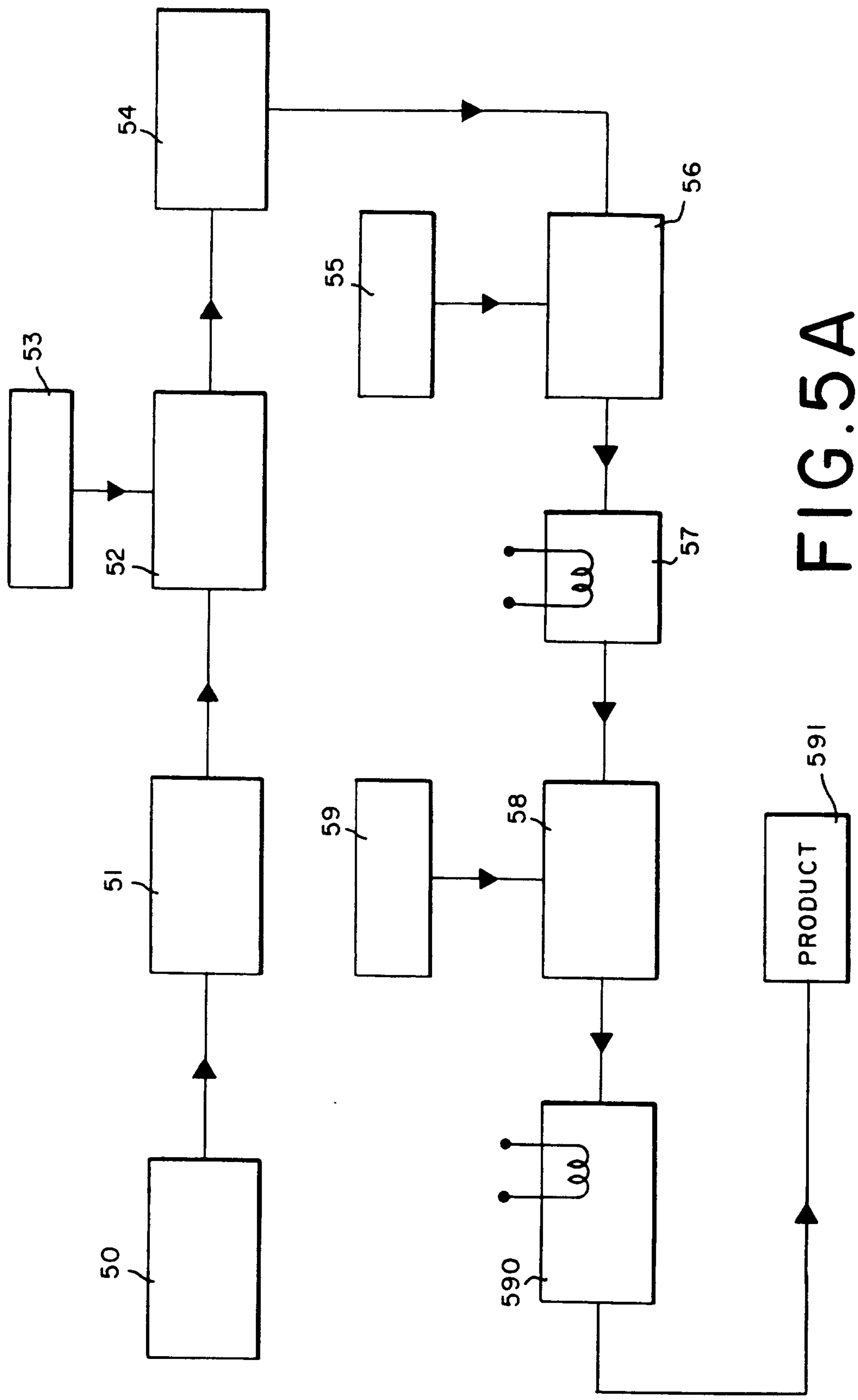


FIG.5A

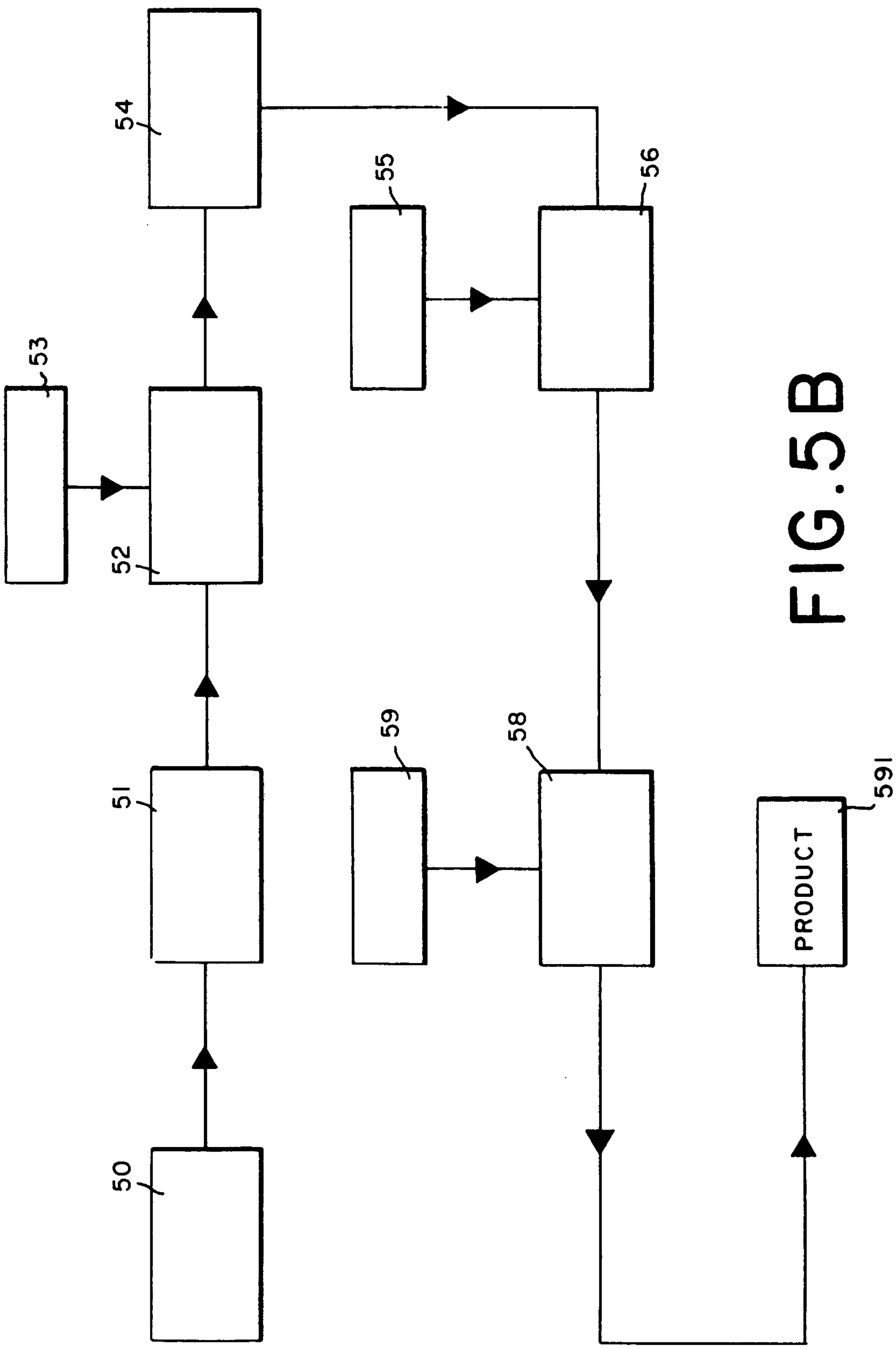


FIG.5B

FIG.6

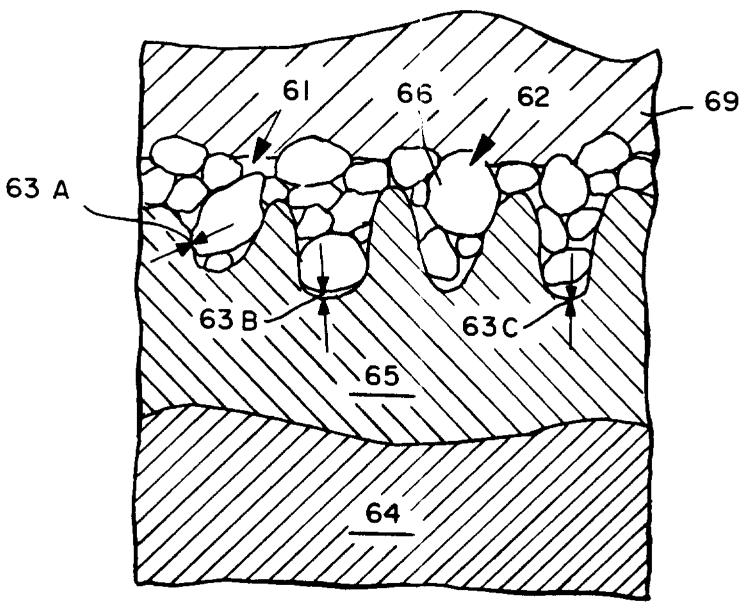
61
66
62
69
63 A
63 B
63C
65
64

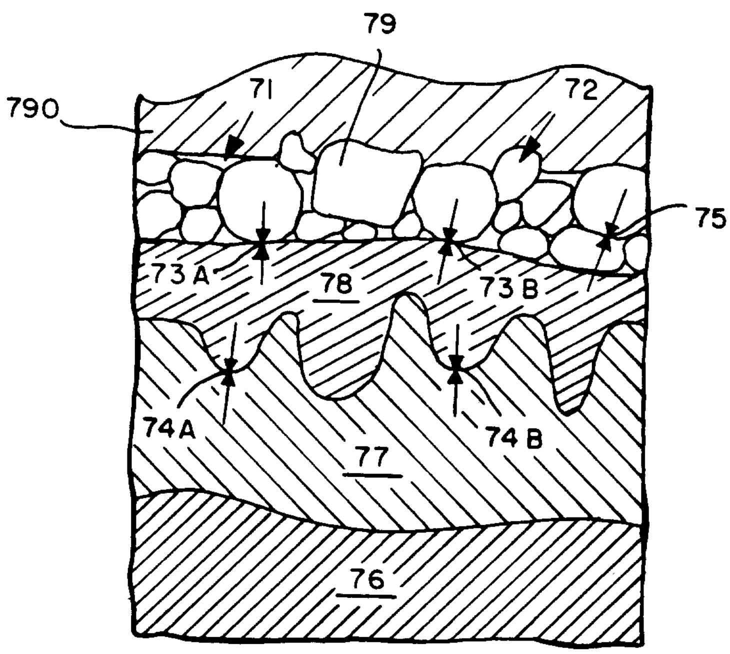
79
790
71
72
75
73 A
78
73 B
74A
74 B
77
76

FIG.7

FIG.8

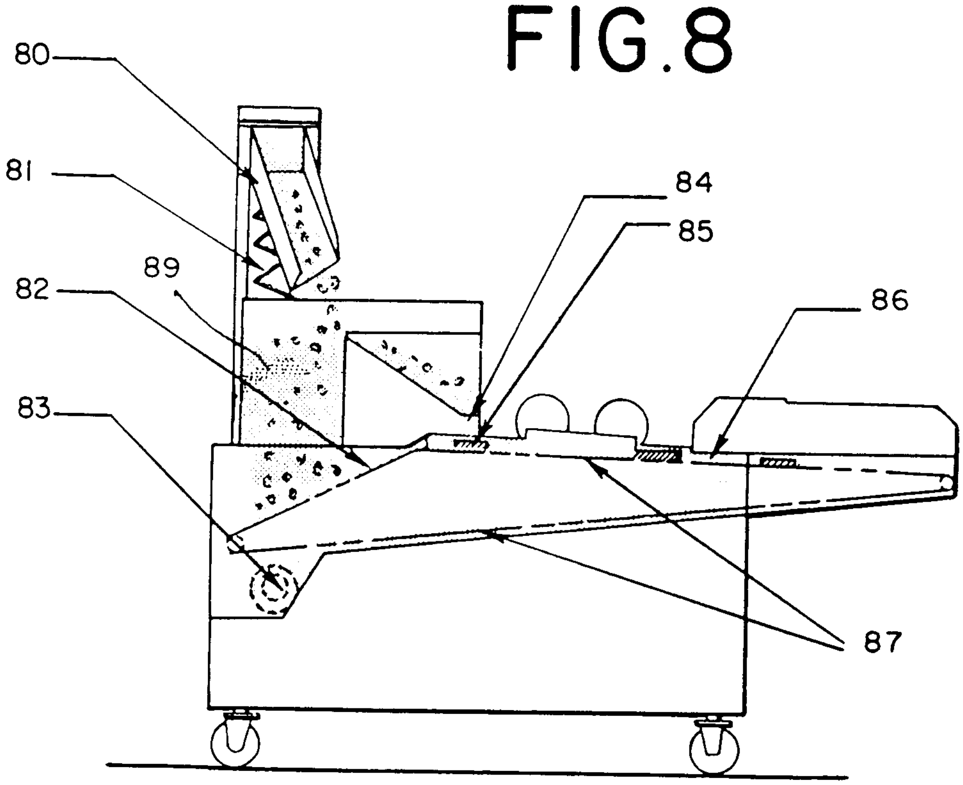


FIG.9

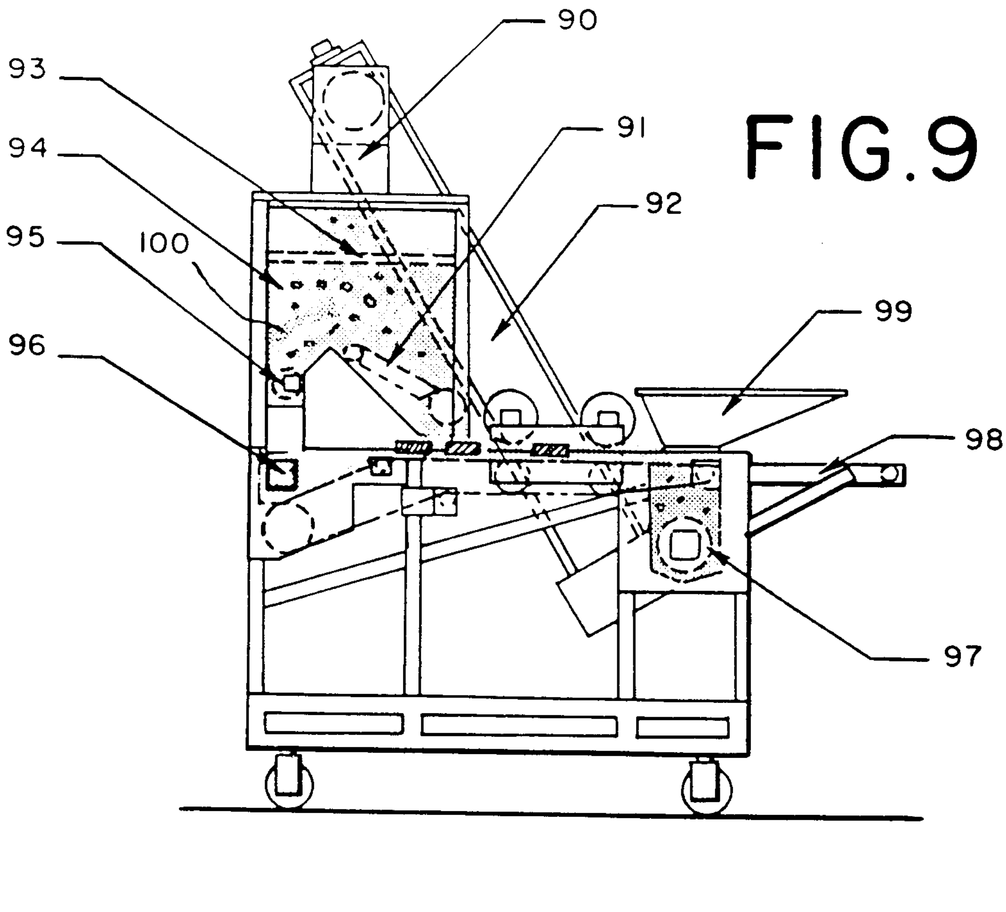

FIG.10

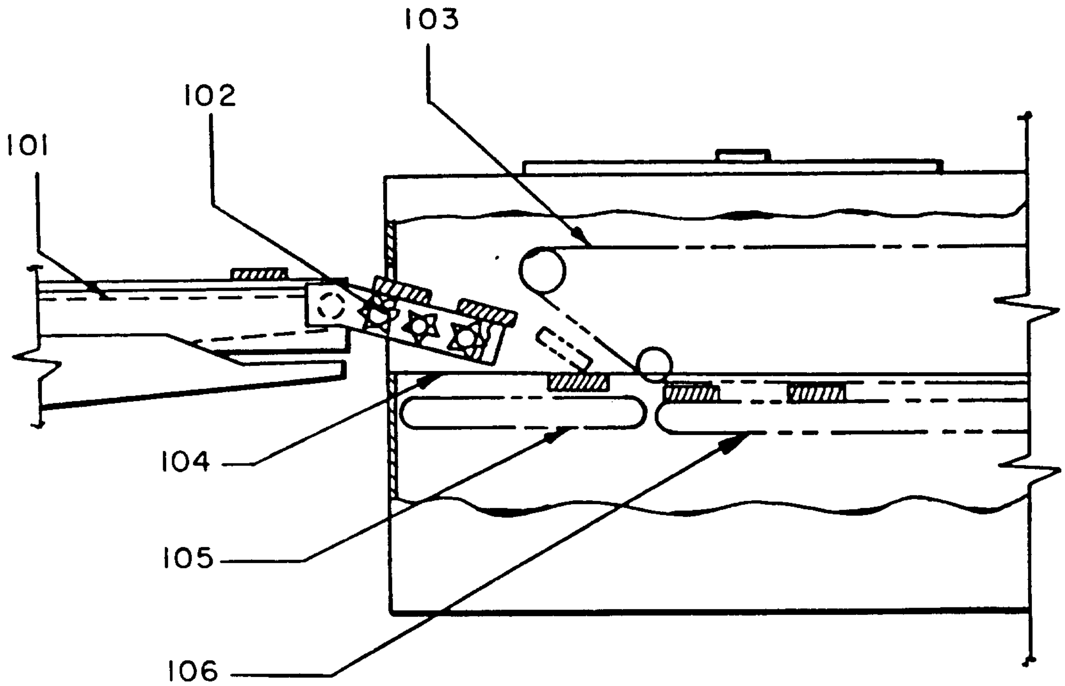

FIG.11

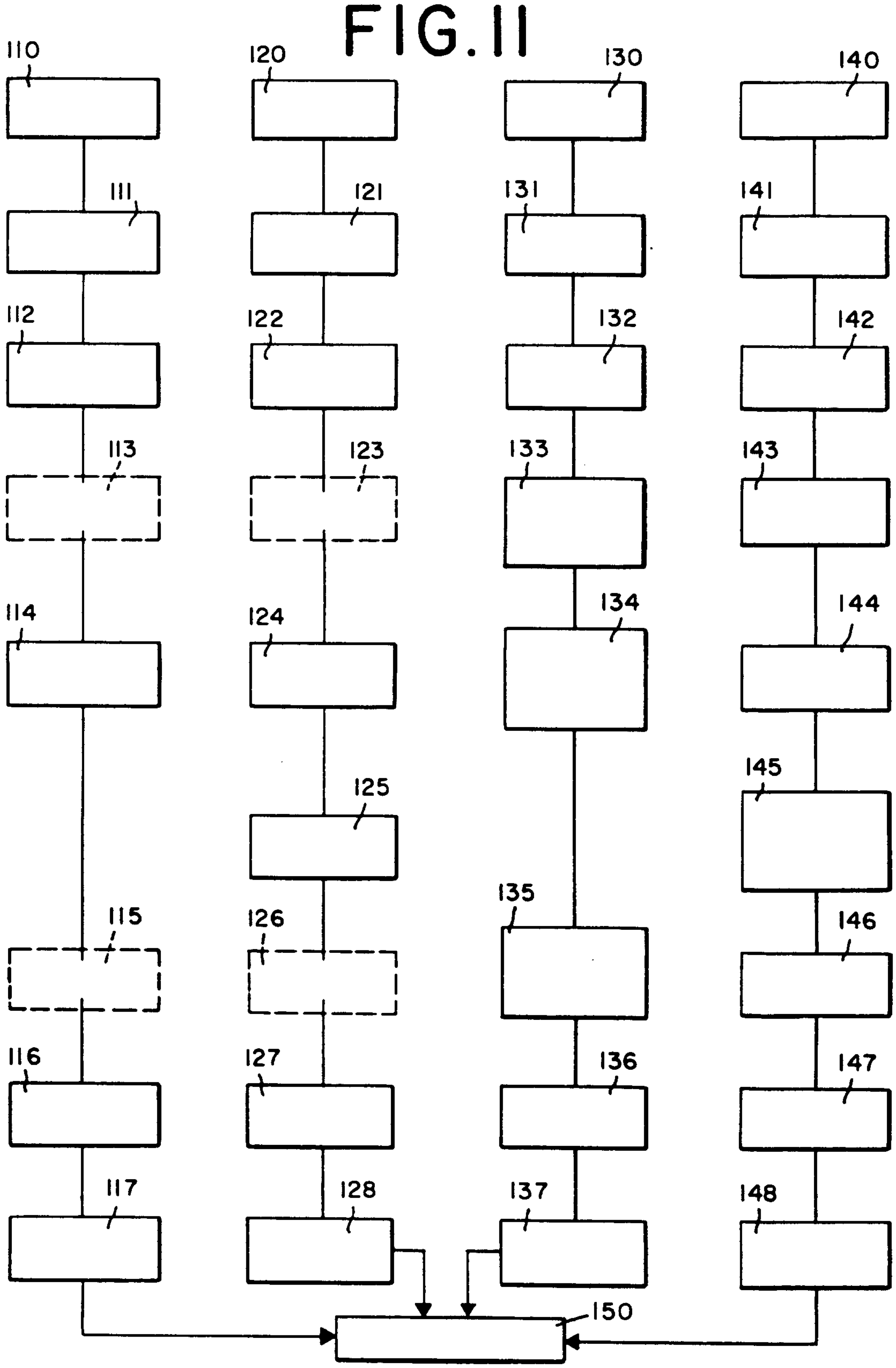
110
111
112
113
114
115
116
117
120
121
122
123
124
125
126
127
128
130
131
132
133
134
135
136
137
140
141
142
143
144
145
146
147
148
150

FIG.12

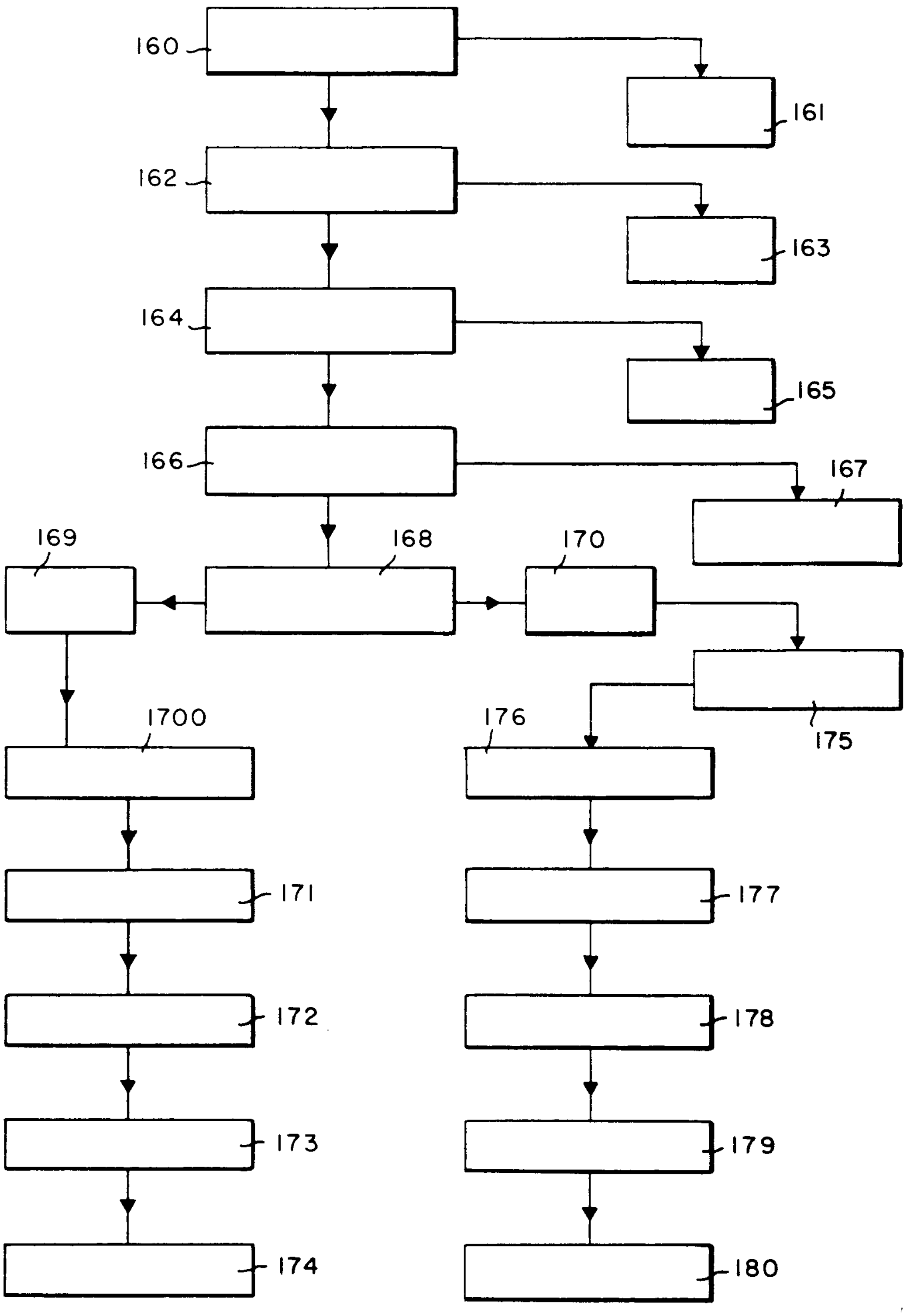
160
161
162
163
164
165
166
167
168
169
170
1700
175
176
171
177
172
178
173
179
174
180

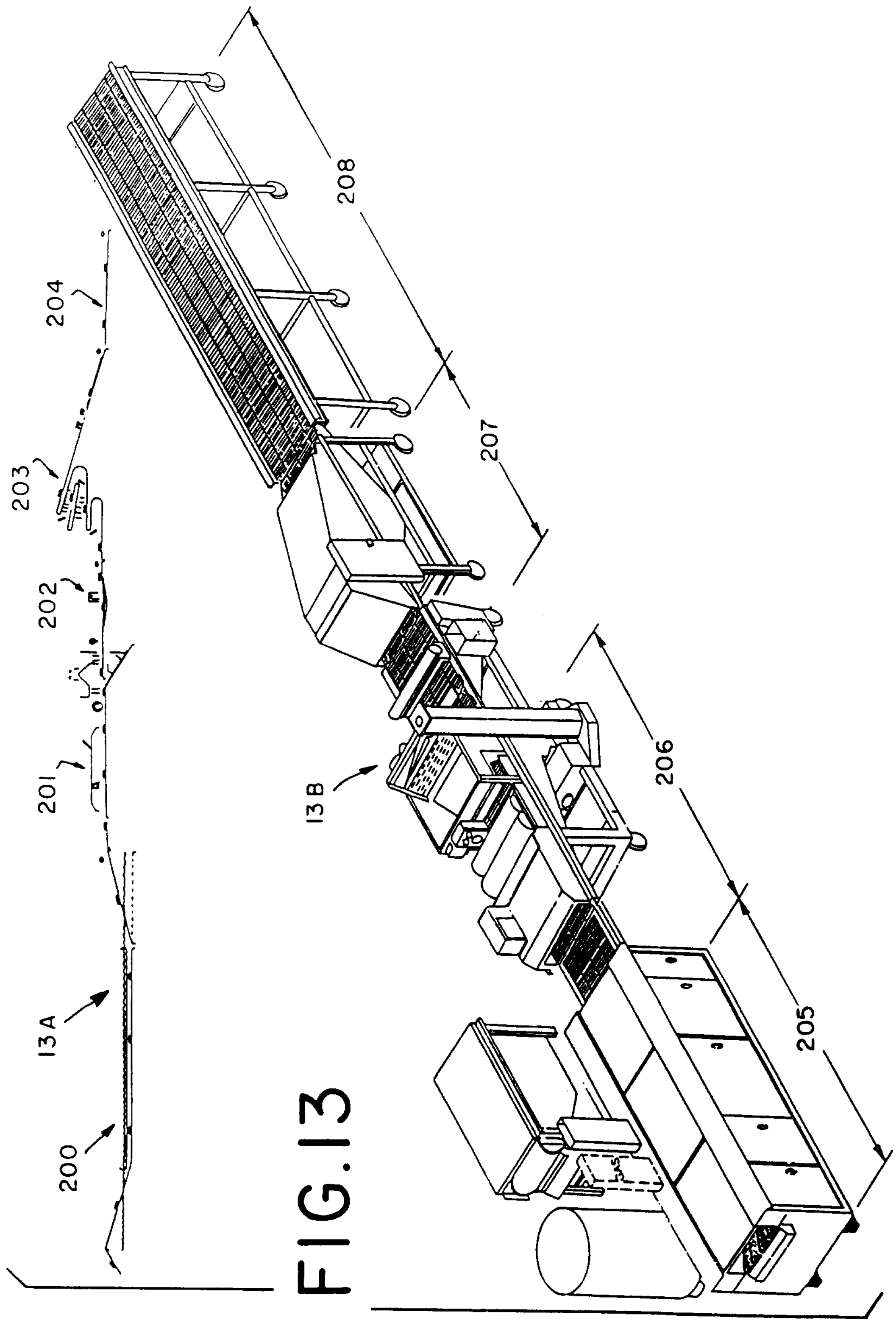


FIG.13

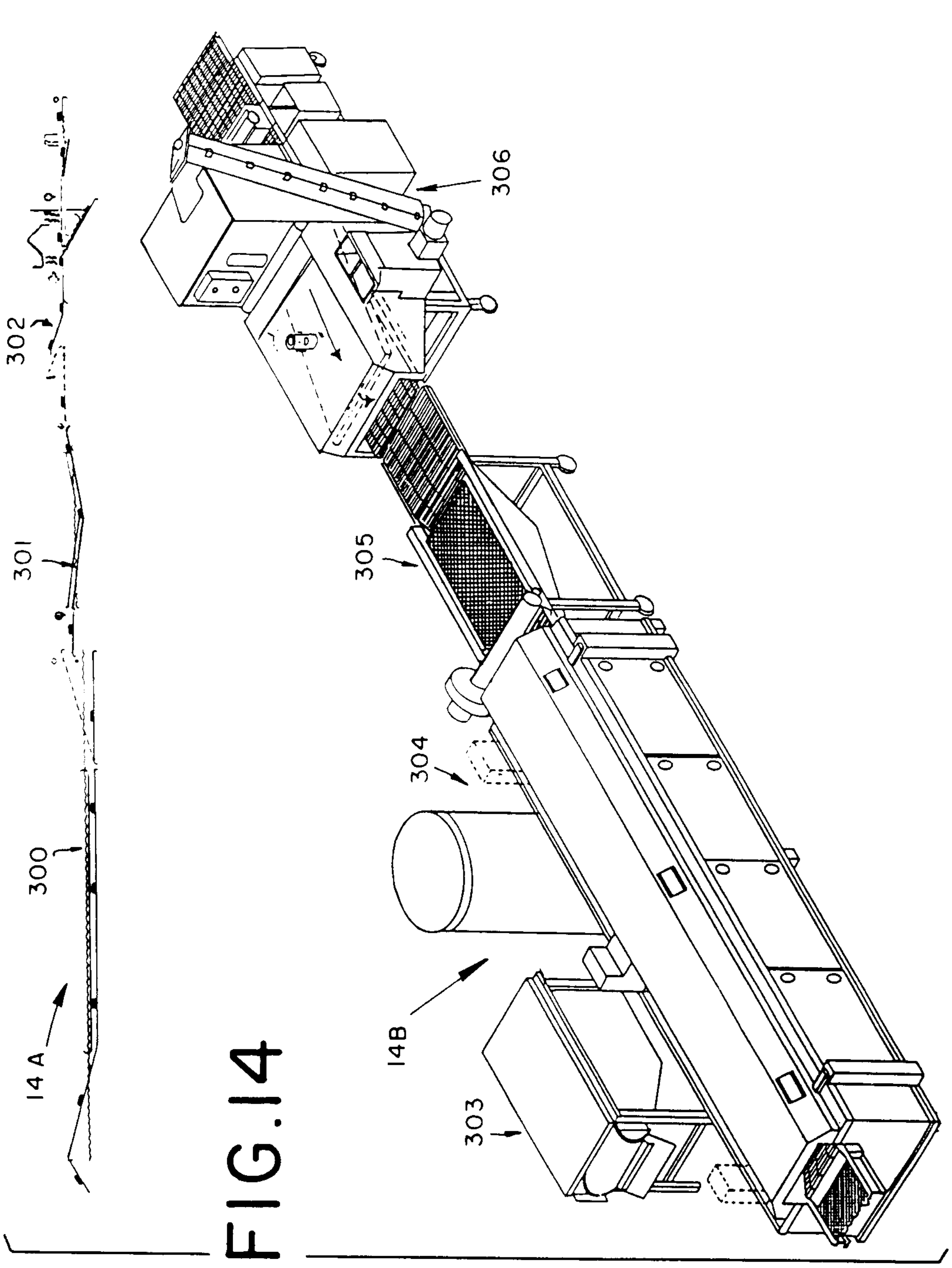


FIG.14

FIG.15

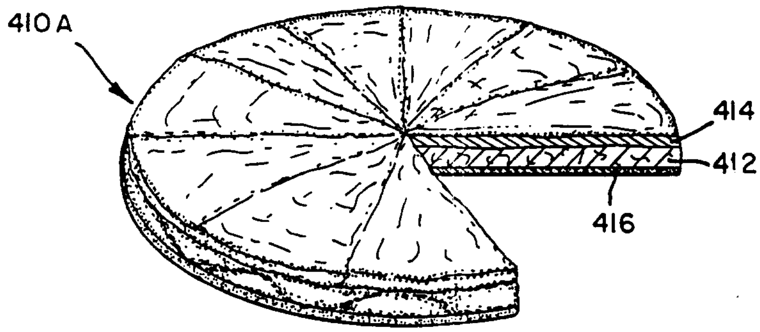


FIG.16

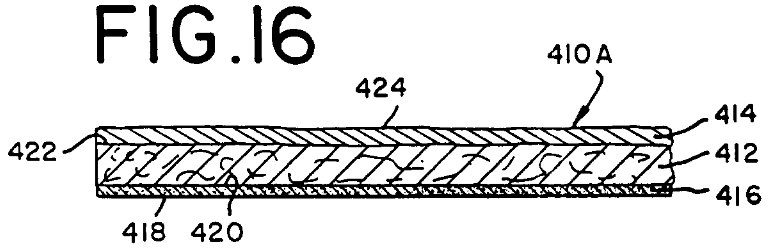


FIG.17

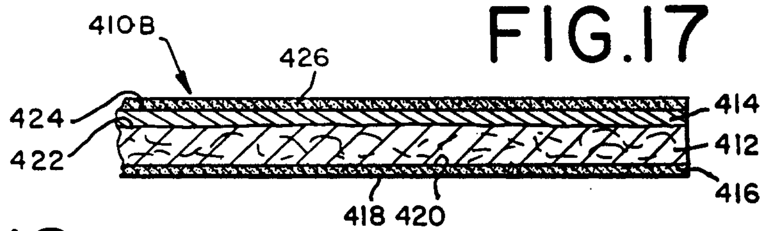


FIG.18

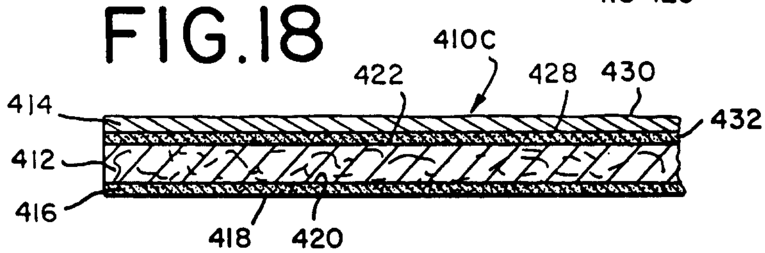


FIG.19

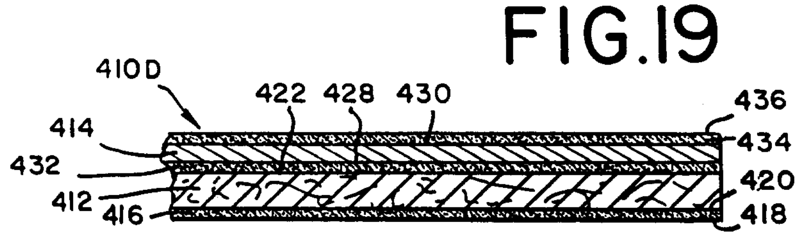

FIG.20

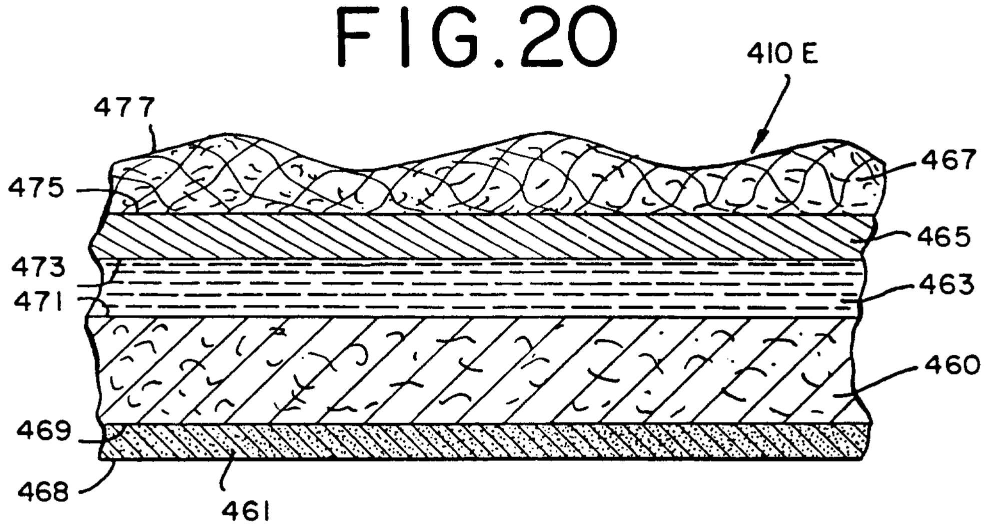
410 E
477
475
467
465
473
471
463
460
469
468
461

FIG.21

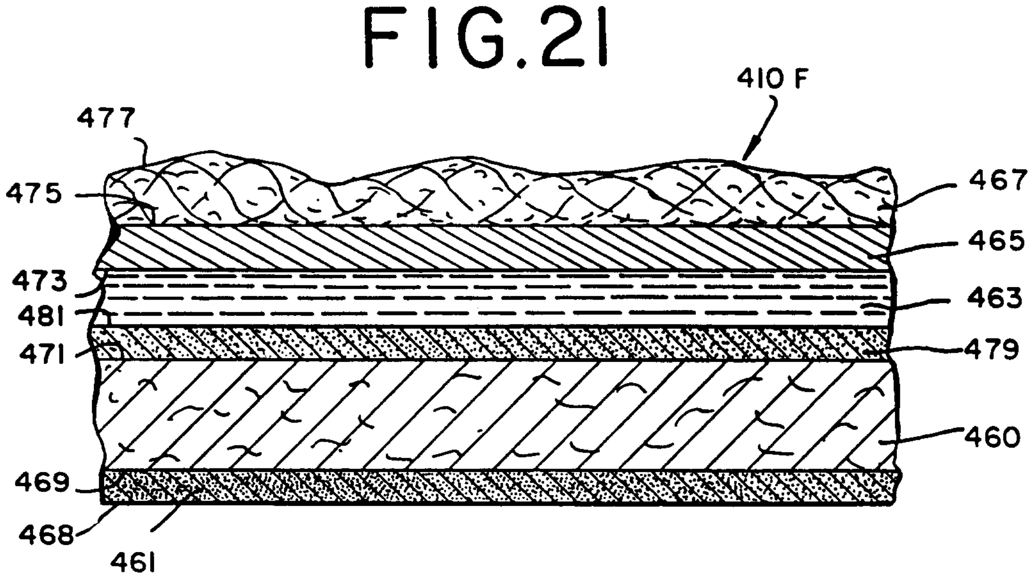
410 F
477
475
467
465
473
481
463
471
479
460
469
468
461

FIG.22

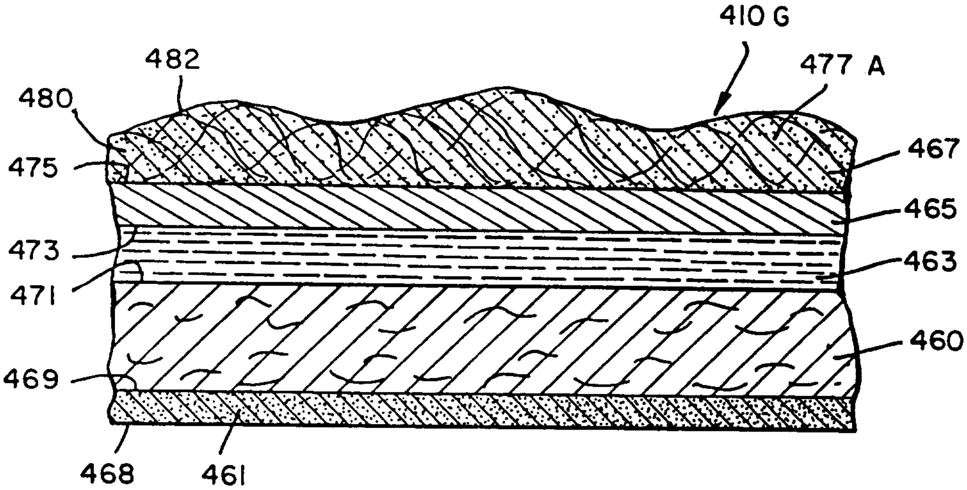
410 G
482
480
477 A
475
467
465
473
463
471
460
469
468
461

FIG.23

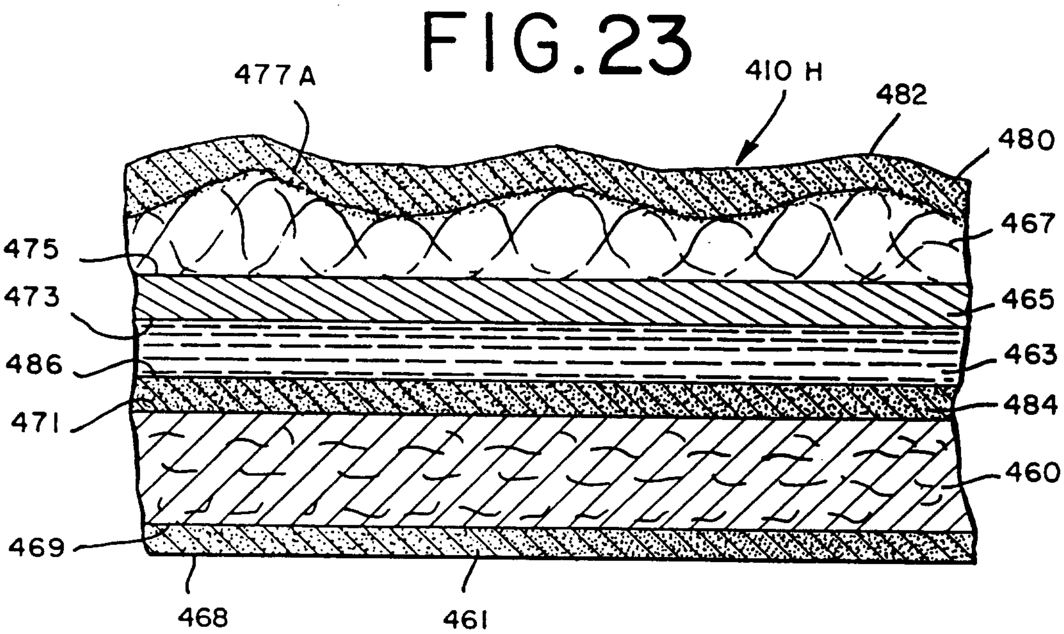
477 A
410 H
482
480
475
467
473
465
486
463
471
484
460
469
468
461

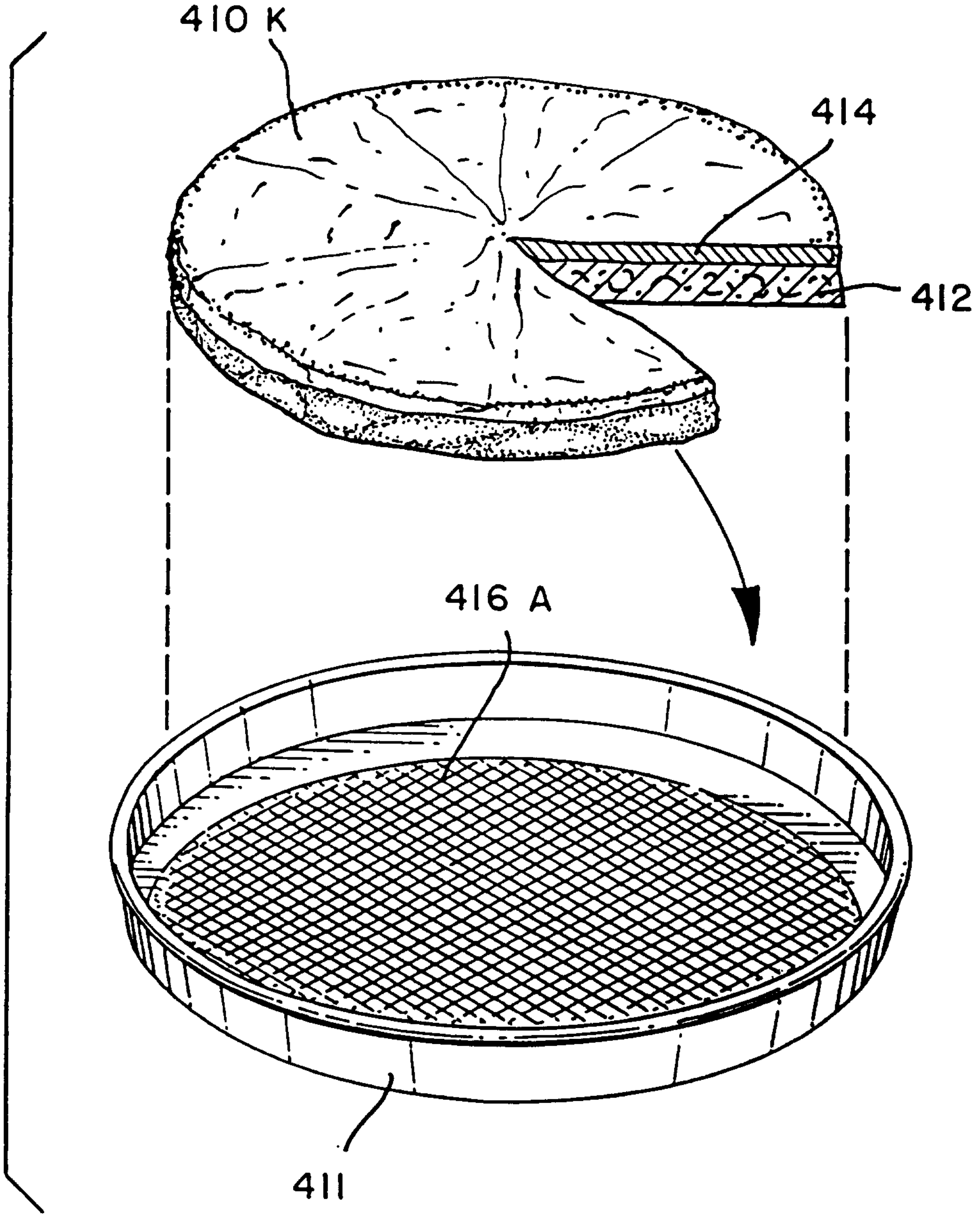


FIG.24

FIG.25

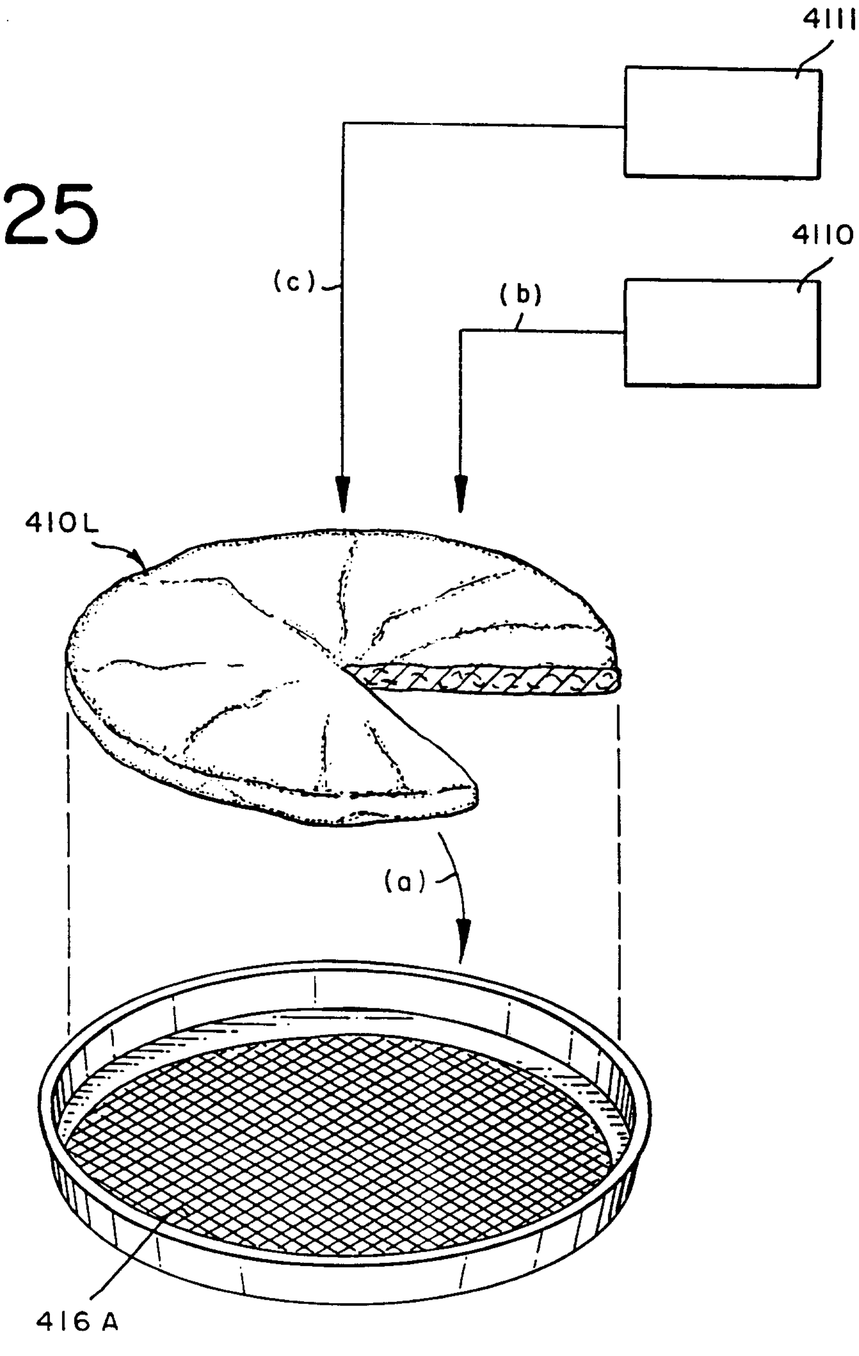

FIG.26

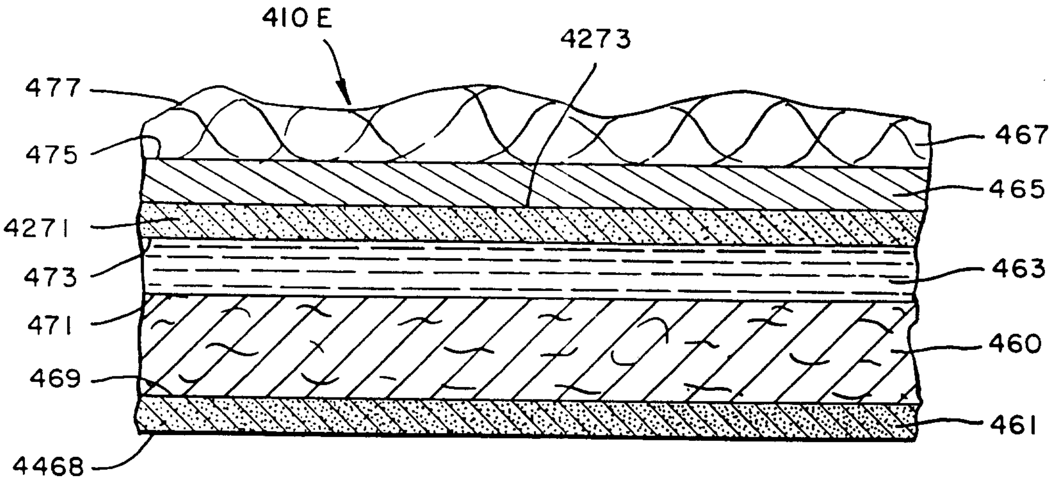
410E
4273
477
475
4271
473
471
469
4468
467
465
463
460
461

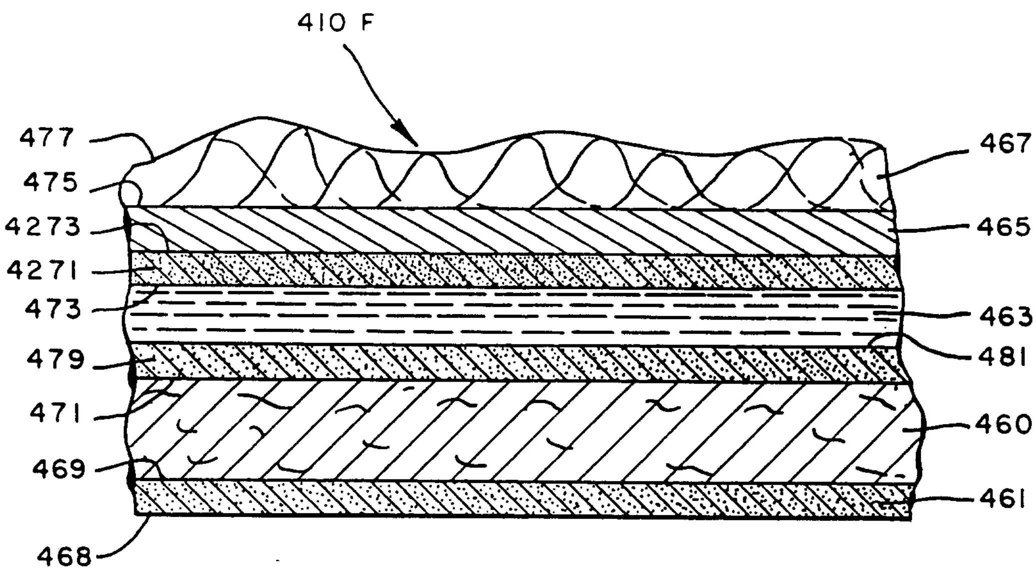
410 F
477
475
4273
4271
473
479
471
469
468
467
465
463
481
460
461

FIG.27

FIG.28

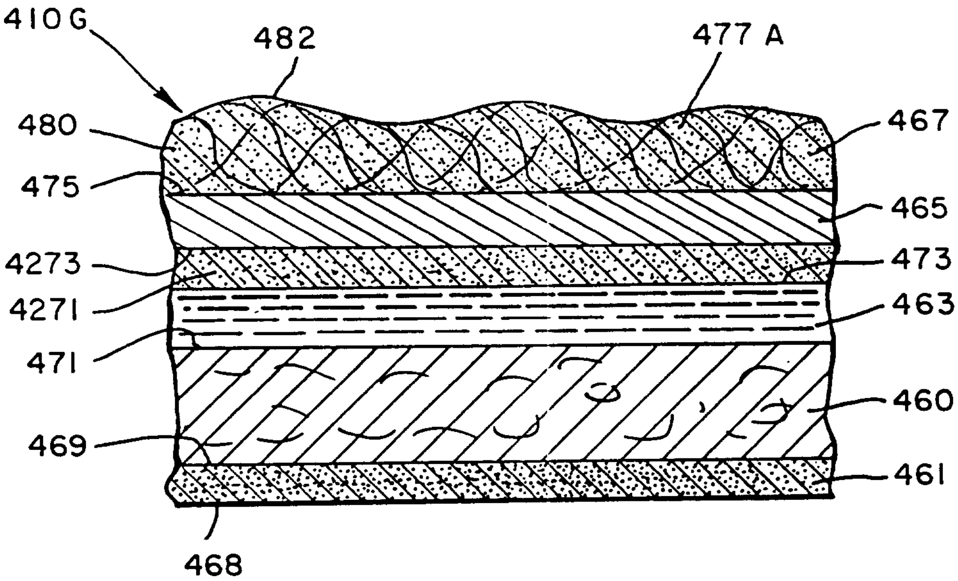

410G
482
477 A
480
467
475
465
4273
473
4271
463
471
460
469
461
468


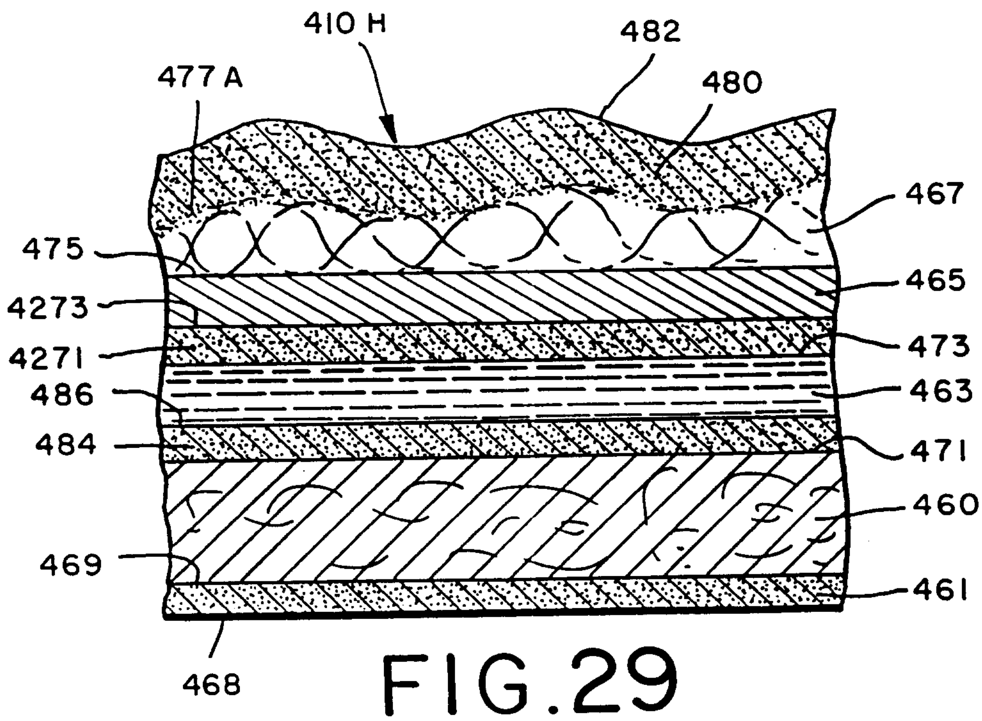

410 H
482
477 A
480
467
475
465
4273
473
4271
463
486
484
471
460
469
461
468


FIG.29

FIG.30

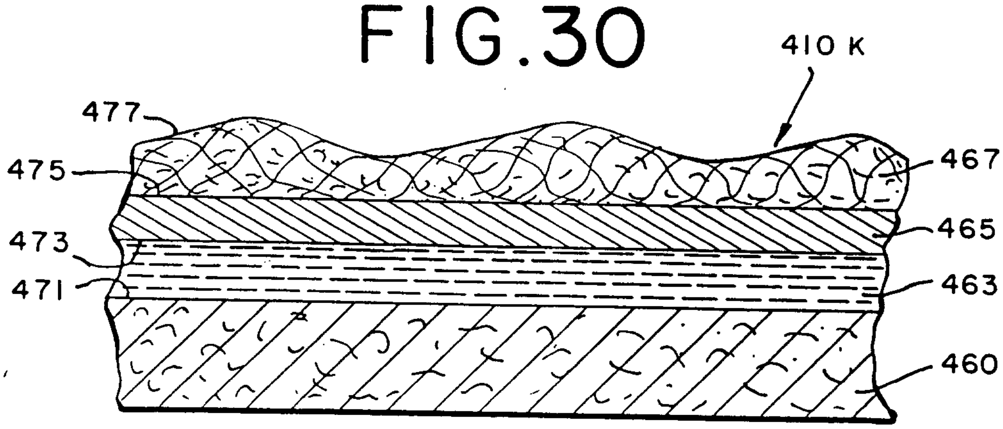
410 K
477
475
467
465
473
471
463
460

FIG.31

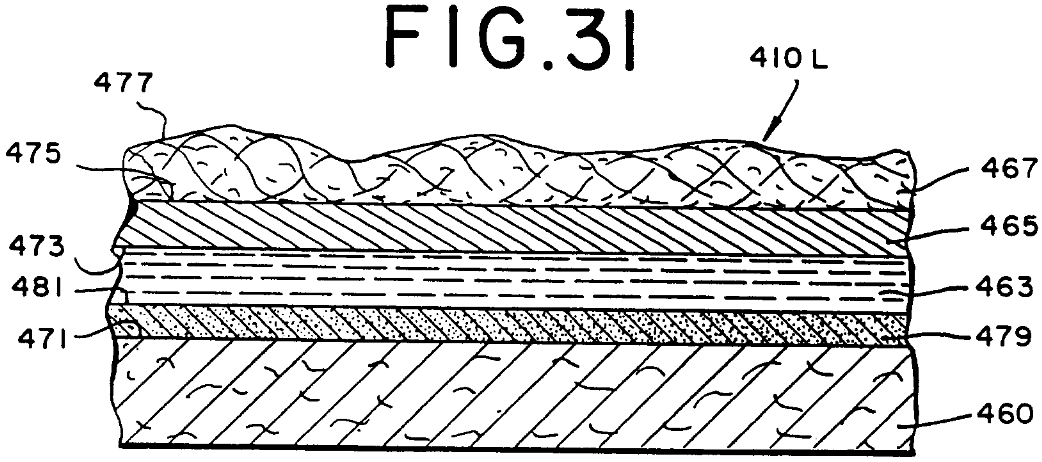
410 L
477
475
467
465
473
481
463
471
479
460

FIG.32

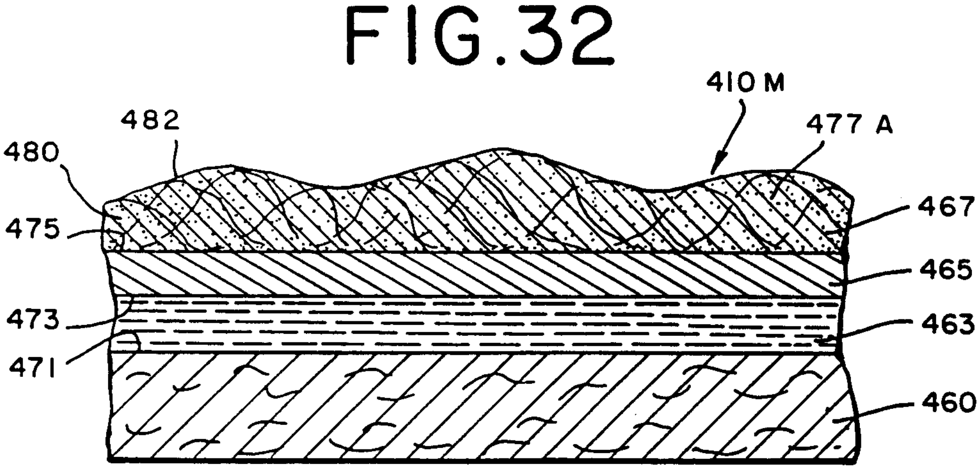
410 M
482
477 A
480
467
475
465
473
463
471
460

FIG.33

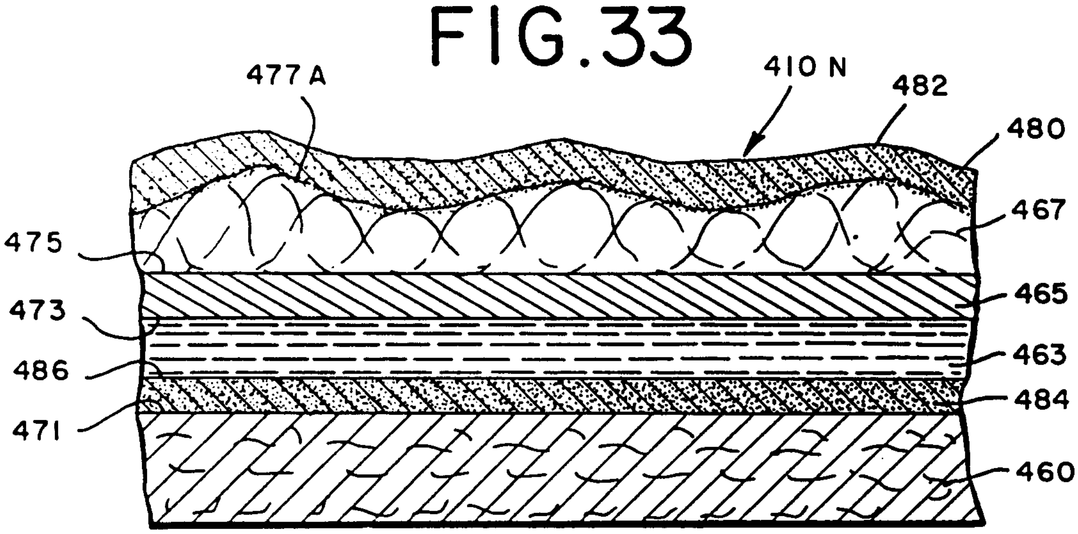
477 A
410 N
482
480
467
475
465
473
463
486
484
471
460

FIG.34

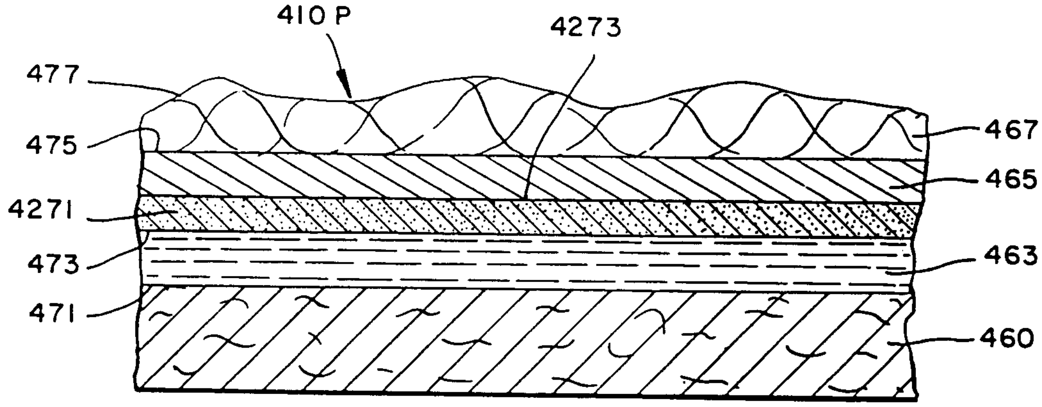
410 P
4273
477
475
4271
473
471
467
465
463
460

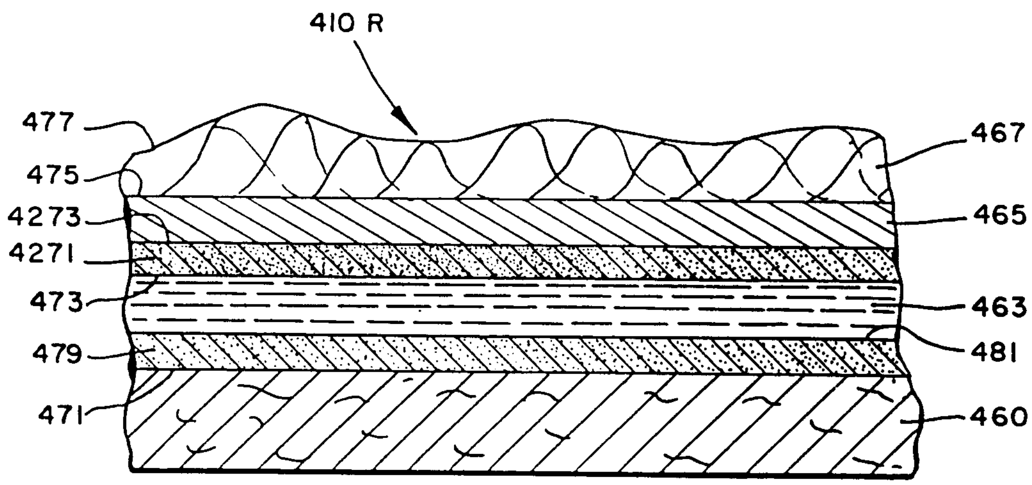
410 R
477
475
4273
4271
473
479
471
467
465
463
481
460

FIG.35

FIG.36

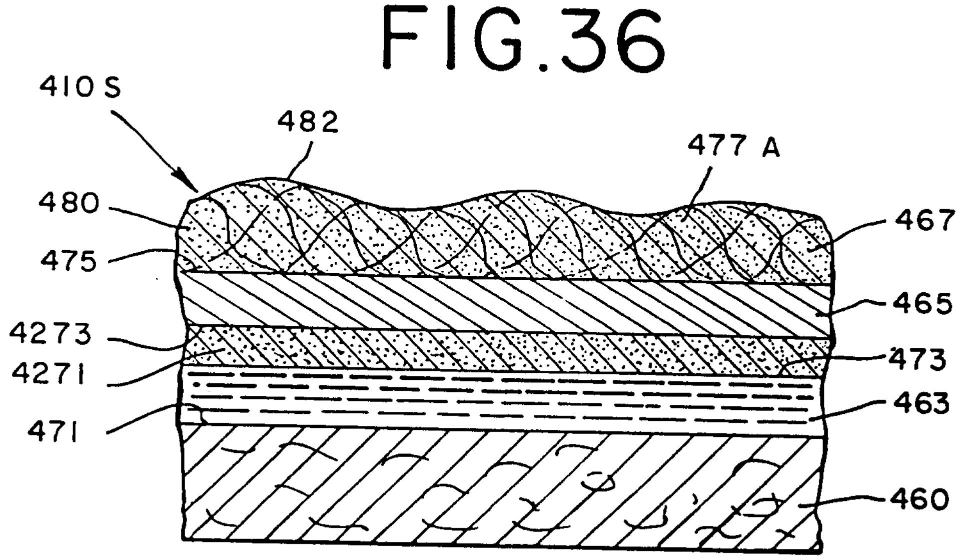
410 S
482
477 A
480
467
475
465
4273
473
4271
463
471
460

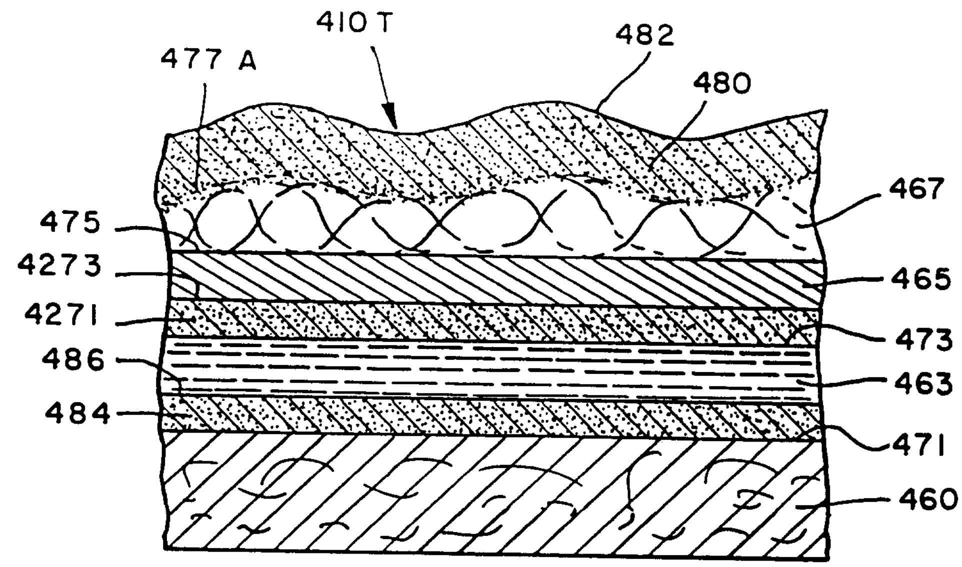
410 T
477 A
482
480
467
475
4273
465
4271
473
486
463
484
471
460

FIG.37